Europäisches Patentamt

European Patent Office

Office européen des brevets

(19)

(11) **EP 0 831 252 A2**

(12) **EUROPÄISCHE PATENTANMELDUNG**

(43) Veröffentlichungstag:
25.03.1998 Patentblatt 1998/13

(51) Int. Cl.6: **F16H 47/04**

(21) Anmeldenummer: 97116412.4

(22) Anmeldetag: 20.09.1997

(84) Benannte Vertragsstaaten:
AT BE CH DE DK ES FI FR GB GR IE IT LI LU MC NL PT SE
Benannte Erstreckungsstaaten:
AL LT LV RO SI

(30) Priorität: 20.09.1996 DE 19638524
10.10.1996 DE 19641724
20.12.1996 DE 19653400
08.03.1997 DE 19709626
28.05.1997 DE 19722252

05.06.1997 DE 19723549
12.06.1997 DE 19724740
27.06.1997 DE 19727335
13.08.1997 DE 19735065
26.08.1997 DE 19737095

(71) Anmelder: **Meyerle, Michael**
D-88074 Meckenbeuren (DE)

(72) Erfinder: **Meyerle, Michael**
D-88074 Meckenbeuren (DE)

(54) **Stufenloses Getriebe, insbesondere mit hydrostatischer Leistungsverzweigung**

(57) Die Erfindung betrifft ein stufenloses Leistungsverzweigungsgetriebe, insbesondere für Kraftfahrzeuge, die sich besonders dadurch auszeichnet, daß das stufenlose Getriebe (HVG) eine komplette Baueinheit bildet, die nach Art der Modulbauweise in beliebige Gehäuseformen eines Gesamtgetriebes bzw. Triebwerkes einsetzbar ist. Das Getriebe (HVG) ist je nach Fahrzeugforderungen als hydrostatisch-mechanisches Leistungsverzweigungsgetriebe oder mechanisches Leistungsverzweigungsgetriebe mit unterschiedlicher Anzahl an Fahrbereichen für Vorwärts- und Rückwärtsfahrt ausführbar. Es kann als Standard-Getriebe für verschiedene Fahrzeugarten, wie z.B. Traktoren, Arbeitsmaschinen, Nutzkraftfahrzeuge oder Omnibusse u.a. eingesetzt werden. Eine weitere Einrichtung der Erfindung betrifft eine Retarder-Bremsanlage in verschiedenen Ausführungsformen, insbesondere für den Einsatz in Nutzkraftfahrzeugen und Omnibussen. Desweiteren sind Einrichtungen zur Verbesserung hinsichtlich Wirkungsgrad, Geräuschverhalten, Bauraum, Gewicht und Kosten sowie zur Verbesserung des Fahrkomforts u.a. enthalten.

**FIG. 3hi**

EP 0 831 252 A2

## Beschreibung

Die Erfindung bezieht sich auf ein stufenloses Getriebe, bevorzugt ein Leistungsverzweigungsgetriebe mit hydrostatischem oder mechanischem stufenlosem Wandler und dessen Steuer- und Regeleinrichtung nach dem Oberbegriff des Anspruches 1 und weiterer unabhängiger Ansprüche. Das Getriebe ist verschiedenartig ausführbar und erlaubt unterschiedliche Fahrstrategien bzw. Fahrprogramme, die bedienungsfreundlich einstellbar bzw. abrufbar sind. Desweiteren ist eine Wandlerüberbrückung an mehreren Übersetzungspunkten schaltbar und höchstmögliche Bremswirkung über den stufenlosen hydrostatischen Wandler ausnutzbar und komfortabel steuerbar Zur Schaltoptimierung von Bereichsschaltungen, Festpunktschaltungen zur Wandler-Überbrückung u.a. ist eine gezielte Verstellkorrektur des stufenlosen Wandlers vorgesehen.

Ähnliche Teil-Einrichtungen sind bereits bekannt. Sie erfordern jedoch größeren Aufwand an Kosten, Gewicht und Bauraum.

Aufgabe der Erfindung ist es, diese Nachteile, insbesondere bei stufenlosen Getrieben, vorallem hydrostatitsch-mechanischen leistungsverzweigten Getrieben, zu beseitigen. Darüber hinaus sollen die Vorteile des stufenlosen Getriebes auch durch Verbesserung der aus der EP-A-0280 757 bekannten Einrichtungen besser ausnutzbar sein.

Diese Aufgabe wird erfindungsgemäß durch die in den Hauptansprüchen aufgeführten Merkmale gelöst. Weitere vorteilhafte Ausgestaltungen der Erfindung gehen aus den Unteransprüchen und der Beschreibung hervor.

Die Erfindung wird an Ausführungsbeispielen anhand von Zeichnungen erläutert. Es zeigen:

| Figur 1 | Schaltplan der Steuer- und Regelungseinrichtung für ein stufenloses Getriebe mit mehreren Schaltbereichen. |
| Figur 2 | Getriebeaufbau mit Einrichtung zur Hydrostat-Überbrückung eines stufenlosen, insbesondere hydrostatischen Getriebes mit Leistungsverzweigung, mit hydrostatischem oder hydrodynamischem Retarder. |
| Fig. 3 bis 3h u. 3hr | Getriebeschematas verschiedener Ausführungen stufenloser hydrostatischer Leistungsverzweigungsgetriebe. |
| Fig. 4 bis 4g | Getriebeaufbau mit hydrostatischer Bremseinrichtung (Hydrostat-Retarder) |
| Fig. 5 u. 6 | Getriebe mit Einrichtung zur Bremsenergie-Rückgewinnung. |
| Fig.6a b. 6e | Schalt-Wähleinrichtung |
| Fig. 6i, 6k, 6m | Diagramm Fahrregelung |
| Fig. 7 u. 7a | Verstell-, Drehzahl-, Drehmoment-, Druckverlauf während eines Schaltablaufes. |
| Figur 7b | Funktionsdarstellung für Festpunktschaltung KB |
| Figur 8 | Schaltplan |
| Figur 8a | Funktionsdarstellung für Anfahr-Automatik |
| Figur 8ab | Diagramm für Wendebetrieb |

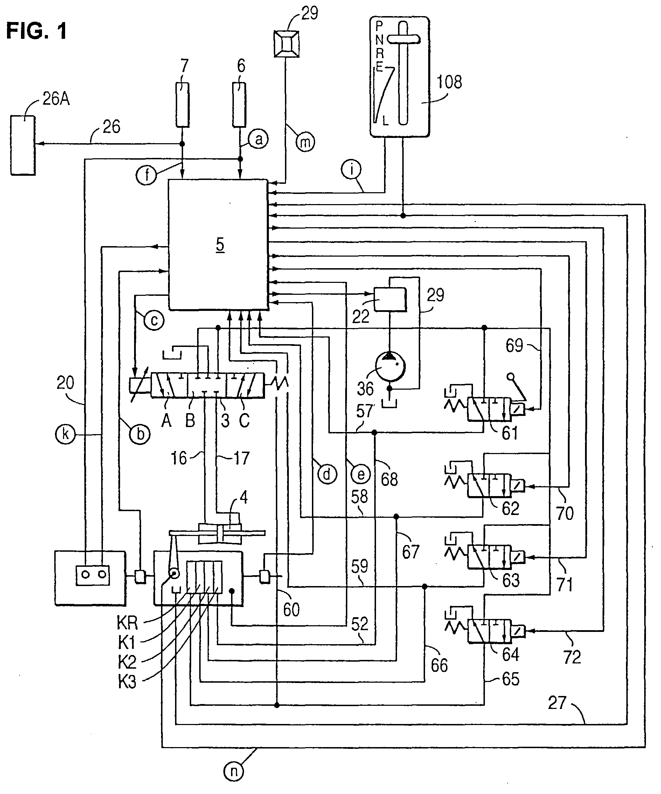

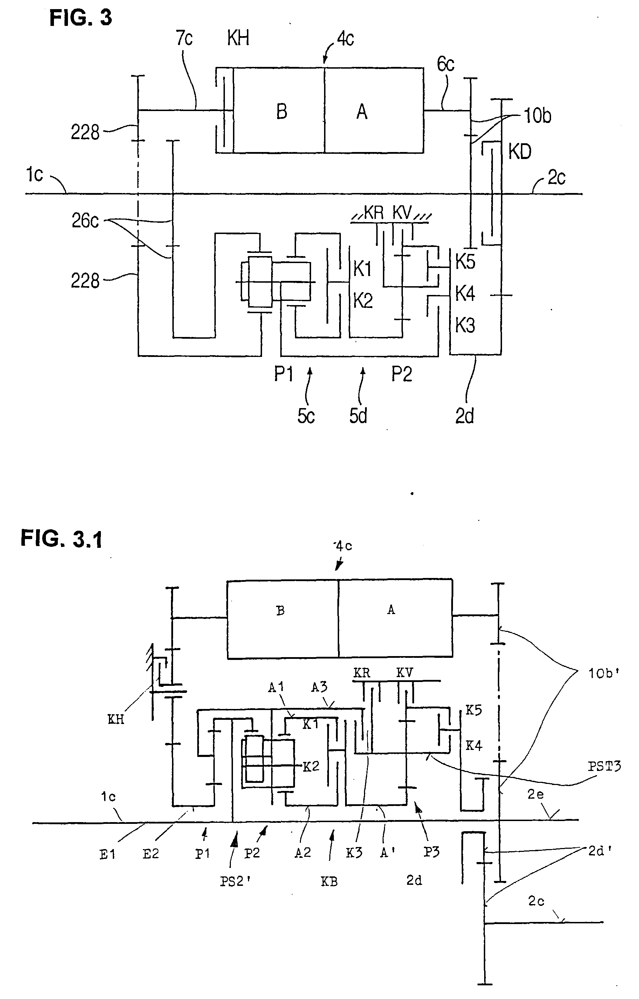

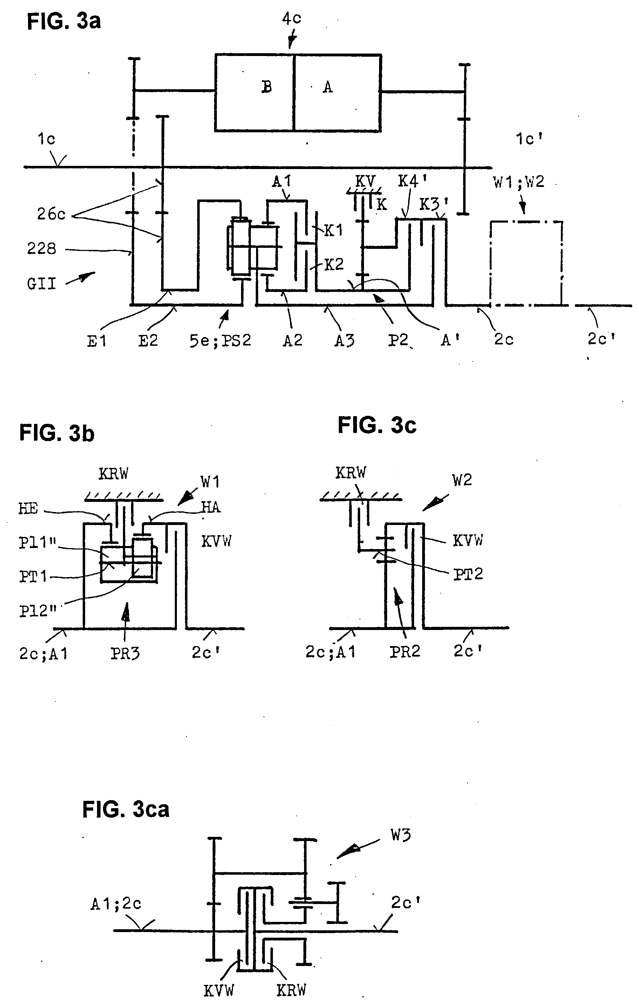

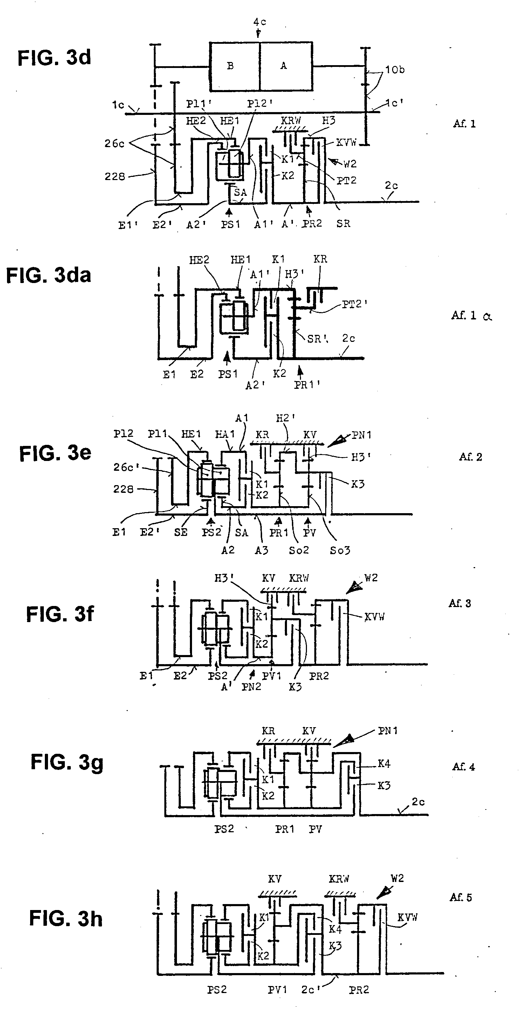

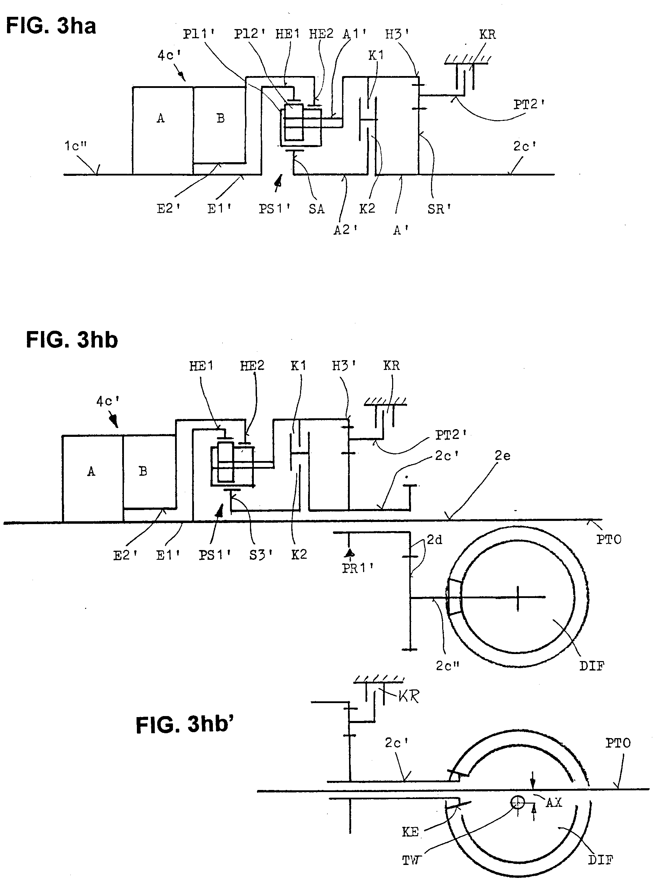

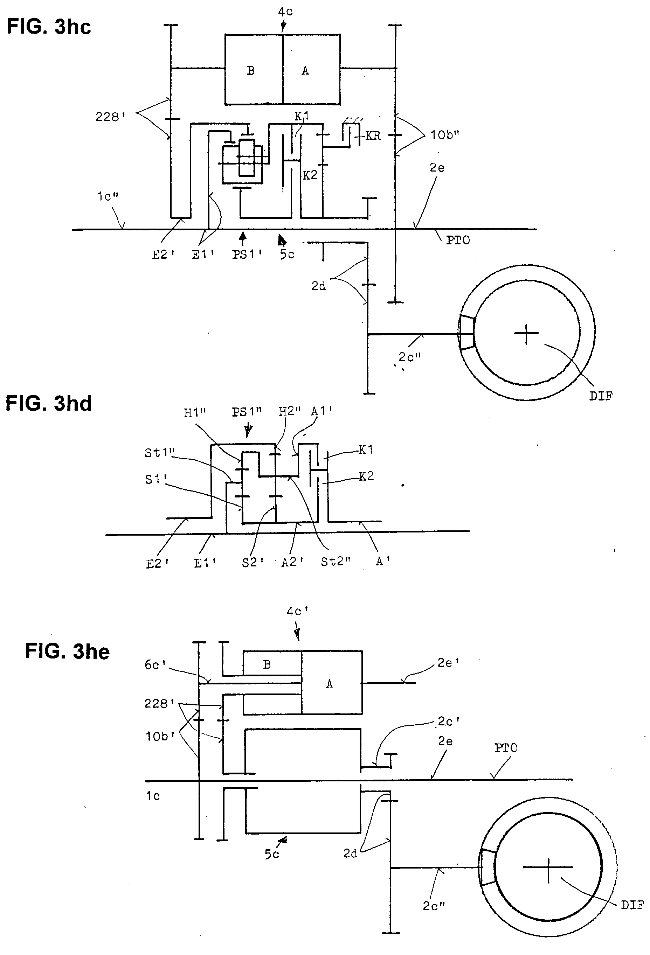

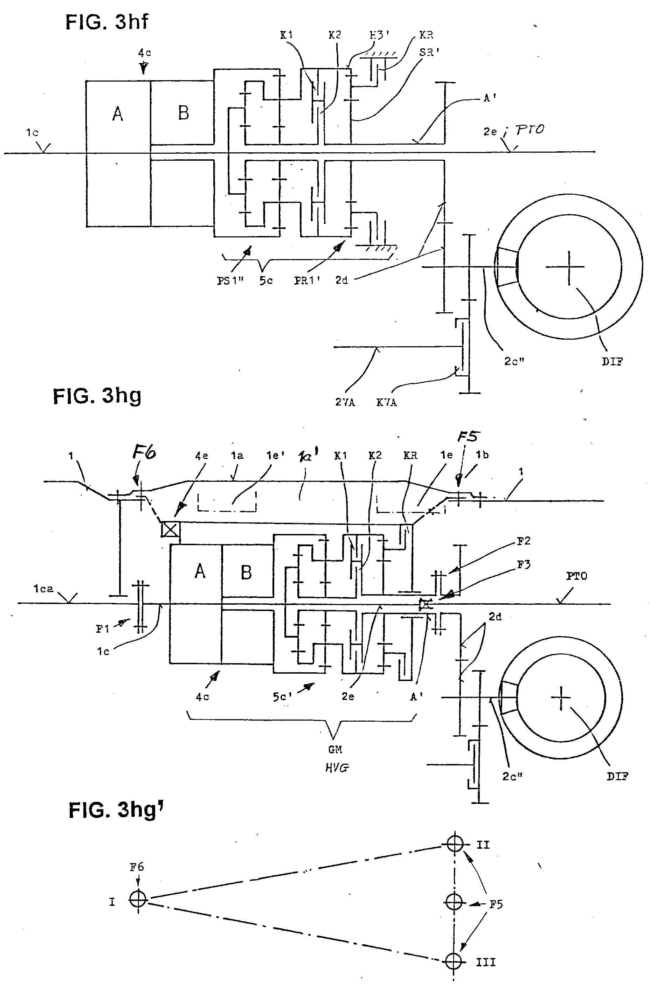

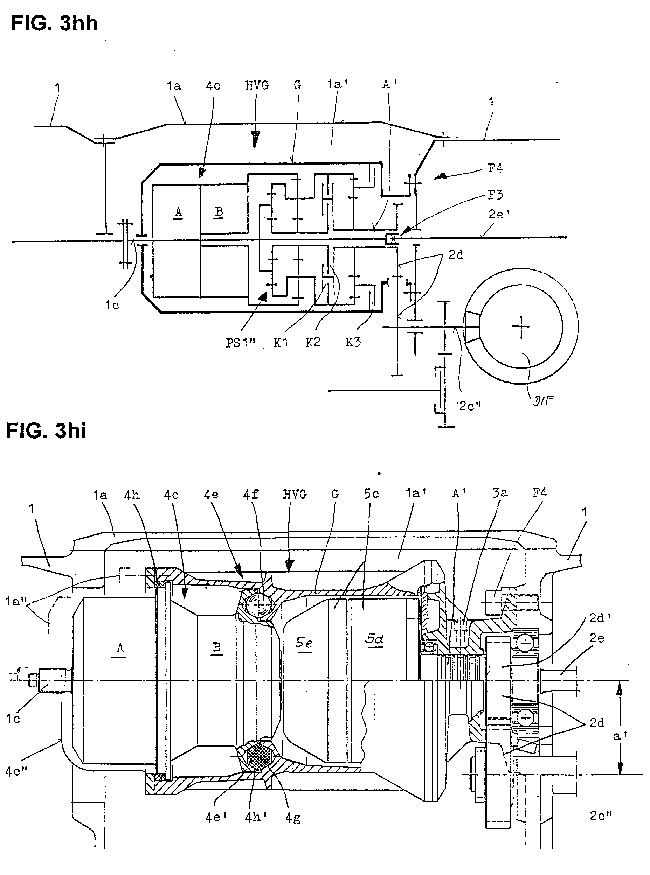

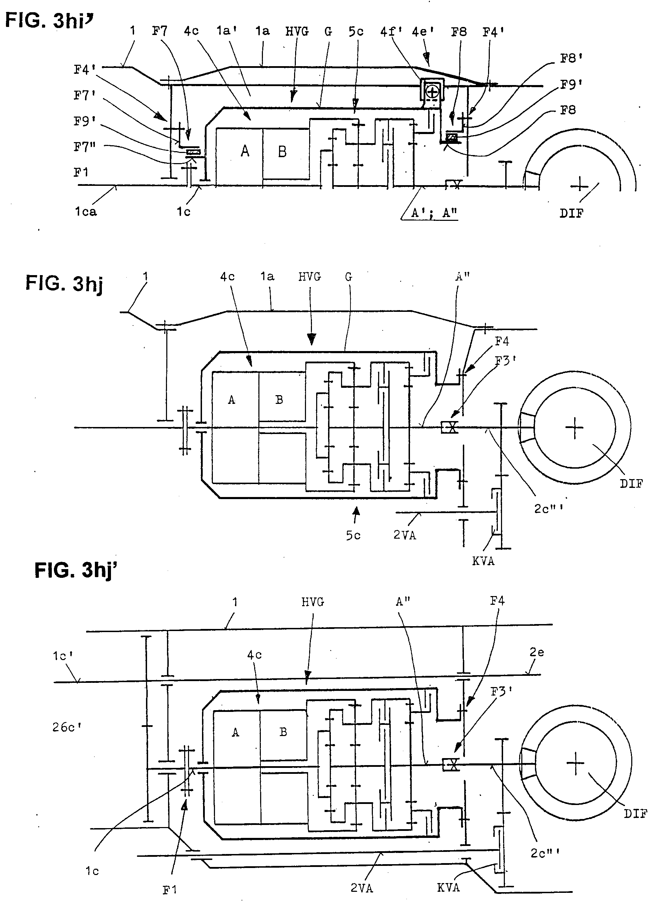

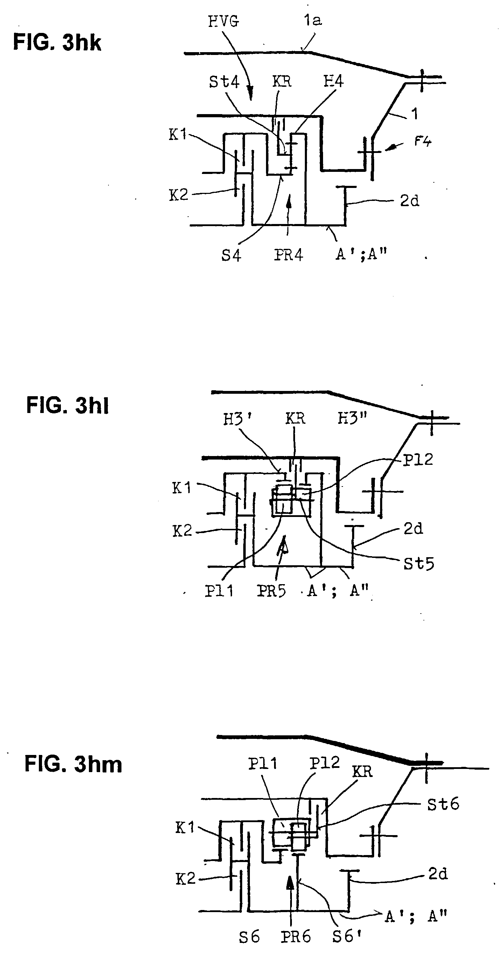

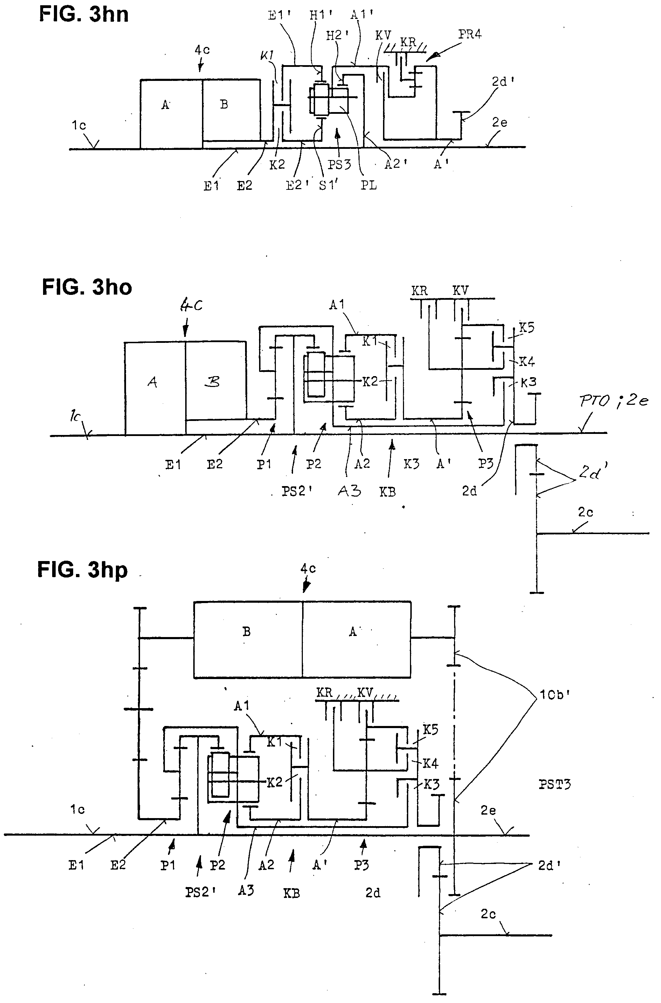

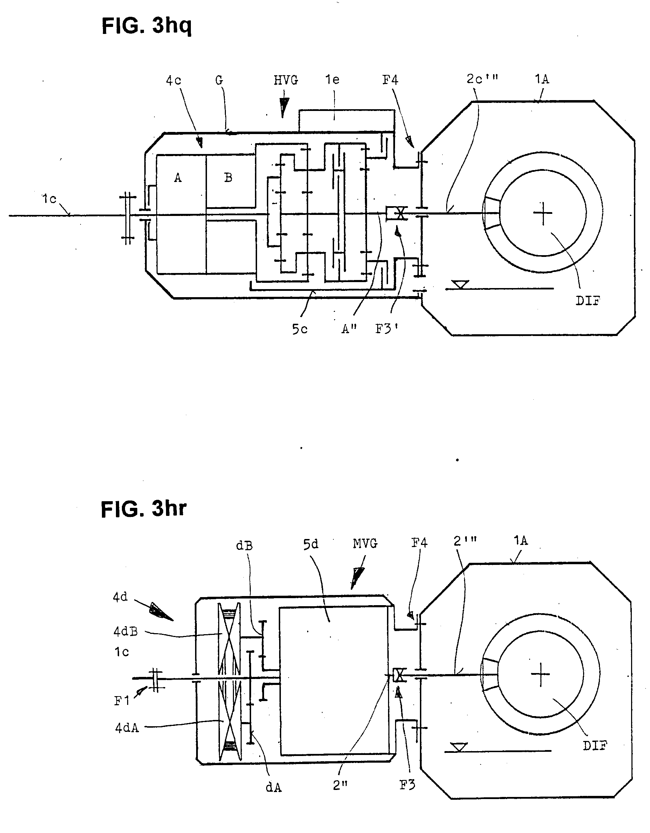

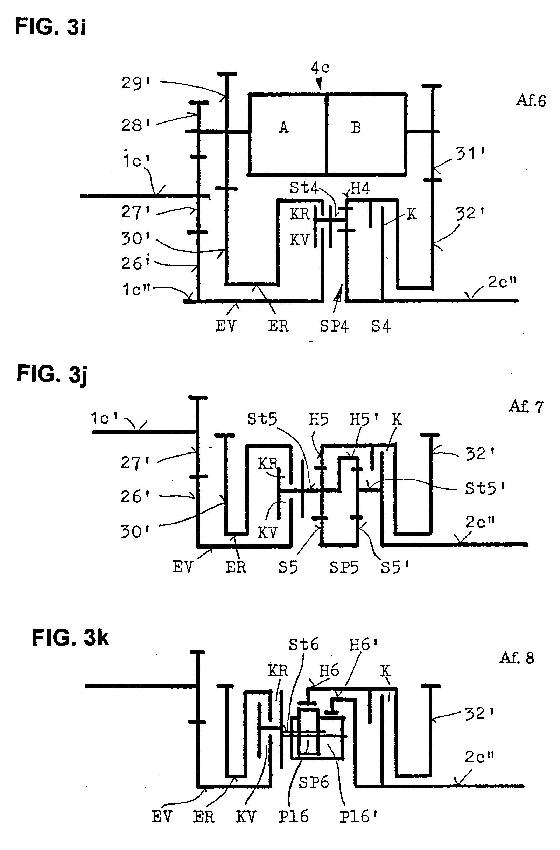

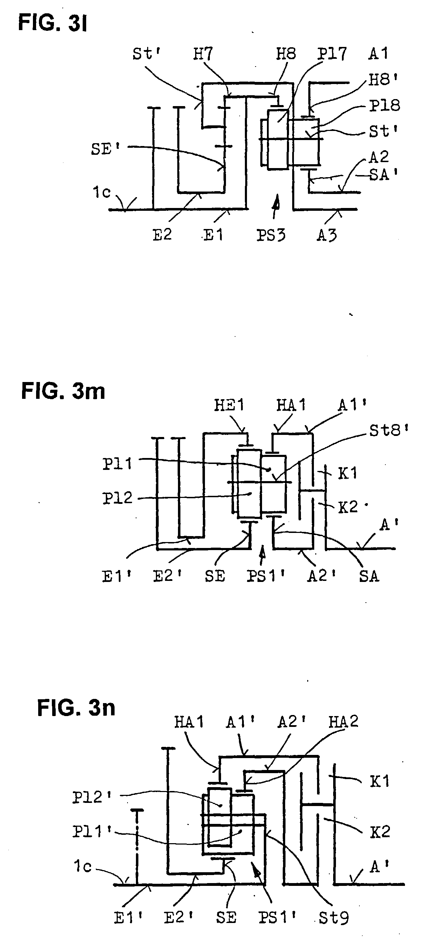

Figur 1 stellt den Grund-Schaltplan eines stufenlosen, insbesondere hydrostatischen Leistungsverzweigungsgetriebes mit mehreren Schaltbereichen dar. Ein Getriebe-Schema eines derartigen Getriebes ist in Figur 3 aufgezeigt.

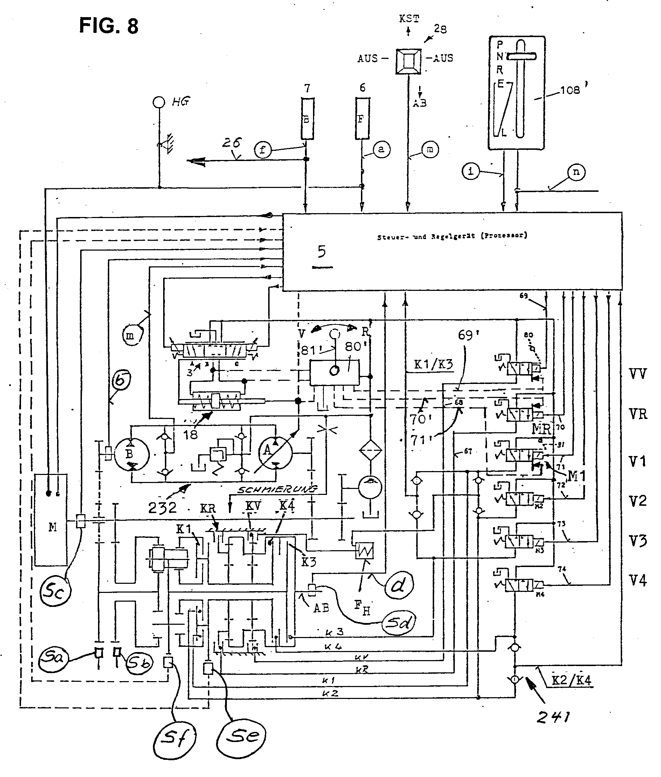

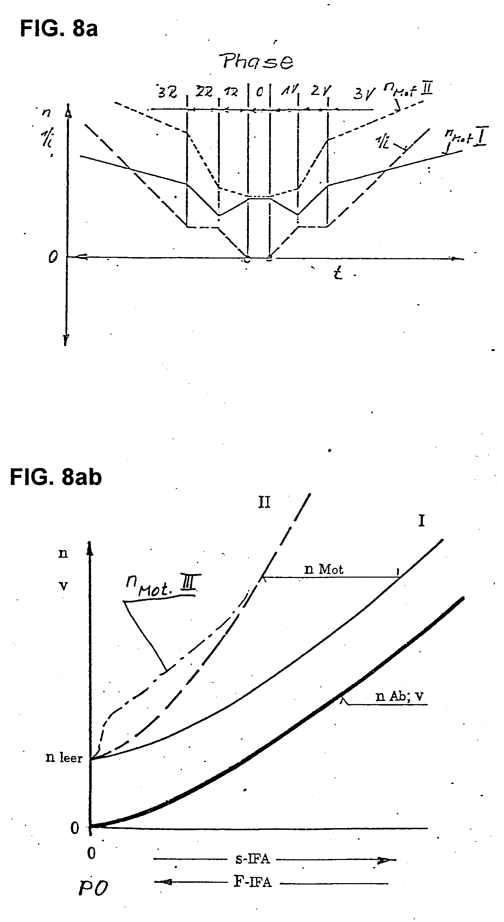

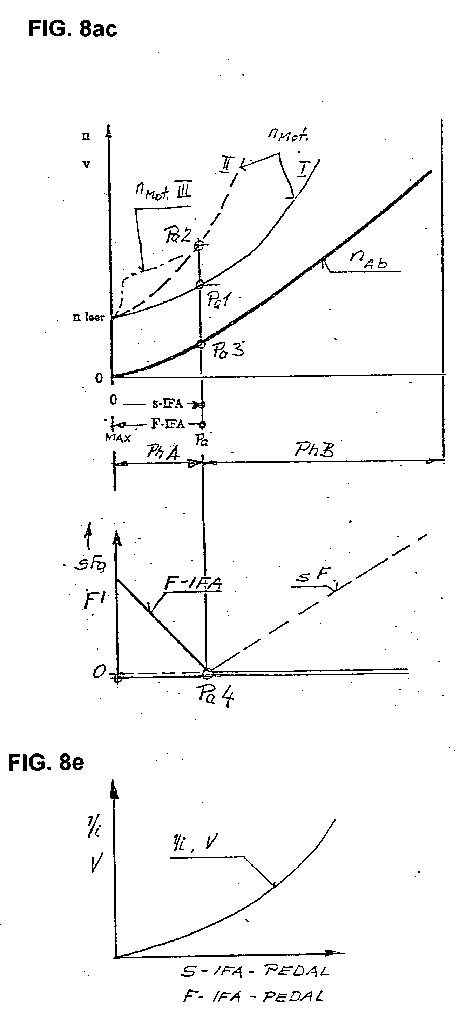

Wie aus Figur 1 ersichtlich, ist die Getriebeverstellung über ein aus zwei oder mehreren Betriebssignalen, insbesondere Motordrehzahl-Signal b und Gaspedalsignal oder Motor-Regelsignal a bzw. Drosselklappenwinkel DW resultierendes Signal c oder/und über eine sogenannte EP-Verstellung, gemäß Figur 8, mit zwei Eingangssignalen C1 und C2 zur Verstellung des Hydrostatgetriebes möglich. C1 und C2 sind elektrische Größen, die auf einer elektrischen Verstellung mit Proportionalmagnet wirken und in proportionaler Abhängigkeit zur Verstellgröße des Hydrostaten stehen.

Das Gaspedalsignal a kann ein Drosselklappen-Verstellsignal sein oder auch als Motor-Regelsignal k, das über das Steuergerät 5 mit dem Motor verbunden ist, dienen, wobei das Signal k mit dem Gaspedalsignal identisch ist oder eine modulierte Größe, in Abhängigkeit zu bestimmten Betriebsparametern, darstellt. Das Gaspedal ist somit bevorzugt als Fahrpedal zu verstehen.

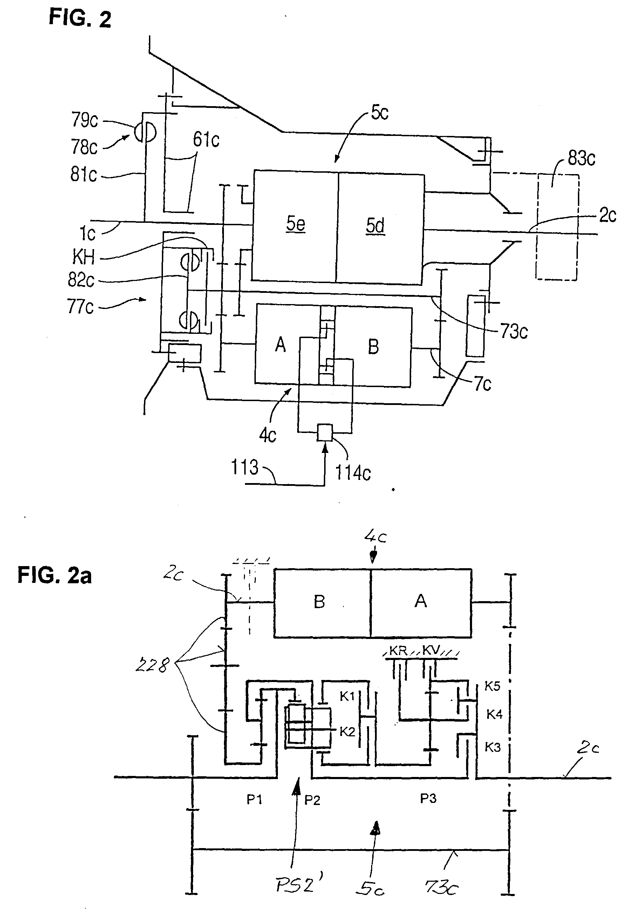

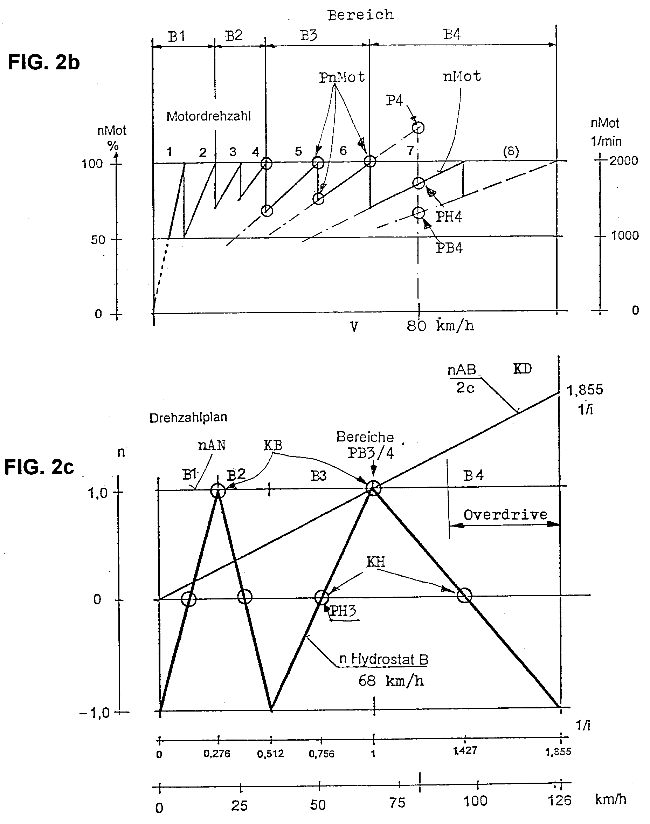

Die Erfindung betrifft desweiteren ein Kraftfahrzeuggetriebe, insbesondere mit Leistungsverzweigung, das aus einem stufenlosen Wandler 4c, gemäß Figur 2; 3; 3,1; 4; 5, bevorzugt einem hydrostatischen Wandler, der aus einer ersten und einer zweiten Hydrostateinheit besteht, wobei beide Einheiten bevorzugt eine gemeinsame Baueinheit bilden und Antrieb oder/und Abtrieb des stufenlosen Wandlers 4c, je nach Ausführungsform, über Direktantrieb oder über zwischengeschaltete Triebräder erfolgt. Die Leistung wird eingangsseitig aufgeteilt in zwei Leistungszweige, wobei ein Leistungszweig über den stufenlosen Wandler fließt und vor dem Getriebeausgang wieder gegebenenfalls in einem Summierungsgetriebe 5c mit dem anderen Leistungszweig aufsummiert wird. Leistungsverzweigungsgetriebe bestehen aus einem oder mehreren Schaltbereichen. Die Schaltung von einem in den anderen Bereich erfolgt vorzugsweise an jeweils einem End-Versteilpunkt des Hydrostaten, wobei innerhalb der Schaltphase die Verstellgröße, mit Ausnahme eventueller geringfügiger Verstellkorrekturen, unverändert bleibt. So wird zum Beispiel bei einem 4-Bereichsgetriebe, wie in Figur 2a; 3 und 3.1 dargestellt, der Hydrostat über den gesamten Übersetzungsbereich viermal von einem Verstelimaximum zum anderen Versteilmaximum durchfahren. Bei diesem Getriebe nach Fig. 3 ist im Anfahrzustand bei geschlossenen Kupplungen K5 und KV und nach Schließen der Kupplung 1 der Hydrostat auf seine maximale negative Verstellgröße eingestellt. Zum Anfahren wird nun der Hydrostat zurückgeschwenkt auf "Null" und darüber hinaus bis zu seinem anderen Verstehende, positives Verstellmaximum, wo am Ende des ersten und zu Beginn des zweiten Schaltbereiches bei Synchronlauf aller Kupplungsglieder der zweite Bereich durch Schließen der Kupplung K2 und Öffnen der Kupplung K1 der zweite Bereich geschaltet ist. Nun wird der Hydrostat wieder zurückgeregelt innerhalb des zweiten Schaltbereiches bis auf "Null" und darüber hinaus bis zu seinem negativen Versteilmaximum, um den dritten Schaltbereich durch Schließen der Kupplung K3 und Öffnen der Kupplung KV zu schalten. Der dritte Bereich wird nun wiederum durch Rückregelung des Hydrostaten durch "Null" und weiter bis zu seinem positiven Versteilmaximum, wo am Ende des dritten Schaltbereiches nun bei Synchronlauf die Kupplung K4 und Öffnen der Kupplungen KV und K3 der vierte Bereich geschaltet wird. Durch Rückregelung des Hydrostaten bis zum entgegengesetzten Versteilmaximum, entsprechend negativem Verstehende, des Hydrostaten wird der Hydrostat zum letzten mal voll durchfahren bis Erreichen des Übersetzungsendpunktes des Getriebes. Der mechanische Leistungsanteil wird bei diesem Getriebe über Stirnradstufen 26c und der hydrostatische Leistungsanteil über die Zahnradstufe 10b, den hydrostatischen Wandler 4c und den Triebstrang 7c mit Zahnradstufe 228 auf das Summierungsgetriebe 5c geleitet. Das Summierungsgetriebe ist hier als mehrwelliges Planetengetriebe P1 ausgebildet, in dem die mechanische und hydraulische Leistung aufsummiert wird. Im ersten und im zweiten Schaltbereich fließt die mechanische und hydraulische Leistung über den zweiten Planetentrieb P2 bei geschlossener Kupplung KV. Für den Rückwärtsbereich wird der erste und der zweite Schaltbereich durch Schließen der Kupplung KR ermöglicht, indem die Drehrichtung im Planetentrieb P2 umgekehrt wird.

Das jeweils erwähnte Versteilmaximum des Hydrostaten definiert den Punkt, an dem die Schaltung in den nächsten Fahrbereich erfolgt, der nicht unbedingt das Verstehende des Hydrostaten sein muß, sondern auch etwas davor liegen kann, um zum Beispiel lastabhängigen Schlupf des Hydrostatgetriebes ausgleichen zu können. Auch ist unter Synchronlauf der zu schließenden Kupplungselemente nicht absoluter Synchronlauf sondern der Synchronlaufbereich definiert, der auch gewollte oder nicht gewollte Synchronlauffehler beinhalten kann, die durch die Schalt- bzw. Bereichskupplungen überbrückt bzw. noch aufgenommen werden können.

Die Getriebe-Ausführungen gern. Fig. 2a und 3.1 sind funktionsgleich mit der beschriebenen Getriebe-Ausführung gem. Fig. 3. Sie unterscheiden sich im wesentlichen darin, daß das jeweilige Summierungsplanetengetriebe bei Ausführung Fig. 2a und 3.1 koaxial zur Antriebswelle 1c angeordnet ist, weshalb ein zusätzlicher Planetensatz im Summierungsplanetengetriebe vorgeschaltet ist. Bei Ausführung gern. Fig. 2a liegt auch die Abtriebswelle 2c koaxial zur Antriebswelle, während bei Ausführung gem. Fig. 3.1 die Abtriebswelle 2c achsversetzt zur Antriebswelle 1c mittels einer Stirnradstufe 2d' liegt. Bei Ausführung gern. Fig. 3.1 kann eine Zwischenwelle (73c1 ,wie bei Fig. 2a erforderlich) für den Antrieb der ersten Hydrostateinheit A entfallen und statt dessen die Antriebswelle 1c durch das Getriebe geführt werden, wobei am Getriebeausgang über einen Stirnradtrieb 10b' die Verbindung zwischen Antriebswelle und der ersten Hydrostateinheit A hergestellt werden kann. Auf diese Weise kann gem. Ausführung Fig. 3.1 ein PTO- oder Zapfwellenanschluß 2e , z.B. für den Traktor, in vorteilhafter koaxialer Lage zur Antriebswelle 1c verwirklicht werden. Ein weiterer Unterschied bei Ausführung Fig. 3.1 zur Ausführung Fig. 2a liegt darin, daß die dritte Ausgangswelle A3 keine Innen- sondern eine Außenwelle darstellt und über den Kupplungen K1 und K2 liegt. Bei dieser Ausführungsform wird innerhalb dem dritten Schaltbereich durch Schließen der Kupplung K3 eine Triebverbindung über die Stegwelle von P3 bei bereits geschlossener Kupplung K4 und einer Stirnradstufe 2d' zur Abtriebswelle 2c hergestellt.

Getriebe dieser Art sind nach DE 40 27 724, DE 41 06 746, EP 0 386 214, US 5,267,911, die mit Bestandteil dieser Erfindung sind, näher beschrieben. Die Erfindung stellt unter anderem eine verbesserte Ausgestaltung dieser bekannten Getriebe sowie der Erfindung gemäß DE-A 44 17 335; EP 0599 263 dar. Die Beschreibung der beiden letztgenannten Druckschriften sind Teil dieser Patentanmeldung und dienen zur näheren Erläuterung von Einzelheiten.

Zur Verbesserung des Wirkungsgrades, des Geräuschverhaltens oder/und zur Schaffung einer wirksamen integrierten Bremsanlage sieht die Erfindung unter anderem vor einen oder mehrere hydrostatischleistungslose Betriebspunkte, insbesondere Übersetzungsfestpunkte, zu realisieren. Zu diesem Zweck wird der Hydrostat an einem oder an mehreren Betriebspunkten, die insbesondere in Hauptbetriebsbereichen liegen, durch entsprechend ausgebildete Einrichtungen abgeschaltet bzw. überbrückt, um diesen in leistungslosen Zustand zu versetzen. Diese Abschalt- bzw. Überbrückungseinrichtung wird in Form einer Hydrostat-Sperreinrichtung KH oder/und einer Bereichs-blockschaltung oder/und einer Stabilisierungseinrichtung KD mit oder ohne Direkt-Durchtrieb ohne Hydrostatleistungsanteil realisiert.

Desweiteren ist das Getriebe mit einer Bremseinrichtung ausgestattet, die in Wirkverbindung mit der Hydrostat-Überbrückungseinrichtung bzw. Übersetzungs-Festpunktschaltung und dem stufenlosen Wandler 4c steht, wie teilweise in DE 44 17 135 A1 beschrieben.

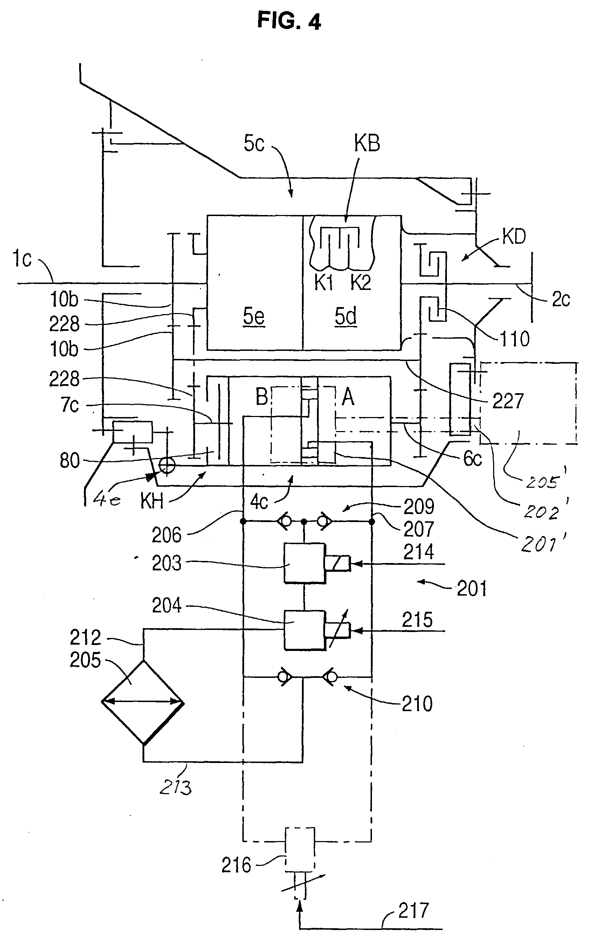

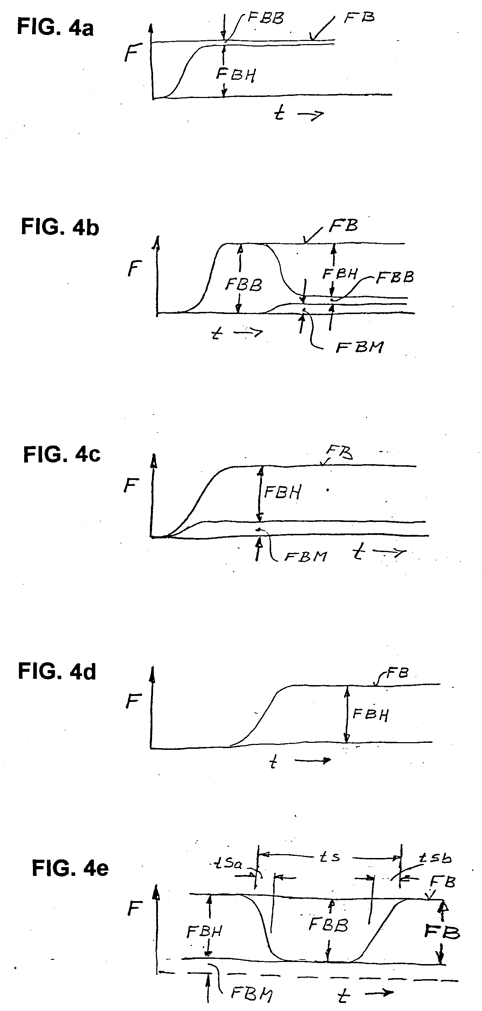

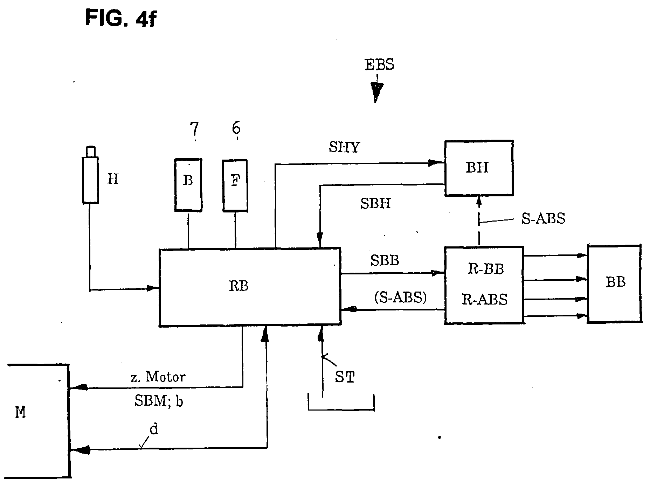

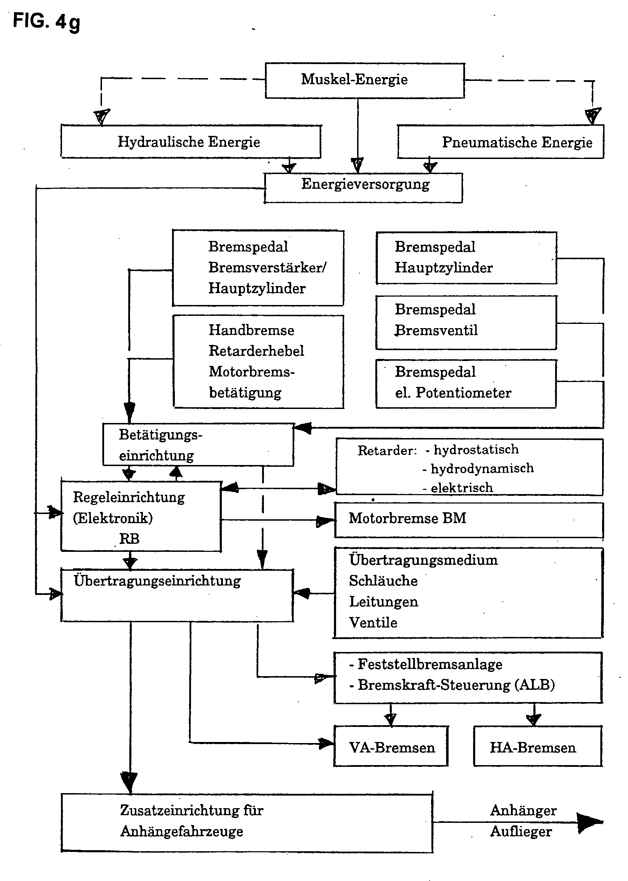

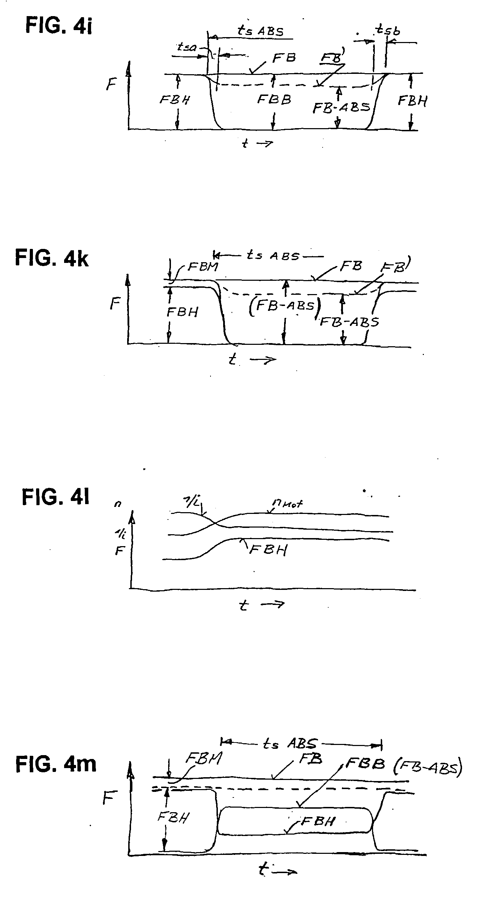

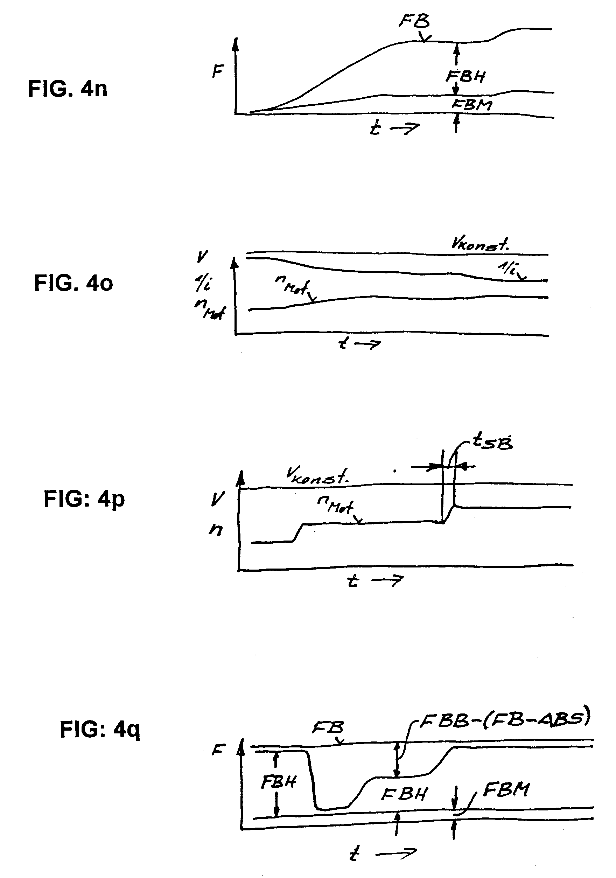

In Figur 4 ist beispielhaft ein Leistungsverzweigungsgetriebe mit einem hydrostatischen Wandler 4c und einem Summierungsgetriebe 5c dargestellt. Das Summierungsgetriebe 5c kann auch die Funktion eines Verzweigungsgetriebes haben, weshalb nachfolgend auch die Bezeichnung "Summierungs-/Verzweigungsgetriebe" verwendet wird. Der hydrostatische Wandler besteht aus einer ersten Hydrostateinheit A verstellbaren Volumens und einer zweiten Hydrostateinheit B vorzugsweise konstanten Volumens. Beide Hydrostateinheiten A und B bilden vorzugsweise eine gemeinsame Baueinheit, die direkt oder über Triebräder mit der Antriebswelle 1c und auf der gegenüberliegenden Seite direkt über weitere Triebräder mit einem Summierungsgetriebe 5c in Triebverbindung steht. Das Summierungsgetriebe ist vorzugsweise als Planetengetriebe ausgebildet, dem je nach Ausführung ein weiteres Getriebe 5d, mit oder ohne Schalteinrichtungen, z.B. für Bereichsschaltungen zum Schalten mehrerer Fahrbereiche, zugeordnet sein kann. Die Leistung wird bei diesem Getriebe eingangsseitig aufgeteilt in einen hydrostatischen und einen mechanischen Zweig. Der hydrostatische Leistungsanteil fließt über die Triebräder und Zwischenglieder 227 über den stufenlosen Wandler 4c und die Triebräder auf das Summierungsgetriebe 5c. Der mechanische Zweig wird direkt oder über Zwischenglieder in das Summierungsgetriebe 5c geleitet, indem hydraulische und mechanische Leistungsflüsse aufsummiert werden und gemeinsam auf die Abtriebswelle 2c gelangen. Der stufenlose Wandler bzw. das Hydrostatgetriebe 4c ist hierbei mit einer Hydrostat-Überbrückungseinrichtung als Hydrostat-Sperreinrichtung in Form einer Bremse bzw. Kupplung KH ausgestattet, die dazu dient, die Triebwelle 7c der zweiten Hydrostateinheit B festzuhalten bzw. mit dem Gehäuse 19c des stufenlosen Wandlers oder einem feststehenden Getriebeteil zu koppeln, so daß die bei Leistungsverzweigungsgetrieben bekannten Stützmomente über die genannte Kupplung bzw. Bremse bevorzugt am Getriebe- oder Wandler-Gehäuse abgestützt werden, um das Hydrostatgetriebe zu entlasten bzw. dieses drehmomentfrei und druckfrei zu halten. Es ist auch möglich, die Hydrostatwelle 7c der Hydrostateinheit B durch eine weitere, nicht dargestellte Kupplung ganz zu trennen.

Die Hydrostat-Sperreinrichtung KH hat die Aufgabe, den stufenlosen Wandler 4c bzw. das Hydrostatgetriebe in den hydraulisch leistungslosen Betriebszuständen bei Hydrostat-Verstellgröße "Null" drehmoment- bzw. belastungsfrei zu halten. Dies wird, derart gelöst, daß die Drehmomentstützkraft aus dem Summierungs/Verzweigungsgetriebe 5c bei Hydrostat-Nullstellung, die in der Regel in der Mitte eines jeden Schaltbereiches liegt, nicht an den Hydrostatelementen sondern an einem entsprechenden zwischengeschalteten Brems- bzw. Kupplungselement gegenüber einem feststehenden Gehäuseteil bzw. Getriebeteil abgestützt wird. Bei Getrieben mit mehreren Schaltbereichen wird das Hydrostatgetriebe mehrmals innerhalb seinem vollen Stellbereich durchfahren, wobei innerhalb eines jeden Schaltbereiches der hydraulisch leistungslose Zustand bei Neutralstellung, das heißt bei Verstellgröße "Null" des Hydrostatgetriebes , entsprechend Hydrostat-Neutralstellung, vorkommt. Dieser Betriebspunkt liegt meistens in einem wichtigen Betriebsbereich des Fahrzeuges, bei dem ein besonders guter Wirkungsgrad gefordert wird.

In den eingangs erwähnten Leistungsverzweigungsgetrieben nach DE-A-40 27 724, DE-A-41 06 746 und PCT/DE 89 00 586, die, wie bereits erwähnt, Bestandteil dieser Erfindung sind, wird die Verstellcharakteristik des Hydrostatgetriebes näher beschrieben.

Um hydrostatische Verspannungen in dieser Verstell-Neutrallage des Hydrostatgetriebes zu verhindern, ist ein Bypaßventil 114c vorgesehen, das zwischen die beiden Arbeitsdruckleitungen der beiden Hydrostateinheiten A und B geschaltet ist. Dieses Bypaßventil ist automatisch oder auch manuell bei geschalteter Hydrostat-Sperreinrichtung betätigbar, wodurch beide Arbeitsdruckleitungen drucklos bzw. ohne Differenzdruck sind. Die Hydrostat-Sperreinrichtung bzw. die Kupplung/Bremse KH und das Bypaßventil werden sinnvollerweise über den selben Steuerdruck angesteuert, wobei das Bypaßventil jedoch erst nach geschlossener Kupplung/Bremse KH aktiviert wird, derart, daß die Druckrückmeldung nach Schließen der Kupplung KH das Signal bzw. den Steuerdruck zur Aktivierung des Bypaßventiles auslöst. Die Hydrostat-Sperreinrichtung KH ist automatisch oder manuell schaltbar, z. B. in Abhängigkeit einer definierten Verweildauer des Getriebes bei der Hydrostat-Neutralstellung oder in dessen Nähe von z.B. maximal 8 % der momentanen Übersetzung, wobei eine vorprogammierte Zeitgröße für diese Verweildauer, von z.B. 2 Sekunden, das entsprechende Steuersignal für die Hydrostat-Sperreinrichtung auslöst, derart, daß eine weitgehend nahtlose kontinuierliche Anpassung der entsprechenden Übersetzung und der Motordrehzahl an die gewünschte Geschwindigkeit erfolgt. Für manuelle Schaltung ist vorgesehen, bevorzugt über ein optisches oder akustisches Signal dem Fahrer diesen Betriebszustand und die Schaltmöglichkeit anzuzeigen. Das Lösen der Hydrostat-Sperre kann ebenfalls auf verschiedene Art erfolgen, z.B. durch ein Fahr- bzw. Gaspedal-Signal, das heißt bei Veränderung der Gaspedalstellung oder durch ein lastabhängiges Signal oder durch verschiedene Signale, die durch veränderliche Betriebswerte bestimmt werden. Im Hinblick auf Optimierung des Kraftstoffverbrauches kann z.B. die Fahrregelung so ausgelegt werden, daß die Getriebe-Wirkungsgradlinie und die Verbrauchsbestlinie des Motors eingespeichert und die Fahrzeugregelung in Abhängigkeit zur jeweiligen Betriebssituation entscheidet, ob der nächstliegende Getriebeübersetzungspunkt mit Hydrostat-Neutralstellung angesteuert werden soll oder nicht. Je nach Fahrzeugart kann ein weiterer Parameter in Abhängigkeit zum Belastungs- bzw. Geräuschverhalten des Getriebes als Entscheidungsfaktor mit eingespeichert bzw. einprogrammiert werden. Dies kann beispielsweise bei Anwendung in einem PKW sinnvoll sein.

Die Erfindung sieht desweiteren vor, den hydraulischen Leistungszweig auch an den Übersetzungspunkten der Bereichschaltstellen auszuschalten. Das bedeutet, daß am Ende des alten Schaltbereiches und zu Beginn des neuen Schaltbereiches die Kupplungen KB für beide Bereiche geschlossen bleiben und der Hydrostat in dieser Verstellgröße fixiert und lastlos gesetzt wird, z. B. durch gleichzeitiges Betätigen des obengenannten Bypaßventiles oder/und einer genauen Ausrichtung bzw. Korrektur der Hydrostatverstellung, derart, daß die beiden hydrostatischen Arbeitsdruckleitungen drucklos bzw. ohne Differenzdruck sind. Die Leistung wird in diesem Schaltzustand rein mechanisch übertragen und zwar über die Kupplungen bzw. Kupplungseinrichtungen der beiden angrenzenden bzw. benachbarten Schaltbereiche. Die Schaltsignale für diese Schaltung können mit gleichen Signalen, wie für die Hydrostat-Sperreinrichtung KH beschrieben, verwirklicht werden. Bei einem Getriebe, z. B. mit vier Vorwärtsfahrbereichen, wie in Fig. 3 dargestellt, sind auf diese Art sieben Übersetzungs-Festpunkte bei lastlosem Hydrostat schaltbar.

Die Erfindung sieht , wie erwähnt, für Leistungsverzweigungsgetriebe eine Stabilisierungseinrichtung KD bzw. Hydrostat-Überbrückungs-Einrichtung vor, die an einer oder mehreren Übersetzungspunkten feste Übersetzungs-Einstellungen hält, an denen der hydrostatische Leistungsfluß ausschaltbar ist zur weiteren Verbesserung des Wirkungsgrades. Wie in Figur 4 dargestellt, ist z. B. die Abtriebswelle 2c über eine Zahnradstufe 10b mit der Antriebswelle 1c über eine Zwischenwelle 227 durch Schließen einer Kupplung KD in Triebverbindung, um nach Schließen dieser Kupplung das Hydrostatgetriebe lastlos zu setzen. Für weitere wichtige Übersetzungspunkte, denen ein hoher Betriebsanteil zukommt, können weitere, nicht dargestellte, Übersetzungsstufen mit entsprechend zugeordneter Kupplung vorgesehen werden.

Eine Ausführung gemäß Figur 3 zeigt z.B. eine Stabilisierungs- bzw. Hydrostat-Überbrückungseinrichtung, bei der mittels einer Kupplung KD ein direkter Durchtrieb, ohne Zahneingriff bzw. Zahn-Wälzleistung, zwischen Antriebswelle 1c und Abtriebswelle 2c hergestellt und somit der Wandler 4c und das Summierungs-Verzweigungsgetriebe 5c in lastlosen Zustand gesetzt wird.

Die Stabilisierungseinrichtung bzw. Hydrostat-Überbrückungs-Einrichtung KD ist auch mit zwei oder mehreren Kupplungen ausführbar, (nicht dargestellt), um den stufenlosen Wandler und das Summierungsverzweigungsgetriebe vollständig abzukoppeln. Bei Kombination mit einem bereits beschriebenen Bypaßventil oder/und einer entsprechenden Hydrostat-Verstelleinrichtung mit gezielter Verstellregelung kann auf die zweite Kupplung verzichtet werden.

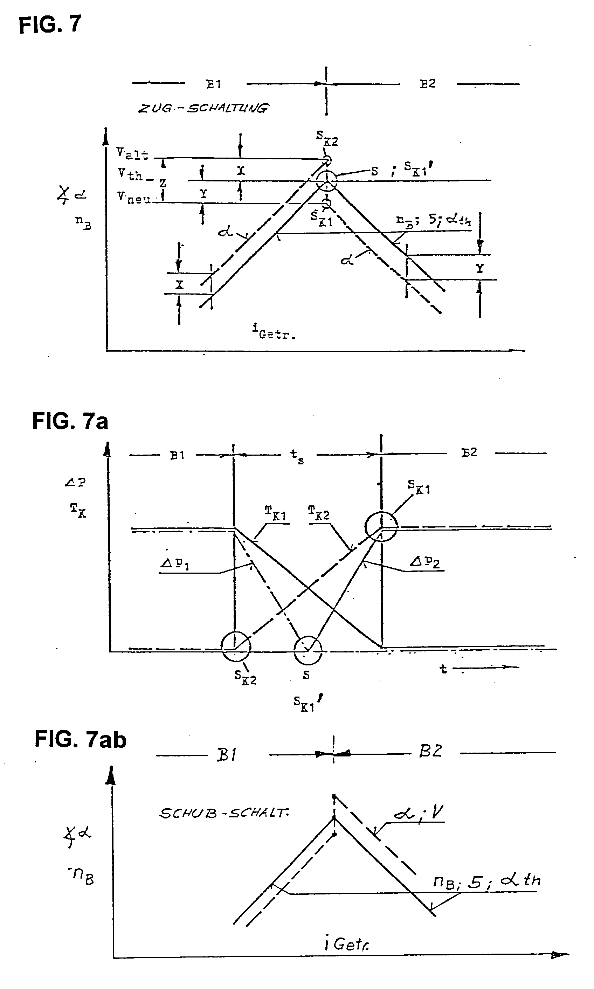

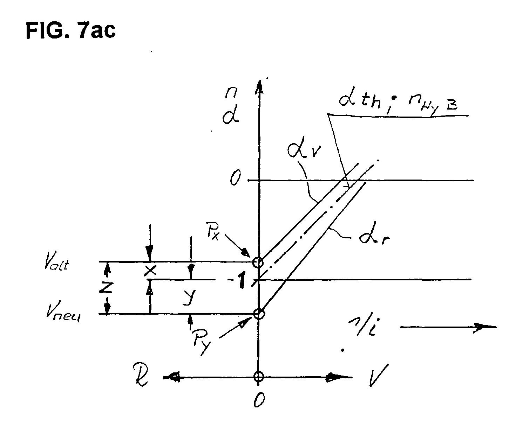

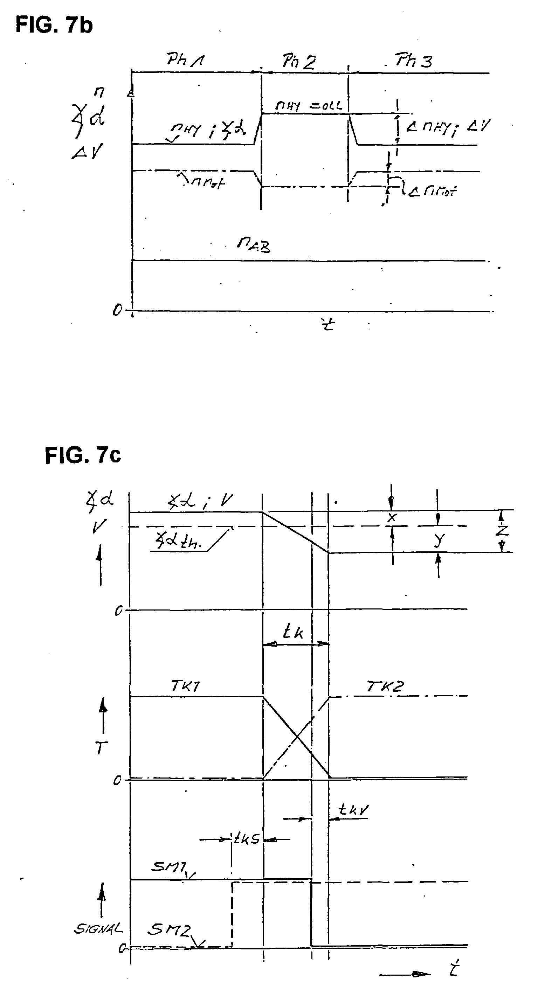

Bei Betriebszuständen, die konstante Übersetzungseinstellung bzw. Konstant-Fahrgeschwindigkeiten fordern, sieht die Erfindung eine Verbesserung der Einrichtung gemäß der deutschen Offenlegungsschrift DE 41 04 167, Anspruch 17 vor. Um ein häufiges Auf- und Abschalten im Schaltbereich zweier angrenzender Bereichsschaltungen zu verhindern, dient die beschriebene Festpunkt-Schaltung KB durch Schließen beider Bereichskupplungen, z.B. K1 und K2, wie in Figur 7b entsprechend der Betriebsphase Ph 2 dargestellt. Abhängig von einer oder mehreren Betriebsgrößen wird automatisch die Festpunktschaltung KB ausgelöst, wobei die Betriebsgröße aus einem Differenzwert des Hydrostat-Verstellvolumens $\Delta V$ oder $\Delta nHy$ oder/und ein Differenzwert für das Lastsignal $\Delta p$ oder/und ein vorprogrammiertes Zeit-Differenz-Signal oder andere Signale sein können. Die entsprechenden vorgenannten Signalgrößen können vorprogrammiert und in Abhängigkeit verschiedener Betriebswerte, wie Betriebstemperatur, Gaspedal-Signal oder andere zusätzlich mit beeinflußt werden. Der Funktionsablauf ist derart, daß, wie in Figur 7b dargestellt, in der Nähe des Übersetzungsfestpunktes KB bei gleichbleibender Fahrgeschwindigkeit bzw. Abtriebsdrehzahl Nab eine automatische Anhebung der Abtriebsdrehzahl nHy der zweiten Hydrostateinheit B bei gleichzeitiger entsprechender Absenkung der Motordrehzahl nMot um den Differenzwert delta nMot erfolgt. Gemäß Figur 7b kann z.B. in der ersten Betriebsphase Ph1 die erste Bereichskupplung K1 und bei Festpunktschaltung gemäß Betriebsphase Ph2 die Kupplung K1 und K2 geschlossen sein und in der dritten Betriebsphase Ph3 ist wiederum die Kupplung K1 geschlossen und die Kupplung K2 geöffnet. Die Differunzwerte delta nHy bzw. delta nMot für den Antriebsmotor können in beliebiger Größe bzw. in beliebigem Verhältnis vorprogrammiert werden und je nach Fahrzeugart unterschiedliche Größen von z.B. 5 % bis 10 % der jeweiligen Bezugsgöße betragen. Je nach Getriebeaufbau können die Drehzahlgrößen nHy und nMot in unterschiedlicher Relation zueinander liegen, wobei, z.B. wie in Figur 7b dargestellt, die Motordrehzahlgröße nMot kleiner ist als die Hydrostat-Drehzahlgröße nHy oder in nicht dargestellter Relation die Drehzahlen so zueinander liegen, daß in der Phase der Festpunktschaltung Ph2 die Motordrehzahl nMot synchron mit der Hydrostatdrehzahl nHy.. dreht, wie dies bei den betreffenden Planetengetriebegliedern HMot und sHy des Getriebes nach Fig. 3 bei der Festpunktschaltung K1/K2 durch Blockumlauf des Summierungsplanetengetriebes P1 der Fall wäre.

Die Schaltkupplung für die Hydrostat-Überbrückungseinrichtungen KH; KB; KD ist verschiedenartig ausführbar und kann zum Beispiel für die Hydrostat-Sperreinrichtung KH beliebig an einem der Zwischenglieder bzw. Triebelemente 7c zwischen der zweiten Hydrostateinheit B und dem Summierungsgetriebe 5c angeordnet werden. Die Kupplungen KH; KB; KD sind bevorzugt als formschlüssige Kupplung ausgebildet wie in der PCT-Druckschrift DE-A- 87/00 324, DE-A-41 26 650 A1 und in der europäischen PCT-Anmeldung DE 88/00 563, die Mitbestandteil dieser Erfindung sind, näher beschrieben. Die Kupplung zeichnet sich insbesondere dadurch aus, daß sie formschlüssig schaltbare Kupplungselemente mit einer Kupplungsverzahnung mit oder ohne Abweisverzahnung besitzt und daß mittels eines auf einem Kupplungsträger verschiebbar angeordneten hydraulisch betätigbarer Kolbens die Schaltung bei Synchronlauf bzw. im Synchronlaufbereich auch bei gewisser Relativ-Drehzahl möglich ist. Es ist auch möglich, wie in vorgenannten bekannten Druckschriften beschrieben, zusätzliche Synchronisiereinrichtungen vorzusehen. Diese vorgenannte formschlüssige Kupplung hat den Vorteil, daß sie nahezu schleppverlustfrei ist, da keine Reibelemente vorhanden sind. Es ist aber auch möglich, die Kupplung als Reibkupplung in Form einer Konuskupplung, wie z. B. in der DE-A-41 26 650 dargestellt, zu verwenden. Auch diese Kupplung kann weitgehend schleppverlustfrei sein, da durch den Konuseffekt die Reibfläche relativ gering ist. Auch die Anwendung einer Lamellenkupplung in bekannter Bauweise kann unter Umständen sinnvoll gestaltet werden. Eine weitere Art einer formschlüssigen Kupplung mit mechanischen Schaltelementen, z. B. mittels Schaltklaue, Schaltmuffe oder/und mit servoverstärkten Schaltelementen ist, je nach gewähltem Getriebeaufbau, sinnvoll anwendbar. In nicht dargestellter Form ist alternativ die Kupplung KH für die Hydrostat-Sperreinrichtung im Summierungsgetriebe 5c angeordnet. Bei Ausführung nach Figur 2 empfiehlt es sich, die Kupplung KH auf einer mit einem Zugkraftverstärker 77c verbundenen Welle 73c anzuordnen. Hierbei können Zugkraftverstärker 77c und Kupplung KH zu einer gemeinsamen Baueinheit bauraum- und kostengünstig zusammengefaßt werden.

Der Hydrostat ist bei allen bereits beschriebenen Einrichtungen zur Abschaltung des Hydrostatbetriebes über das beschriebene Bypaßventil 114c; 216 oder/und durch eine entsprechend ausgebildete Hydrostat-Verstellregelung lastlos zu setzen.

Innerhalb der Festpunktschaltung ist das Hydrostatgetriebe auf die theoretische Verstellungsvolumengröße Vth eingestellt bzw. eingeregelt, so daß keine Differenzölmenge zwischen den Arbeitsdruckleitungen 206, 207 bei geäffnetem Bypaßventil ausgetauscht wird oder ohne geschaltetem Bypaßventil 114c, 216 oder fehlendem Bypaßventil die Arbeitsdruckleitungen 206, 207 annähernd differenzdruckfrei sind. Das Hydrostat-Getriebe wird in diesem Fall auf differenzdruckfreien Zustand eingeregelt durch verschiedene Regelmethoden, wobei eine Methode über die jeweilige Differenzdruckgröße gesteuert wird in der Weise, daß der Differenzdruck ein Verstell-Signal auf das Hydrostatgetriebe auslöst, so daß automatisch eine ständige Anpassung auf zumindest annähernd differenzdruckfreien Zustand des Hydrostat-Getriebes bewirkt.

Bei einer weiteren Steuerungsvariante für die Festpunktschaltung kann gemäß der Erfindung bei vorzugsweise geschaltetem Bypaßventil die Hydrostatverstellung sich automatisch fortlaufend einer neuen Verstellgröße entsprechend einer Verdrängungs-volumengröße Vneu einstellen, die in Abhängigkeit zum Antriebsdrehmoment oder entsprechend dem jeweiligen sich ändernden Belastungszustand von Motor und Getriebe so variiert, daß bei Verlassen der Festpunktschaltung, d.h. bei Beginn der neuen Schaltung bzw.Bereichsschaltung sofort die richtige Verstellgröße bzw. Verdrängungsvolumengröße Vneu bereit steht, die dem drehmomentfreien Zustand der alten Kupplung K1; K2 bzw. Kupplung KH; KD und der günstigsten Verstellgröße Vneu für das Öffnungssignal der entsprechenden Kupplung bei annähernd drehmomentfreiem Zustand entspricht. Der Schaltablauf für das Verlassen der Festpunktschaltung und Schalten in den neuen stufenlosen Schaltbereich wird bei dieser Schaltvariante erfindungsgemäß derart vollzogen, daß mit automatischer drehmomentabhängiger ständiger Anpassung der Verstellung auf Verstellgröße Vneu derart erfolgt, daß zunächst das Bypaßventil schließt und darauf folgend das Öffnungssignal für die alte Kupplung bei drehmomentfreiem Zustand des betreffenden Kupplungsgliedes eingeleitet wird. Bei Schließen des Bypaßventils 114c, 216 wird automatisch, z.B. bei Schaltung aus KB in den stufenlosen Bereich das volle Drehmoment auf die neue Kupplung K1 bzw. K2 verlagert und die alte Kupplung drehmomentfrei gesetzt bei richtigem Vneu und geöffnet. Bei Umschaltung aus der Festpunktschaltung KH oder KD in den anschließenden stufenlosen Schaltbereich wird zuerst durch Schließen des Bypaßventils die betreffende Kupplung KH; KD vom Drehmoment entlastet und danach geöffnet durch ein entsprechendes Öfnungssignal. Zur Optimierung der Schaltqualität ist das Bypaßventil 114c, 216 alternativ so ausgebildet, daß ein kontinuierlicher aber trotzdem rascher Druckaufbau beim Schließvorgang gewährleistet ist. Der kontinuierliche Druckaufbau kann verschiedenartigen charakteristischen Verlauf haben und beispielsweise einer festen Vorgabe entsprechen durch bekannte Mittel wie Drosseldämpfung, Dämpfungsnuten u.a. oder abhängig von einem oder mehreren Betriebswerten, insbesondere lastabhängigen Werten, z.B. durch den Hydrostatdruck variieren. Auch elektrisch-elektronische Ansteuerungen können sinnvoll sein für einen nahtlosen Schaltablauf, insbesondere in Verbindung mit dem beschriebenen Hydrostat-Retarder.

Bei Ausführung der zuerst genannten Variante, bei der das Hydrostatgetriebe innerhalb der Festpunktschaltung auf Vth gestellt bzw.eingeregelt ist, wobei ohne geschaltetem oder fehlendem Bypaßventil die beiden Arbeitsdruckleitungen 206 und 207 annähernd differenzdruckfrei sind wird der Schaltablauf zum Verlassen der Festpunktschaltung KB in die stufenlose Bereichsschaltung auf die Weise vollzogen, daß zunächst das volle Drehmoment auf die neue Kupplung K1 bzw. K2 verlagert wird, derart daß die Hydrostatverstellung zunächst in Abhängigkeit zu dem momentanen Belastungszustand auf die neue Verstell- bzw. Verdrängungsvolumengröße Vneu eingeregelt wird, wodurch die alte Kupplung drehmomentfrei und das Öffnungssignal erhält. Das Öffnungssignal für die alte Kupplung kann automatisch in Abhängigkeit zu Vneu ausgelöst werden.

Mit der Definition „neue Kupplung" in der Festpunktschaltung KB ist die nach Verlassen der Festpunktschaltung belastete Kupplung K1 oder K2 und mit „alter Kupplung" die vom Drehmoment zu entlastende und danach zu öffnende Kupplug K1 oder K2 zu verstehen. Innerhalb der Festpunktschaltung KB sind beide Kupplungen K1 und K2 drehmomentbelastet.

Die drehmomentabhängige, insbesondere vom Motordrehmoment oder/und Antriebsdrehmoment abgeleitete Schaltkorrektur wird später genauer beschrieben.

Durch alle vorgenannten Einrichtungen zur Ausschaltung des hydrostatischen Leistungsflusses werden die Getriebeverlust-leistungen verringert zur Verbesserung des Wirkungsgrades.

Der Funktionsablauf der Retarder-Bremsanlage, der in der DE 44 17 335 A1 näher beschrieben ist, stellt sich wie folgt dar: Bei Bremsbetätigung wird, wie bereits beschrieben, der nächstliegende bzw. günstigste Übersetzungs-Festpunkt durch automatische Anpassung bzw. Anhebung der Motordrehzahl bei gleichzeitiger Übersetzungs-Rückstellung eingeregelt und geschaltet, wobei das Hydrostat-Getriebe sich zunächst in lastlosem bzw. drucklosem Zustand befindet. Zum Beispiel bei Übersetzungs-Festpunkt über die Bereichs-Blockschaltung KB ist in diesem Zustand die Hydrostateinheit A in der Regel voll ausgeschwenkt, wodurch beide Hydrostateinheiten bei gleicher Drehzahl die dementsprechende Ölmenge ohne Differenzdruck innerhalb des Wandlergetriebes in Umlauf halten. Erst nach geschaltetem Übersetzungs-Festpunkt und nach Verstellung der Hydrostateinheit A auf kleineres Volumen wird die Differenz-Ölmenge in den Bremsdruckkreis 206 bzw. 207 geführt und Bremsleistung erzeugt, wenn das Druckventil 204 auf entsprechenden Druck eingestellt bzw. eingeregelt wird. Ist die Verstell-Einheit A auf Verstellgröße "Null" geregelt, so wird die gesamte Ölmenge, welche durch die zweite Hydrostateinheit B, die in der Regel als Konstant-Einheit ausgebildet ist, in den Brems-Arbeitsdruckkreis 206; 207 „gepumpt". Bei Weiterführung der Hydrostatverstellung durch "Null" und darüberhinaus arbeitet die Verstell-Einheit A auch als Pumpe, wobei sie am Ende ihrer Verstellgröße, das heißt bei vollem Verstell-Volumen, gleiche Pumpenleistung und Bremsleistung wie die Konstant-Einheit B liefert. In diesem Zustand ist die höchste Bremsenergie bei doppelter Pumpenleistung übertragbar, wobei beide Einheiten A und B über ihre Triebwellen 7c und 6c und dazugehörigen Triebstränge 227, 228 über das Bremsmoment angetrieben werden. Beide Hydrostateinheiten A und B können auch in unterschiedlicher Größe und beide als Verstell-Einheiten ausgebildet werden, wobei die jeweiligen Bremsleistungen entsprechend ihrer Größe und ihrer dazugeordneten Drehzahl unterschiedlich sind. Ist die zweite Hydrostateinheit B ebenfalls als Verstell-Einheit ausgebildet, so sind weitere Variationen möglich, z.B. derart, daß beide Einheiten gleichzeitig verstellt oder zuerst die Einheit B und dann die Einheit A, je nach den Betriebssituationen, sinnvoll in ihren Verstellgrößen regelbar sind. Bei den eingangs erwähnten bekannten Getriebeausführungen ist es sinnvoll, die zweite Hydrostateinheit B als Konstant-Einheit auszubilden. Für den Betriebszustand, bei dem der Übersetzungs-Festpunkt durch die Hydrostat-Sperreinrichtung und Schließen der Kupplung KH fixiert wird, ist eine Bremsenergie-Übertragung nur über die erste Hydrostateinheit A möglich, die über den entsprechenden Triebstrang 227 angetrieben wird. In den meisten Betriebssituationen ist dies ausreichend. Für den Fall einer höheren Bremsenergie-Forderung kann diese Kupplung KH geöffnet und sehr schnell durch automatisches Zusammenspiel der Regelungs-Einrichtung ein anderer Übersetzungs-Festpunkt angesteuert werden. Die Erfindung sieht hierfür zur Erzielung eines kontinuierlichen Bremsüberganges ein automatisches kurzzeitiges Zuschalten der Betriebsbremse vor, so daß ein weiches ruckfreies Bremsverhalten über den gesamten Übersetzungsbereich gewährleistet ist. Wird zum Beispiel ein Wechsel von einem Übersetzungs-Festpunkt KH zum Übersetzungs-Festpunkt KB innerhalb der Bremsphase vollzogen, so wird bei gleichzeitiger Anhebung der Motordrehzahl zunächst über die automatische Bremsregelung bzw. das elektronische Bremssystem (EBS) die Betriebsbremse dazugeschaltet, so daß ein weitgehend lastloser Zustand im Hydrostatgetriebe bei gleichzeitiger automatischer Verstelländerung der Hydrostateinheit A vollzogen wird. Entsprechend der automatischen Bremsenergie-Abnahme über das Hydrostatgetriebe nimmt kontinuierlich die Bremswirkung der Betriebsbremse BB zu. Zur Findung des vorgenannten Übersetzungs-Festpunktes KB durch Ansteuerung der entsprechenden Bereichs-Blockschaltung wird nun das Hydrostatgetriebe in die entsprechende Endstellung bzw. Endverstellgröße bei gleichzeitiger, entsprechender Motordrehzahlanpassung gebracht, wonach sofort nach Abschluß der Schaltung des genannten Übersetzungs-Festpunktes die Betriebsbremse bei gleichzeitiger Übernahme der hydrostatischen Bremsleistung durch Verstellung des Hydrostatgetriebes die Betriebsbremse kontinuierlich entlastet wird. Dieser Funktionsablauf kann nach vorgegebenem Programm im EBS durch entsprechende Rechenprozesse und Verarbeitung der Signalgrößen aus mehreren Betriebsgrößen wie Bremsdrucksignal, Hydrostat-Drucksignal, Versteilsignal des Hydrostatgetriebes oder/und Motordrehzahlsignal oder/und weiteren Signalen verwirklicht werden. Bei einer anderen Bremssituation, bei der entsprechend dem Fahrerwunsch bei einer Talfahrt die Fahrgeschwindigkeit innerhalb dem Hydrostat-Bremsbetrieb schneller werden soll, erfolgt oben beschriebener Funktionsablauf in umgekehrter Weise, das heißt daß die Getriebe-Übersetzung 1/i beim Wechsel von einem zum anderen Übersetzungsfestpunkt größer wird und innerhalb der Umschaltphase die Motordrehzahl gesenkt wird. Dies gilt auch bei gleichbleibender Geschwindigkeit, wenn aufgrund des Fahrbahnprofils bzw. geringer werdendem Gefälle weniger Bremsleistung gefordert wird und auch aus diesem Grund die Motordrehzahl abgesenkt werden kann, z.B. von Drehzahlpunkt PH4 auf Drehzahlpunkt PB4 wie in Fig. 2b bei einer beispielhaften Fahrgeschwindigkeit von 80 km/h dargestellt ist. In Fig. 2b ist beispielsweise für einen Bremsbetrieb bei 80 km/h das Motordrehzahlverhalten bei verschiedenen Bremssituationen dargestellt. Bei Fahrt auf der Ebene, z. B. bei 80 km/h, liegt der Drehzahlpunkt des Motors PB4 bezogen auf ein Anwendungsbeispiel für einen Omnibus bei einer Drehzahl von ca. 1270 UPM. Bei Übergang in ein Gefälle bei gleicher Geschwindigkeit wird die Motordrehzahl angehoben, z. B. auf den Drehzahlpunkt PH4 bei gleichzeitiger stufenloser Übersetzungsanpassung, die in diesem Punkt dem Übersetzungsfestpunkt KH bei 1/i = 1,427 und einer Motordrehzahl von ca. 1650 entspricht. Nun erfolgt die Festpunktschaltung durch Schließen der entsprechenden Kupplung KH (siehe dazu Fig. 3), wodurch die Hydrostatwelle .7c und die entsprechende Eingangswelle E2 des Summierungsplanetengetriebes festgehalten wird, um eine rein-mechanische Verbindung von der Antriebswelle über das Summierungsplanetengetriebe 5e zur Antriebswelle 2c herzustellen und durch nachfolgende Hydrostat-Verstellung hydrostatische Bremsleistung wirksam werden zu lassen. Für eine extreme Bremsleistungsforderung bei entsprechendem Gefälle und gleichbleibender Fahrgeschwindigkeit von 80 km/h wäre es möglich, auch den Motordrehzahlpunkt P4 anzusteuern und einzuschalten, was dem Übersetzungsfestpunkt KB an der Bereichsgrenze PB3/4 entspricht. Die Bremsregelung BR bzw. das BRS ist hier vorzugsweise so programmiert, daß dieser Betriebspunkt gemieden wird, derart daß eine automatische Geschwindigkeitsverringerung von 80 auf z.B. 68 km/h wirksam wird, um überhöhte Motordrehzahlen, insbesondere aus akustischen Gründen und zu hohe Öltemperaturen und übermäßige Beanspruchung der Bauelemente zu vermeiden. Bei Geschwindigkeitsverringerung von 80 auf z.B. 68 km/h kann die Festpunktschaltung KB bei einer Maximaldrehzahl von 2000 UPM aktiviert werden. Der gleiche, zuvor beschriebene Funktionablauf kann auch in umgekehrter Reihenfolge und Funktionsweise, wie oben bereits erwähnt, bei Übergang in die flachere Fahrbahnebene ablaufen.

Die hydrostatische Bremseinrichtung BH besteht neben dem hydrostatischen Wandler 4c aus einem ersten Rückschlag-Ventil 209, über welches der Ölstrom der jeweiligen Hochdruckleitung 206 bzw. 207 auf ein Schaltventil 203 und ein nachgeordnetes Druck-Regelventil 204 geleitet wird. Das Schaltventil 203 wird über ein Öffnungssignal 214 zur Freigabe der hydrostatischen Bremsfunktion geschaltet, wodurch der Zufluß zum Brems-Druckregelventil 204 freigegeben wird. Das Druckregel-Ventil 204 wird über ein variables Regelsignal 215 angesteuert, das in Abhängigkeit zur Größe der hydrostatischen Bremskraft steht und den Hydrostat-Druck bestimmt. Der Wärmetauscher 205 ist dem Druckregelventil 204 nachgeordnet, der über eine entsprechende Leitung 217 das aus dem Druckregelventil fließende erwärmte Öl aufnimmt und die gekühlte Flüssigkeit über eine weitere Leitung 213 und ein entsprechendes Rückschlagventil 210 wieder in den Arbeitsdruck-Kreislauf der Bremsanlage einführt. Die Bremsregelung RB sieht verschiedene Regelungsstrategien vor, die alterntiv installierbar oder beliebig vorwählbar sind. Wie in Figur 4a bis 4e und in Funktionsschema Fig. 4f dargestellt, kann der Hydrostat-Bremsanteil FBH nach Belieben dazugeschaltet werden, um die Betriebsbremskraft FBB beliebig zu senken. Figur 4a zeigt den Bremskraftverlauf bei einem Bremsbetrieb, bei dem während der Bremsphase die hydrostatische Bremse mit der Bremskraft FBH dazugeschaltet wird und entsprechend dieser Breinskraft die Betriebsbremskraft FBB verkleinert wird. Die Bremskraft der Betriebsbremse kann, je nach Auslegung der Bremsregelung bis auf Null abgesenkt werden, so daß, insbesondere für Dauerbremsbetrieb, die Betriebsbremse BB vollständig entlastbar ist. Die Zuschaltung der Hydrostatbremse (BH = Hydrostat-Retarder) kann manuell oder automatisch erfolgen. Die automatische Retarder-Zuschaltung erfolgt gemäß der Erfindung nach einem vorprogrammierten Zeitparameter, der einen kontinuierlichen Verlauf der hydrostatischen Bremskraft FBH ermöglicht, wobei die Gesamt-Bremskraft FB abhängig von der Betätigungskraft weitgehend unverändert bleibt. Um die notwendige Sicherheit und funktionelle Unabhängigkeit der Betriebsbremse BB gegenüber der hydrostatischen Retarder-Bremse BH zu erhalten, ist für die Retarder-Bremse BH eine ständige Abhängigkeit von der Betriebsbremse BB und den Betriebsbremssignalen SBB vorgegeben. Dazu beruht die Bremsregelung RB oder das EBS z.B. auf einem Regelungsverfahren, das beinhaltet, daß bei zugeschaltetem Hydrostat-Retarder ein Rückmelde-Signal SBH eine automatische angepaßte Rücknahme des Ansteuer-Signals SBB für die Betriebsbremse BB bewirkt. Ein Ausführungsbeispiel sieht vor, daß über ein entsprechendes, nicht dargestelltes Regelventil oder eine vergleichbare, nicht dargestellte elektronische, mechanische, hydraulische oder andere geeignete Einrichtung, bei der zwei Signal-Größen, nämlich die aus der Betätigungskraft oder aus einer Einstellgröße resultierende Signal-Größe und die aus der Hydrostat-Bremse BH resultierende Signal-Größe SBH so zusammenwirken, daß das Ansteuer-Signal SBB für die Betriebsbremse entsprechend der Hydrostat-Signalgröße SBH verringert oder gar auf Null gesetzt wird. Über das Ansteuersignal SHY wird der Hydrostat-Retarder BH angesteuert. Bei einem plötzlichen Ausfall des zugeschalteten Hydrostat-Retarders BH , z.B. durch Ölleitungsbruch u.a. und damit verbundenen Abfall des Hydrostat-Druckes oder bei Auslösung sonstiger Fehlermeldung aus den Sicherheitseinrichtungen würde im gleichen zeitlichen Verhältnis zum Hydrostat-Bremsabfall eine Zunahme der Signalgröße SBB oder anderer entsprechender Einflußgrößen eine damit verbundene Zunahme der Bremskraft .FBB der Betriebsbremse BB erfolgen, so daß die Gesamtbremskraft weitgehend unverändert bleibt. Die Betätigungskraft oder auch der Betätigungsweg des Bremspedals oder gegebenenfalls die vorgewählte Einstellgröße, z.B. durch eine Handbetätigung oder dem Tempomat wirkt, je nach Ausführungsform, also primär auf die Übertragungseinrichtung für die Betriebsbremse BB , wobei die Zuschaltung der Retarderbremse BH gewissermaßen eine Sekundär-Funktion oder abhängige Funktion in Bezug auf das Betriebs-Bremssignal SBB darstellt, so daß entsprechend der Retarderbremskraft bzw. des Retarderbremsanteils eine entsprechende Rücknahme der Betriebsbremskraft bzw. des Betriebsbremssignals SBB bewirkt wird. Das Ansteuer-Signal für den Hydrostat-Retarder resultiert somit bevorzugt aus Funktionen der Betriebsbremse bzw. sind eine Folgefunktion aus der Betriebsbremsanlage, wodurch hinreichende Sicherheit entsprechend der Forderung einer unanbhängigen Betriebsbremse gegeben ist. Das Brems-Signal bzw. Rückmelde-Signal SBH aus dem Hydrostat-Retarder kann aus den Hydrostat-Verstellsignalen, der Hydrostat-Verstellgröße, dem Hydrostat-Druck oder/und anderen Größen resultieren was ein Maß für die Bremskraft FBH aus dem Hydrostat-Ratarder BH; 4c darstellt.

Je nach Art des Fahrzeuges bzw. spezifischen Forderungen kann die Bremsanlage mit verschiedenen Aufteilungs-Verhältnissen der Bremskräfte aus der Betriebsbremse BB oder der Hydrostat-Retarderbremse BH gestaltet werden. Für normalen Bremsbetrieb ist es bei bestimmten Anwendungsfällen sinnvoll, bei niedrigen und kurzzeitigen Bremsvorgängen keinen oder nur geringen Hydrostat-Bremsanteil vorzusehen. Für länger andauernde Bremsvorgänge kann in Abhängigkeit zur Bremszeit oder/und der Bremskraftgröße eine gezielte Zuschaltung der Hydrostat-Retarderbremse mit sinnvoll angepaßtem Anteilsverhältnis nach verschiedenartig ausführbaren Charakteristiken vorprogrammiert werden. Die jeweils günstigsten Werte können abhängig von der Fahrzeugart und anderen Bedingungen experimentell ermittelt werden.

Zur Überbrückung einer Schaltphase, das heißt bei Wechsel der Festpunktschaltung von einem Übersetzungsfestpunkt zum anderen, kann, insbesondere bei vereinfachter Ausführung, ein optisches oder akustisches Signal, das z.B. aus zu hohem Auftouren des Antriebsmotors (Drehzahl-Signal) resultiert, die Umschaltnotwendigkeit ankündigen, wonach z.B. auf manuellem Weg der Bremsretarder ausgeschaltet und über die normale Betriebsbremse das Fahrzeug auf einen anderen Übersetzungspunkt abgebremst wird. Eine komfortable Einrichtung sieht vor, daß eine automatische Regelfunktion nach Erreichen einer vorbestimmten Motordrehzahl eine automatische Absenkung und Rücknahme der Hydrostat-Bremskraft FBH bei gleichzeitiger Zunahme der Betriebs-Bremskraft FBB ausgelöst wird, um die notwendige bzw. gewünschte Übersetzungsänderung des Getriebes wirksam werden zu lassen. Vorgenannter Funktionsablauf kann auch automatisch ausgelöst werden, z.B. bei vorgewählter Konstant-Geschwindigkeit über eine Tempomat-Einrichtung bzw. Konstant-Geschwindigkeitsregeiung. Je nach Straßenprofil kann es erforderlich sein, bei gewünschter Konstant-Geschwindigkeit, daß unterschiedliche Übersetzungspunkte automatisch einregelbar sind, insbesonder dann, wenn jeder Bremskraft ein unterschiedlicher Motor-Bremskraftanteil und entsprechend unterschiedliche Motordrehzahlen zugeordnet sind. Gemäß der Erfindung ist vorgesehen, die Bremsregelung so zu programmieren, daß ein Motorbremsanteil bzw. eine Motorbremskraft FBM in die Regelungsstrategie mit einbezogen wird, wobei vorzugsweise einer bestimmten Bremsleistung auch eine angemessene Motor-Bremsleistung bzw. Motorbremsmoment zugeordnet ist. Wie in Fig. 4b dargestellt, kann innerhalb eines Bremsverlaufes zunächst die Betriebsbremse BB die volle Bremskraft FBB übernehmen und nach einem vorgegebenen variablen oder konstanten Zeitparameter oder anderen, von bestimmten Betriebsfaktoren abhängigen Parametern die Hydrostatbremse bzw. Hydrostat-Bremskraft FBH dazugeschaltet werden mit (oder ohne) gleichzeitiger Unterstützung durch Motorbremswirkung durch entsprechendes Motorbremsmoment bzw. Motorbremskraft FBM Eine optimale Abstimmung der jeweiligen Bremskraftanteile FBH , FBB und FBM kann experimentell in Abhängigkeit verschiedener Betriebssituationen ermittelt werden. Die in Fig. 4a und 4b dargestellten Bremskraftverläufe bilden verschiedene Bremsbetriebs-Situationen, die auf derselben Bremsregel-Strategie beruhen können. Gemäß Fig. 4c wird die gesamte Bremskraft FB aus der Hydrostat-Bremskraft FBH und der Motorbremskraft FBM ohne Einsatz der Betriebsbremskraft FBB gebildet. Dies ist bevorzugt möglich bei einer handbetätigten Retarder-Schaltung, die z.B. durch einen elektrischen Brems-Stufenschalter oder stufenlosen Schalter schaltbar ist. Diese Einrichtung kann als zusätzliche Dauerbremse oder für eine vereinfachte Einrichtung, bei der der Hydrostat-Retarder als Dauerbremse dient, sinnvoll angewendet werden, wobei die jeweilige Zuschaltung der Dauerbremse nach einer, während der Fahrt vorbestimmten Festübersetzung und geschalteter Festpunkt-Schaltung manuell einschaltbar ist. Die in Fig. 4e dargestellte Bremskraft-Abbildung zeigt die kurzzeitige Abnahme der Hydrostat-Bremskraft FBH , z.B. innerhalb einer Schaltphase beim Wechsel von einem in den anderen Übersetzungsfestpunkt. Innerhalb der Schaltzeit ts wird die Hydrostat-Bremskraft zurückgenommen, wobei die Gesamtbremskraft FBB aufrechterhalten bleibt durch entsprechende Mithilfe und Zuschaltung der Betriebsbremskraft FBB . Innerhalb der Übergangsphasen bzw. der Schaltzeitanteile tsa und tsb sind beide Bremsanlagen, FBH und FBB , wirksam. Der kontinuierliche Bremskraftverlauf über der genannten Schaltphase, wie in Fig. 4e dargestellt, wird gemäß der Erfindung sichergestellt bei Anwendung der beschriebenen und in Fig. 4f dargestellten Bremsregel-Einrichtung. Der Bremskraftverlauf innerhalb der beschriebenen Umshaltphase von einem in den anderen Übersetzungsfestpunkt kann auch unter Mithilfe der Motorbremskraft FBM sinnvoll realisiert werden. Die Betätigungskraft FF kann hierbei innerhalb der gesamten Schaltphase unverändert bleiben oder beliebig verändert werden, wobei entsprechend der Veränderung eine sinngemäße Anpassung der Bremskraft FB erfolgt wie es auch dem Fahrerwunsch entspricht.

Um eine sichere Funktion des Antiblockier-Systems (ABS-Systems) zu gewährleisten, muß während dem Bremsbetrieb eine möglichst spontane Abschaltung des Hydrostat-Retarders BH erfolgen, wobei gleichzeitig nahezu die gesamte Bremskraft durch die Betriebsbremse übernommen wird, da die Funktionen des ABS-Systems auf Einrichtungen der Betriebsbremse beruhen. Gemäß der Erfindung wird, wie in Fig. 4i und 4k dargestellt, bei Aktivierung des ABS-Systems über die elektronische Bremsregelung RB der Hydrostat-Retarder BH automatisch abgeschaltet. Ein entsprechendes Signal S-ABS aus der ABS-Regelung R-ABS (s. Fig. 4f) bewirkt eine Rücknahme des Hydrostat-Druckes im Hydrostat-Freislauf 206, 207 des Hydrostat-Getriebes 4c , welches als Hydrostat-Retarder BH wirksam ist, z.B. durch Einschalten des Bypaß-Ventils 114c; 216 oder/und durch entsprechende Anderung der Hydrostat-Verstellung oder/und durch entsprechende Änderung des Ansteuer-Signals 215 für das Druckventil 204 (Fig. 2; 4; 5). Diese Funktion ist sowohl bei Dauer-Bremsbetrieb als auch bei Normal-Bremsbetrieb mit eingebauter „Mischfunktion" (FB = FBB + FBH bzw. FB = FBB + FBH + FBM) gemäß der Erfindung möglich.

Der Übergang von Retarderbremsbetrieb zu ABS-Bremsbetrieb erfolgt weitgehend kontinuierlich wie in Fig. 4i und 4k dargestellt. Die Gesamtbremskraft FB wird bei Aktivierung der ABS-Funktion auf die Größe FB' bzw. FB-ABS abgesenkt entsprechend den jeweils gegebenen unterschiedlichen Reibwertverhältnissen an den betreffenden gebremsten Rädern wie dies bei üblichen Bremsanlagen ohne Retarder der Fall ist.

Rei Mitwirkung der Motorbremse BM wird, wie in Fig. 4k gezeigt, mit Einsatz der ABS-Funktion auch gleichzeitig die Motorbremskraft FBM mit oder ohne Motordrehzahlabsenkung zurückgenommen, was in der Bremsregelung oder/und Getrieberegelung entsprechend vorprogrammiert werden kann. Im Hinblick auf einen spontanen Funktionsablauf beim Übergang von Retarderbremsbetrieb bzw. Gemischt-Bremsbetrieb (BH + BM bzw. BH + BM + BB) zu ABS-Bremsbetrieb sieht die Erfindung vor, daß die Motordrehzahl nach Auslösung der ABS-Funktion zunächst aufrechterhalten bleibt entsprechend dem zuvor gegebenen Motorbremsmoment, um ein kontinuierliches Motordrehzahlverhalten bei häufig wechselnden Funktionsänderungen zwischen ABS- und Normalbremsbetrieb bzw. vorgenanntem Misch-Bremsbetrieb aufrechtzuerhalten oder daß nach einer vorgegebenen Charakteristik ein kontinuierlicher Abfall der Motordrehzahl gegeben ist, die vorzugsweise experimentell zu ermitteln und ausgehend von verschiedenen Parametern wie Geräuschverhalten, Komfort u.a. festzulegen und zu programmieren ist.

Die Hydrostat-Retarderbremsfunktion kann gemäß der Erfindung sowohl für den Normalbremsbetrieb als auch für Dauerbremsbetrieb sinnvoll eingesetzt werden. Für Normalbremsbetrieb werden die beschriebenen Bremsfunktionen bevorzugt über ein Fußbremspedal abhängig von der Bremskraft oder/und des Bremspedalweges ausgelöst. Für eine Bremsanlage, die in vereinfachter Form nur den Dauerbremsbetrieb über den Hydrostat-Bremsretarder abdecken soll, empfiehlt es sich, eine Handbremsbetätigung über einen sogenannten Retarderhebel zu wählen, wobei die Hebelstellung bevorzugt ein Maß für die Bremskraft darstellt. Auch nach Art eines Tempomats kann über eine Hebel- oder Tastereinrichtung eine Konstant-Geschwindigkeit gespeichert werden, wobei entsprechend den Bremsanforderungen automatisch die Bremskraft entsprechend dem Straßenprofil variiert. Bei einem Betriebsfall, wie z.B. in Fig. 41 dargestellt, wird bei ansteigender Bremskraft FBH eine automatische Rückregelung der Getriebeübersetzung 1/i bei gleichzeitiger, schubbedinter Anhebung der Motordrehzahl bewirkt. In dieser zuletztgenannten Gesamt-Bremsfunktion kann automatisch entsprechend den unterschiedlichen Anforderungen die Getriebeübersetzung variieren und den Motorbremsanteil FBM und den Hydrostat-Retarderbremsanteil FBH sinngemäß anpassen und aufteilen. Je nach Größe der Gesamtbremsleistung wird der Motorbremsanteil FBM durch entsprechende, durch die Schubkrft bedingte Veränderung der Motordrehzahl und gleichzeitiger Anpassung der Hydrostat-Retarderbremskraft FBH die Getriebeübersetzung automatisch verändert. Zum Beispiel wird bei zunehmendem Gefälle die Motordrehzahl bremskraftbedingt angehoben bei gleichzeitiger stufenloser Rückregelung der Getriebe-Übersetzung verbunden mit gleichzeitiger Vergrößerung der Hydrostat-Bremskraft FBH . Bei zu hohem Anstieg der Motordrehzahl wird entsprechend vorgegebener zulässiger Werte entweder die Betriebsbremse BB dazugeschaltet oder der Fahrer gezwungen, eine niedrigere Fahrgeschwindigkeit einzustellen durch Abbremsen über die Fußbremse bzw. die Betriebsbremse, so daß eine Überforderung der Bremsanlage verhindert wird. Maßgebend für die Begrenzung ist in erster Linie die Öltemperatur bzw. die maximal mögliche Kühlleistung, wobei z.B. über ein Temperatur-Signal, welches dem Fahrer oder der Bremsregelung die Grenze der Bremsleistung signalisiert und gegebenenfalls zur Reduzierung der Bremsgeschwindigkeit zwingt. Ein entsprechendes akustisches oder optisches Signal, z.B. einsetzendes Blinklicht, fordert den Fahrer zur Geschwindigkeitsreduzierung durch Abbremsen auf. Auch eine automatische Geschwindigkeitsreduzierung durch automatischen Einsatz der Betriebsbremse und Mithilfe durch die Betriebsbremskraft FBB kann durch entsprechende Regelfunktion in der Brems- und Getrieberegelung eine angepaßte Fahrgeschwindigkeits. Minderung bewirken. Die Geschwindigkeitsminderung in vorgenanntem Fall durch zwischenzeitlichen Einsatz der Betriebsbremse ist erfindungsgemäß derart vorgegeben, daß bei der neuen Bremsgeschwindigkeit die Betriebsbremse wieder ausgeschaltet wird, um den Bremsverschleiß der Betriebsbremse auf ein Mindestmaß zu reduzieren, das heißt daß die Bremsgeschwindigkeit so weit reduziert wird, daß die volle Bremskraft wieder über die Retarderbremsanlage und die Motorbremswirkung abgedeckt werden kann. Der automatische Einsatz der Betriebsbremse ist bei Bremsanlagen mit hydraulischer oder/und pneumatischer Energieversorgung (siehe Fig. 4g) durch entsprechendes Ansteuer-Signal aus der Bremsregelung RB realisierbar.

Die Bremsbetätigung kann verschiedenartig über den Hauptbremszylinder, Bremsventil, elektrisches Potentiometer, Handbremse, Retarder-Vorwahlhebel u.a., je nach Fahrzeugart und den Anforderungen, gestaltet werden. In Fig. 4g ist der Aufbau einer Bremsanlage z.B. für ein Zugfahrzeug dargestellt.

Das Retarder-Bremssystem weist gemäß der Erfindung bei Ausbildung als Hydrostat-Retarder ABS-Tauglichkeit auf (siehe dazu Fig. 4m sowie Fig. 4i, 4k, 4l, 4q). Dies wird derart realisiert, daß bei Aktivierung der ABS-Regelung eine automatische Absenkung oder Ausschaltung der Hydrostat-Retarder-Bremskraft FBH (siehe Fig. 4q) ausgelöst wird bei gleichzeitiger Zunahme oder Übernahme der Bremskraft durch die Betriebsbremse FBB . Dies geschieht derart, daß ein von der ABS-Regelung abhängiges Signal S-ABS eine entsprechende Absenkung des Hydrostat-Druckes im Bremskreislauf 206, 207 des Retarders bewirkt, insbesondere durch entsprechende Beeinflussung des Bremsdruckventils 204 durch die entsprechende Veränderung des Ansteuer-Signals 215 oder/und der Hydrostat-Verstellung. Um innerhalb dieser ABS-Funktion die Gesamtbremskraft möglichst unverändert aufrecht zu erhalten, wird bei Absenkung des Hydrostat-Retarder-Bremsdruckes im Bremskreislauf 206, 207 bzw. Absenkung der Hydrostat-Bremskraft FBH eine gleichzeitige, entsprechend angepaßte Anhebung der Betriebsbremskraft FBB bewirkt durch entsprechende Ansteuerung nach Auslösen des Ansteuer-Signals SBB der Betriebsbremsanlage, wie in Fig. 4m und 4q dargestellt. In der Bremsregel-Einrichtung bzw. der Elektronik erfolgt zu diesem Zweck ein automatischer Vergleich und Anpassung der Signalgrößen SBH und SBB. woraus das bzw. die Gesamtbremssignale oder die Gesamtbremskraft resultieren. Erfindungsgemäß ist, wie an früherer Stelle bereits erläutert, das Bremsregelungssystem so konzipiert, daß die Signalgröße für die Retarder-Bremskraft bei Einsatz der ABS-Funktion von dem Betriebsbrems-Signal SBB um das entsprechende Maß zurückgedrängt wird oder daß als Folgefunktion aus der ABS-Funktion die Retarderbremskraft FBH entsprechend abgesenkt wird, um die Unabhängigkeit der Betriebsbremse zu wahren. Die Gesamtbremskraft bleibt hierbei weitgehend unverändert erhalten oder wird ungünstigstenfalls nur soweit abgesenkt als es die Fahrbahnverhältnisse optimal zulassen. Um bei Einsatz der ABS-Funktion nach Ansprechen eines oder mehrerer der ABS-Sensoren wird, insbesondere aus Sicherheitsgründen, zunächst der Hydrostat-Bremsanteil FBH nahezu auf Null abgesenkt bei gleichzeitiger entsprechender Zunahme der Betriebsbremskraft FBB, welche auch die ABS-Funktions beinhaltet. Je nach Größe der ABS-Wirkung, d.h. je nach den Drehzahlschlupf-Verhältnissen der abgebremsten Räder kann nun die Bremselektronik entscheiden, ob und in welcher Größe innerhalb der ABS-Bremsphase die Hydrostat-Retarderbremse dazugeschaltet werden kann. Wie in Fig. 4q dargestellt, kann je nach den gegebenen Schlupf-Verhältnissen eine mehr oder weniger große Zunahme der Retarder-Bremskraft FBH aus der Information der jeweiligen Schlupfverhältnisse an den abgebremsten Rädern über das bzw. die betreffenden Ansteuer-Signale für die Retarder- und Betriebsbremse ausgelöst werden. Dieser Funktionsablauf trägt wesentlich dazu bei, den Betriebsbremsanteil und den Bremsverschleiß auf ein Minimum zu reduzieren. Aus Sicherheitsgründen ist die Bremsanlage so ausgelegt, daß bei Ausfall der Hydrostat-Bremsanlage die Betriebsbremse sofort die vorhergehende Hydrostat-Bremskraft übernimmt, wobei das entsprechende Betriebsbremssignal SBB auf die Betriebsbremse wirksam wird. Die Mittel für die Verarbeitung und Übertragung der genannten Signale können bekannte elektronische, elektrische und/oder hydraulisch-mechanische Einrichtungen und Elemente sein.

Um bei Einsatz der Hydrostat-Retarder-Bremsanlage Überhitzung des Öles zu vermeiden, sieht die Erfindung vor, daß in Abhängigkeit zur Öltemperatur und dem Temperatur-Signal ST eine entsprechende Anpassung der Hydrostat-Retarder-Bremsleistung eingeregelt wird, wobei zur Aufrechterhaltung der notwendigen Sicherheit eine der zulässigen Öltemperatur entsprechende Rücknahme der Fahrgeschwindigkeit durch Übersetzungsrückstellung bevorzugt automatisch erfolgt oder/und eine entsprechende akustische oder optische Signalanzeige den Fahrer zur Verringerung der Fahrgeschwindigkeit veranlaßt, z.B. durch entsprechende Abbremsung über die Fußbremsbetätigung. Das Temperatur-Signal ST ist hier eine der maßgebenden Sicherheits-Signale.

Die Erfindung besitzt desweiteren eine Einrichtung als „Tempomat", die im Bremsbetrieb bei Einsatz des Hydrostat-Retarders als Dauerbremse ein Festhalten der Wunschgeschwindigkeit bewirkt über die Betätigungseinrichtung, die verschiedenartig ausführbar ist, z.B. als Bremsschalter, Bremshebel, Tastatur oder daß über das Bremspedal die gewünschte Geschwindigkeit eingestellt wird und nach Loslassen des Bremspedals diese Bremsgeschwindigkeit automatisch gehalten wird, so lange bis der Fahrer durch erneute Bremsbetätigung oder Betätigung des Gas- bzw. Fahrpedals eine Geschwindigkeitsänderung wünscht. Bei Betätigung des Gas- bzw. Fahrpedals wird vorzugsweise die gespeicherte Geschwindigkeit ausgeschaltet oder nach einem kontinuierlichen Verlauf verändert, der je nach Wunsch des Fahrers abhängig von der Veränderungsgeschwindigkeit des Fahrpedals eine mehr oder weniger schnelle Geschwindigkeitsveränderung nach vorgegebenem Programm auslöst. Würde jedoch durch zu hohe Bremsleistung über die Retarder-Bremsanlage bei vorgewählter Geschwindigkeitseinstellung eine Überforderung bzw. die zulässige Öltemperatur überschritten, so sorgt ein Temperatur-Signal ST dafür, daß die Retarder-Bremsleistung entsprechend reduziert wird durch automatische Absenkung der Fahrgeschwindigkeit, z.B. durch Übersetzungsrückregelung oder/und automatische Übernahme eines Teiles der Bremsleistung durch die Betriebsbremse durch ähnlichen Funktionsablauf wie oben beschrieben.

Alle vorbeschriebenen Funktionen für den Hydrostat-Retarder, auch mit ABS-Tauglichkeit, sind auch anwendbar bei Getrieben verschiedener Art mit zugeordnetem hydrostatischen Retarder bekannter Art, der z.B. die Funktion eines hydrodynamischen Sekundär-Retarders ersetzen soll. Dieser Hydrostat-Retarder ist in der Regel über eine Stirnradstufe mit der Getriebeabtriebswelle verbunden. Der Hydrostat-Kreislauf ist hierbei so gestaltet, daß über die Niederdruckseite der Ölzufluß und über die Hochdruckseite der Ölabfluß erfolgt und zwischen Hoch- und Niederdruckseite ein bevorzugt regelbares Druckventil, das als Bremsventil wirksam ist, geschaltet ist. Die Hydrostat-Einheit kann als Verstelleinheit oder auch als Konstanteinheit verwendet werden, wobei bei Ausführung mit Konstanteinheit hohe Umlauf-Ölmengen bei nichteingeschalteter Retarder-Funktion zu unnötigen Leistungsverlusten führt. Das in den Zeichnungen nicht dargestellte Druckventil und das Ansteuer-Signal dieser Retarder-Ausführung ist mit der erfindungsgemäßen Ausführung mit dem Druckventil 204 und dein Ansteuer-Signal 215 vergleichbar. Alle Funktionen der Retarder-Bremsanlage dieser Ausführung sind erfindungsgemäß identisch mit der Retarder-Bremsanlage in Verbindung mit einem Leistungsverzweigungsgetriebe wie in Fig.4 und Fig.2 dargestellt.

Für die Hydrostat-Retarderbremsanlage ist gemäß der Erfindung vorgesehen, daß das Fahrpedal bzw. die Fahrpedalstellung oder die Tempomat-Einrichtung die Geschwindigkeit auch im Bremsbetrieb bestimmt ohne Betätigung des Bremspedals oder sonstiger Betätigungs-Einrichtungen. Dies bedeutet, daß z.B. bei Befahren einer Gefällstrecke die vorgewählte Soll-Geschwindigkeit eingehalten wird unter automatischer Mitwirkung der Hydrostat-Retarderbremsanlage. Das Getriebeabtriebsdrehzahl-Signal d sorgt für die Aufrechterhaltung der Soll-Geschwindigkeit. Ein Motordrehzahl-Signal b bestimmt die Motorbremsleistung. Die Motorbremsleistung kann abhängig oder unabhängig zur jeweils auftretenden Gesamt-Bremsleistung eine konstante Maximalgröße oder eine variable Größe, wie z.B. in Fig.4n dargestellt, einnehmen. In Fig.4n ist für einen bestimmten Betriebszustand bei Befahren eines variierenden Gefälles für eine vorgewählte Konstant-Geschwindigkeit die erforderliche Gesamt-Bremskraft FB aufgezeigt. Abhängig von einer ansteigenden Schubkraft wird, wie in Fig.4o gezeigt, die Motordrehzahl nMot entsprechend angehoben, was z.B. durch das Drehzahl-Signal b zu einer automatischen Rücknahme der Getriebe-Übersetzung 1/i und gleichzeitiger Anhebung der Motorbremskraft FBM und auch gleichzeitiger automatischer Anpassung der Hydrostat- bzw. Retarder-Bremskraft FBH führt. Es ist sinnvoll, insbesondere aus Gründen der Akustik und der Lebensdauer der gesamten Bremsanlage, den Motorbremsanteil in einem bestimmten angepaßten Verhältnis zur Gesamt-Bremskraft FB vorzuprogrammieren, wobei ein zulässiger Maximalwert für die Motorbremskraft FBM und insbesondere die Motordrehzahl nMot vorgegeben ist. Sollte die zulässige Bremsleistung überschritten werden aufgrund zu starken Gefälles bzw. durch zu große Schubkraft, sieht die Erfindung vor, daß unabhängig vom eingestellten Geschwindigkeitswert eine automatische Geschwindigkeitsreduzierung aktiviert wird. Die Signale hierfür können aus einem oder mehreren Betriebssignalen wie Temperatur-Signal Sth, Hydrostatdruck-Signal oder/und anderen last- bzw. die Sicherheit beeinflußende Signale ausgelöst werden.

Der beschriebene Drehzahlverlauf im Retarder-Bremsbetrieb entspricht in den Darstellungen Fig.4l und 4o der Ideal-Linie, d.h. einer Linie mit unendlich vielen Übersetzungs-Festpunkten. Nachdem jedoch eine begrenzte Anzahl an Übersetzungs-Festpunkten, wie bereits beschrieben, vorliegt und zwar an den Bereichsgrenzen zweier benachbarter Schaltbereiche entsprechend Übersetzungs-Festpunkt KB, an der Stelle des Hydrostat-Stillstandes bei Festpunkt KH und gegebenenfalls an einem weiteren Übersetzungs-Festpunkt KD, ist nur eine stufenweise Änderung der Motordrehzahl, wie in Fig.4p dargestellt, möglich. Das bedeutet, daß eine entsprechende stufenweise Veränderung der Getriebe-Übersetzung 1/i erfolgen muß, wobei die o.g. Ideal-Linie oder besser Vorzugslinie als vorgegebene Leitlinie dienen kann zur Orientierung, wann eine Umschaltung zum nächsten Übersetzungsfestpunkt erfolgen soll.

In Fig.2b sind z.B. die maximal möglichen Motordrehzahl-Punkte PnMot angegeben. Im Drehzahlplan Fig.2c ist der Hydrostat-Drehzahl-Verlauf nHydrostat , die Antriebs-Drehzahl nAn sowie die Abtriebsdrehzahl nAb bezogen auf Konstantfahrt dargestellt. Die jeweils möglichen Übersetzungs-Festpunkte KB, KH und KD sind aus dem Drehzahlplan ersichtlich. Um eine optimale Aufteilung der Gesamtbremskraft FB in Motorbremskraft FBM und Hydrostat-Retarder-Bremskraft FBH zu erzielen, wie z.B. in einem Betriebsfall nach Fig.4n dargestellt, wird in der Bremsregel-Einrichtung oder im elektronischen Bremssystem (EBS) berechnet und entschieden in Abhängigkeit eines oder mehrerer Betriebs-Parameter oder -werte, welcher Übersetzungs-Festpunkt für den momentanen Bremszustand am geeignesten ist. Die Entscheidung daraus bewirkt eine entsprechende Ansteuerung des Übersetzungs-Festpunktes bzw. Veränderung vom einen zum anderen Übersetzungs-Festpunkt, z.B. von Punkt PB3/4 zu PH3 oder von Punkt PB4 zu PBH4 (s. Fig. 2b). Innerhalb dieser Veränderungsphase wird, wie an anderer Stelle genauer beschrieben, die Gesamt-Bremskraft FB durch automatischen Einsatz der Betriebsbremse BB überbrückt. Der Überbrückungszeitraum von einem zum anderen Übersetzungs-Festpunkt wird von der Hydrostat-Verstellzeit tsB bestimmt, die wie bekannt, kleiner 100 msc sein kann, so daß der oben genannte Überbrückungs-Bremsanteil über die Betriebsbremse nahezu bedeutungslos ist, d.h. daß je nach Bremssituation und Fahrzeugmasse die Betriebsbremse in vielen Einsatzfällen garnicht aktiviert werden muß. Innerhalb der genannten Umschaltphase von einem zum anderen Festpunkt erfolgt eine gleichzeitige automatische Absenkung des Hydrostat-Druckes, so daß ein weitgehend drehrnomentfreier Zustand der zu schließenden Kupplungselemente gegeben ist. Nach geschlossener neuer Kupplung bzw. Kupplungen des neuen Übersetzungs-Festpunktes erfolgt über die entsprechenden Signale für die Hydrostat-Verstellung und/oder dem Hydrostat-Druck eine automatische Anpassung der Bremsanteile FBH und FBM. Die genauen Parameter und Werte für die Festlegung des Gesamtprogrammes werden experimentell ermittelt.

Die Bremsanlage ist, wie bereits erwähnt, verschiedenartig ausführbar und kann, je nach Fahrzeugart, z.B. mit elektro-pneumatischer Bremsregelung mit vorgeschalteter elektronischer Steuerung und ähnlichem ausgeführt sein. Die bevorzugt als Zentral-Elektronik ausgeführte Regeleinrichtung kann hierbei, je nach Fahrzeugforderung, auch z.B. mit einer Fahrdynamik-Regelung (FDR) kombiniert bzw. erweitert werden. Dies bedeutet, daß das elektronische Bremssystem (EBS) eine funktionelle Koppelung des Hydrostat-Retarders mit ABS-Funktion, Antriebsschlupf-Regelung (ASR) und der FDR-Funktion beinhaltet. Aufgrund der sehr spontanen Reaktionsfähigkeit bzw. kurzen Ansprechzeit des Hydrostat-Retarders, dessen Funktion hier maßgebend durch ein elektronisch/elektrisch ansteuerbares Druckregel-Ventil bestimmt werden kann, ist eine spontane Ab-; Zu- und Ausschaltung des Hydrostat-Retarders möglich sowie eine ebenso schnell ansprechende und dosierbare Zu- und Abschaltung der ABS- und/oder FDR- oder ASR-Funktion (Antriebs-Schlupf-Regelung) realisierbar.

Die Mittel zur Realisierung der beschriebenen Funktionsabläufe der einzelnen Steuer- und Regeleinrichtungen sind bekannte Elemente bzw. Komponenten elektrischer, elektronischer elektro-pneumatischer, hydraulischer oder/und mechanischer oder anderer Art. Zur Erfassung und Weitergabe der einzelnen Signale und Signalgrößen dienen bekannte oder noch nicht bekannte Sensoren, z.B. als Drehzahl-Sensor, Verstellwinkel- bzw. Verstellweg-Sensor des Hydrostat-Getriebes, Druck-Sensoren, Temperatur-Sensor, ABS-Sensor usw.. Die Funktion der einzelnen Signal-Verarbeitungen ist bekannter Art und in ihren Einzelheiten nicht oder nur teilweise beschrieben.

Zur Optimierung des Geräuschverhaltens ist gemäß der Erfindung vorgesehen, wie in Fig. 4 angedeutet, den Bremsventilblock 201' mit dem Hydrostatgetriebe bzw. dem Hydrostat-Retarder 4c direkt zu verbinden bzw. zu verblocken, wobei das Hydrostat-Getriebe 4c selbst über geräusch- und schwingungsmindernde Elemente gegenüber dem Hauptgehäuse 1 gelagert ist. Die geräuschisolierende Hydrostat-Lagerung ist insbesondere in den Druckschriften DE 42 35 728 und DE 43 00 456 im einzelnen näher beschrieben. Der in den Zeichnungen nicht dargestellte Steuerblock, der u.a. die Magnetventile für die Kupplungssteuerung und weitere Einzelheiten beinhaltet, ist bevorzugt mit dem Hauptgehäuse 1 fest verbunden, wobei die Verbindungsleitungen zum Hydrostat-Getriebe 4c und dem Bremsventilblock 201' über bekannte Steckverbindungen erfolgt. Der Ölkühler 205' ist ebenfalls über Steckverbindungen 202' mit dem Bremsventilblock 201' verbunden. Die genannten Steckverbindungen für die entsprechenden Ölführungen besitzen an den Verbindungsstellen geräusch- und schwingungsmindernde Dichtungselemente.

Hydrodynamischer Retarder 78 bzw. 83c

Alternativ zu den beschriebenen Getriebe-Ausführungen mit hydrostatischem Retarder ist gem. der Erfindung auch ein hydrodynamischer Wandler inform eines Sekundär-Retarders oder Primär-Retarders anwendbar. Beide hydrodynamischen Retarder-Ausführungen sind gem. der Erfindung mit gleichen oder ähnlichen Steuer-Elementen bzw. Ansteuer-Signalen aktivierbar. Ein Ausführungsbeispiel gern. Fig. 2 sieht am Getriebe-Eingang einen hydrodynamischen Retarder 78 als Primär-Retarder vor. Der Rotor 81c dieses Retarders ist mit der Antriebswelle 1c verbunden. Der Stator 79 ist gehäusefest und bevorzugt im Getriebedeckel 61c untergebracht. Dieser Retarder wirkt als Primär-Retarder, wobei die Bremskräfte in direkter Abhängigkeit zur Getriebe-Übersetzung stehen, so daß auch im unteren Geschwindigkeitsbereich im Gegensatz zum Sekundär-Retarder die volle Bremswirkung zur Verfügung steht. Die Ansteuerung dieses Retarders erfolgt über pneumatische oder/und hydraulische Ventile, wobei die Steuer-Signale über die Elektronik in Abhängigkeit zu einem oder mehreren Betriebssignalen und den Eingabewerten des Fahrers wirksam sind. Diese, ansich bekannten Mittel, die zur Ausführung der genannten Signale dienen, sind in den Zeichnungen nicht dargestellt.

Gemäß der Erfindung ist der hydrodynamische Retarder (Primär-Retarder 78; Sekundär-Retarder 83c) bevorzugt als Dauerbrems-Einrichtung oder/und als Bremsunterstützung für die üblichen Betriebsbremsvorgänge ausgelegt, was unter anderem Aufgabe der Erfindung ist. Diese Aufgabe wird dadurch gelöst, daß die Steuer-Signale für die Ansteuerung des hydrodynamischen Retarders 78; 83c in Abhängigkeit zur Betätigung der Betriebsbremse stehen, d.h. daß bei Betätigen des Bremspedals eine gleichzeitige oder zeitlich versetzte oder nachfolgende, bevorzugt dosierte Ansteuerung des hydrodynamischen Retarders erfolgt. Diese Retarder-Ansteuerung wird neben dem Bremspedal-Signal zusätzlich von einem oder mehreren Betriebparametern beeinflußt. Einflußgrößen sind z.B. Bremsbetätigungsweg oder/und -betätigungskraft oder/und mit oder ohne Einfluß des Zeitparameters oder/und Temperatur-Signal oder/und Größe der Bremskraft, Temperatur-Signal u.a.. Zur Erfüllung der Aufgabe, den Verschleiß der Betriebsbremse auf ein Mindesmaß zu senken, sieht die Erfindung vor, die Retarder-Bremseinrichtung - Hydrostat-Retarder oder hydrodynamischer Retarder - mit einer Steuer- und Regeleinrichtung auszustatten, die für die Betriebsbremsung ein vorgegebenes Programm beinhaltet, welches vorsieht, daß eine automatische, bevorzugt gezielt dosierte Zuschaltung des Retarders 78; 83c; 201 , wie oben erwähnt, bewirkt. Das genannte Bremsprogramm kann hierbei, wie z.B. in Fig. 4a und weiteren Figuren dargestellt, eine allmähliche Zunahme der Retarder-Bremskraft FBH bei entsprechender Verringerung der Betriebsbremskraft FBB und bei gleichbleibender Betätigungskraft bewirken, wobei die Betätigungskräft zumindest annähernd der Gesamtbremskraft FB entspricht. Für die hydrodynamische Bremsanlage gelten somit gem der Erfindung weitgehend die gleichen Funktionen bzw. Wirkungs-Charakteristiken wie in den Figuren 4a bis 4e und 4i bis 4q aufgezeigt und an früherer Stelle in Zusammenhang mit dem Hydrostat-Retarder beschrieben. Hierbei ist die Hydrostat-Retarder-Bremskraft FBH gleichzusetzen mit der hydrodynamischen Retarder-Bremskraft, wobei jedoch zu unterscheiden ist, daß der hydrodynamische Retarder zumindest in einigen Funktionsabläufen langsamer reagiert abhängig von der Befüllungszeit der Beschaufelung.

Mit dem Ziel den Verschleiß der Betriebsbremse auf ein Mindestmaß zu senken, sieht die Erfindung, wie bereits an früherer Stelle beschrieben, vor, daß außer der Erfüllung der Aufgabe des Dauerbremsbetriebes eine automatische Zuschaltung des Retarders auch in Betriebsbrems-Situationen erfolgt. Hierbei ist vorgesehen, die Zuschalt-Automatik so zu programmieren, daß die Retarder-Zuschaltung nach einem vorgegebenen Programm, insbesondere in Abhängigkeit eines Zeitparameters, ausgelöst wird. Dies heißt daß z.B. die Zuschaltung erst nach einer zeitlich gleichbleibenden Bremskraft oder/und Bremsbetätigungskraft oder/und einer gewissen Kontinuität in den Breniskraft-Signalen gegeben ist. Um stoßfreies und sicheres Breinsverhalten zu gewährleisten, schaltet sich die Retarderbremskraft nicht stoßartig sondern nach einem weichen vorprogrammierten Verlauf zu, wie in Fig. 4a bis 4q dargestellt oder übernimmt allmählich die volle Bremskraft. Beim Hydrostat-Retarder kann die Zuschaltung und der Bremsanstieg schneller erfolgen als beim hydrodynamischen Retarder, da die Bremskraft vom spontan regelbaren Hydrostat-Druck bestimmt werden kann und nicht wie beim hydrodynamischen Retarder von der Füllungsgeschwindigkeit der Beschaufelung dieser bekannten Bremsanlage abhängig ist. Die hohe Spontanität bzw. kurze Ansprechzeiten des hydrostatischen Retarders sind als besonderer Vorteil u.a. gegenüber dem hydrodynamischen Retarder anzusehen. Die Zuschalt-Automatik für die jeweilige Retarder-Anlage kann aufgrund ihrer charakteristischen Unterschiede auch entsprechend unterschiedlich programmiert werden, wobei der hydrostatische Retarder auch als reine Betriebsbremse wirken kann, insbesondere dann, wenn eine Bremsung an einem Übersetzungsfestpunkt oder in der Nähe eines Übersetzungsfestpunktes ausgelöst wird. Das Bremspedal bewirkt beim Hydrostat-Retarder eine sehr schnelle Hydrostat-Verstellung oder/und eine entsprechende Hydrostat-Druckveränderung über das betreffende Druckregel-Ventil 114c; 204 (Fig. 2 bzw. Fig. 4).

Bei stufenlosen hydrostatisch-mechanischen Verzweigungsgetrieben ist es charakteristisch, daß nach jedem Bereichswechsel bzw. nach jeder Bereichsschaltung sich die Hydrostateinheiten A und B in ihrer Funktion als Pumpe und Motor vertauschen. Der lastabhängige Drehzahlschlupf des Hydrostatgetriebes bzw. der mit der Hydrostateinheit B verbundenen Well 5 hat nach jeder Bereichsschaltung umgekehrte Answirkung, die durch die Verstelleinrichtung innerhalb der Schaltphase korrigiert werden muß, um eine ruckfreie Schaltung zu gewährleisten.

Aufgabe der Erfindung ist es u.a., eine Schalteinrichtung, bevorzugt für automatisch schaltbare Getriebe, insbesondere für stufenlose Verzweigungsgetriebe oben genannter Art mit formschlüssigen Kupplungen mit oder ohne Abweisverzahnung oder Reibkupplungen mit Konus-Reibflächen, wie aus DE 41 62 650 bekannt, oder auch mit bekannten Lamellenkupplungen zu schaffen, die hohe Schaltqualität ohne Lastunterbrechung gewährleistet.

Die Lecköölverluste des Hydrostatgetriebes bewirken, wie eingangs erwähnt, einen zwangsläufigen Drehzahlschlupf einer Hydrostat-welle 7c. Dieser Drehzahlschlupf wirkt sich in Verbindung mit einem stufenlosen Leistungsverzweigungsgetriebe mit mehreren Fahrbereichen innerhalb der Bereichsschaltung, wie in Figur 7 dargestellt, so aus, daß zum Beispiel bei Zugbetrieb zum Erreichen des Synchronzustandes der zu schaltenden Kupplungs-glieder die Verstellgröße V alt um das Maß X am Schaltpunkt größer sein muß als der theoretische Wert, um am Schaltpunkt S den Synchronpunkt der zu schaltenden Kupplungsglieder zu erreichen. Die Verstellgröße bzw. das maximale Versteilvolumen ist bei der Getriebeauslegung entsprechend groß zu dimensionieren. Aufgrund der erwähnten Funktionsumkehrung von Pumpe zu Motor und umgekehrt nach erfolgter Schaltung in den nächsten Schaltbereich, wirkt sich der Drehzahlschlupf ebenfalls umgekehrt aus, was einer Verstellkorrekturgröße um das Maß Z und damit der Verstellgröße V neu entspricht, wonach das Drehmoment von der alten auf die neue Kupplung erfolgt ist und das Öffnungssignal für die alte Kupplung ausgelöst wird. In der Rege] haben die Korrekturgrößen X und Y unterschiedliche Größen, bedingt durch die jeweilige Getriebeauslegung und Bereichsgrößen entsprechend den unterschiedlichen Größen der Hydrostatdrücke $\Delta p1$ und $\Delta p2$ bzw. $\Delta p$ alt und $\Delta p$ neu am Ende des alten und Beginn des neuen Schaltbereiches. Innerhalb der Schaltphase ist das Hydrostatgetriebe in seiner Verstellung in Abhängigkeit zum Lastzustand um das Korrekturmaß $X + Y = Z$ zu korrigieren. Nach einem, wie in Figur 7 dargestellten Schaltbeispiel, wobei B1 Bereich 1 und B2 Bereich 2 bedeutet, ist der Funktionsablauf in eingangs angeführten Druckschriften näher beschrieben.

In einer Ausführungsform wird die Verstellkorrektur zur Schaltoptimierung über Betriebswerte des Antriebsmotors M gesteuert/geregelt. Bestimmend für die Größe der Verstellkorrektur X; Y; Z ist das jeweilige bzw. momentane Antriebs-drehmoment Tan des Getriebes bzw. das Motordrehmoment Tmot . Der Schließ-vorgang der neuen Kupplung nach Ende des alten Schaltbereiches erfolgt wie bei allen vorgenannten Lösungen im Synchronzustand der Kupplungsglieder der neuen Kupplung, wobei bevorzugt zwei oder mehrere Drehzahlsensoren durch Vergleich der Drehzahlen von wenigstens zwei Getriebegliedern den Synchronzustand ermitteln und den Schaltimpuls für die neue Kupplung auslösen. Das momentane Antriebsdrehmoment des Getriebes bzw. Motordrehmoment Tan bestimmt die Belastungsgröße des Hydrostatgetriebes und den entsprechenden Drehzahlschlupf von Hydromotor/ - pumpe und somit auch die Größe der jeweils erforderlichen Verstellkorrektur innerhalb beider geschlossener Kupplungen. Jedem Antriebsdrehmoment ist somit auch eine bestimmte Verstellgröße bzw. Verdrängungsvolumen Vneu zugeordnet, die dem drehmomentfreien Zustand der alten Kupplung entspricht, wonach das Öffnungssingal für diese Kupplung ausgelöst wird. Drehmomentveränderungen innerhalb der Schaltphase, wobei beide Kupplungen geschlossen sind werden bei dieser Korrektur-Einrichtung automatisch berücksichtigt, da immer das momentane Antriebsdrehmoment Tan bzw. Motordrehmoment Tmot das Öffnungssignal der alten Kupplung bestimmt bzw. über entsprechende, daraus resultierende Signale zum Öffnen der alten Kupplung auslöst. Unabhängig davon, ob es sich um eine Zughochschaltung, Zugrückschaltung, Schubhochschaltung oder Schubrückschaltung handelt, erkennt das System den jeweils günstigsten Öffnungspunkt bzw. das neue Verstellvolumen Vneu zum Auslösen des Öffnungssignals der alten Kupplung. Die Erkennung in der Regeleinrichtung, ob Schub- oder Zugbetrieb erfolgt durch Motorkenngrößen bzw. -belastungsgrößen/ -signale, gegebenenfalls auch äußere Einflußgrößen, wobei bei Zugbetrieb jedem Motor-drehmoment Tmot und Motordrehzahl n mot eine bestimmte Ansteuergröße wie Drosselklappenstellung; Fahr- bzw. Gaspedalstellung, Fahrpedaländerungs-geschwindigkeit, Temperatur, gegebenenfalls auch Luftdruck u.a. zugeordnet ist. Zum Beispiel kann bei plötzlichem Loßlassen des Gaspedals/Fahrpedals innerhalb der Schaltphase das sofortige Öffnungssignal bei Vth erteilt werden, weil das Antriebsdrehmoment bzw. das Motordrehmoment sofort auf Null abfällt oder gar negatives Drehmoment annimmt, trotzdem bei Schaltbeginn Valt und Korrekturgröße X Maximalgröße hatten.

Bei Schubbetrieb erkennt das System ebenfalls den jeweiligen Betriebszustand dadurch, daß bei Schubmoment der Motor entsprechend hochgetourt wird und je nach Drehzahlgröße entsprechend Signal b ein entsprechendes Bremsmoment bzw. negatives Motordrehmoment oder Schubmomentgröße erkannt wird und aus den entsprechenden Signalgrößen b, a bzw. Bremssignal f Drehmomentgröße Tmot ; Tan und Drehmomentrichtung ermittelt und daraus die Schalt-Korrekturgröße und -Korrektur-Richtung und Vneu zum Öffnen der alten Kupplung festlegt und signalisiert. Bei Schubbetrieb findet eine Umkehrung der Korrekturgrößen und Korrekturrichtungen statt, wobei bei Hochschaltung das Verdrängungsvolumen bzw. die Stellgröße Valt kleiner als Vneu und bei Rüchschaltung Valt größer als Vneu ist. Dies entspricht dem allgemeinen charakteristischen Schaltkorrekturverhalten bei derartigen hydrostatischmechanischen, aber auch reinmechanischen Leistungsver-zweigungsgetrieben.

Wie an früherer Stelle bereits erläutert, können die Drehzahlschlupfgrößen des Hydrostatgetriebes vor und nach der Bereichsschaltung bei gleichem An- und Abtriebsdrehmoment an jeder Bereichsschaltstelle (Hochschaltungen 1/2; 2/3; 3/4 bzw. Rückschaltungen 4/3; 3/2; 2/1 ) je nach Getriebeauslegung und Bereichsaufteilung sehr unterschiedlich sein. Entsprechend unterschiedlich sind die Korrekturgrößen-verhältnisse X zu Y . Dementsprechend sind im Steuer- und Regelungssystem die Korrekturgrößen bzw. Korrekturgrößenverhältnsse X zu Y einprogrammiert, d.h. es ist jedem Antriebsdrehmoment grundsätzlich für jede Bereichsschaltstelle eine eigene Stellgröße bzw. Verdrängungsvolumengröße Vneu zugeordnet und vorprogrammiert, die in Abhängigkeit sich innerhalb der Schaltphase verändernden Lastverhältnisse und anderen Faktoren korrigierbar sind, so daß in allen Betriebszuständen eine schaltstoßfreie Bereichsschaltung gewährleistet ist.

Je nach Art der Motorregelung, ob Leistungs- oder Drehzahlregelung, z.B. RQ, RQV oder andere Regelungsart sind in der Steuer- und Regelungseinrichtung, die jeweils für die Ermittlung des Motordrehmomentes geeigneten Signalgrößen in der Fahrregelung bzw. Steuer- und Regeleinrichtung einprogrammiert. So ist z.B. bei einer RQ-Regelung jeder Drosselklappen- bzw. Fahrpedalstellung und jeweils gegebener Motordrehzahl ein bestimmtes Motordrehmoment zugeordnet, so daß Drosselklappen- bzw. Fahrpedal-Stellungssignal und Motordrehzahlsignal eine Aussage für das jeweilige Motordrehmoment geben, wonach das neue Verdrängungsvolumen bzw. die Verstellgröße Vneu ermittelt und daraus das Öffnungssignal für die alte Kupplung eingeleitet werden kann. Bei RQV-Regelung entspricht jede Gaspedal- bzw. Fahrpedalstellung einer vorgegebenen Motordrehzahlgröße unabhängig vom Motordrehmoment. Bei dieser Regelungsart ist es also erforderlich, zur Ermittlung des Motordrehmomentes ein entsprechendes Signal, das dem Füllungsgrad der Kraftstoff-Einspritzung oder einer ähnlichen Signalgröße, die für die Drehmomentermittlung geeignet ist, zu verwenden.

Bei dieser Korrektur-Variante ist es im Gegensatz zur, an früherer Stelle beschriebenen Variante nicht erforderlich, die Verstell-Korrekturgröße Z aus einem Hydrostat-drucksignal oder einer vor Schaltbeginn gegebenen Korrekturgröße X bzw. Valt zu ermitteln bzw. zu errechnen, sondern das Öffnungssignal kann immer aus dem momentan wirksamen Antriebsdrehmoment Tmot bzw. Tan ermittelt werden. Für eine genaue Realisierung und Signalgebung der neuen Stellgröße bzw. Vneu sorgt in der Regel ein entsprechender Verstellweggeber bzw. Sensor, der den Verstellwinkel oder Verstellweg des Hydrostatgetriebes signalisiert.

Für die Verstellgrößen- bzw. Verdrängungsvolumenmessung kann alternativ auch die bekannte Verstelldruck- oder elektrische Verstellstromgröße benutzt werden, sofern diese für die Ermittlung des korrekten Öffnungssignals für die alte Kupplung geeignet sind..

Ein Drucksensor zur Erfassung des jeweiligen Hydrostatdruckes ist bei dieser Korrektur-Variante nicht erforderlich.

Alle in dieser Patentanmeldung beschriebenen Schaltkorrektur-Einrichtungen sind sowohl für hydrostatisch-mechanische als auch rein-mechanische Leistungsverzweigungsgetriebe anwendbar. Bei einem mechanischen Leistungsverzweigungsgetriebe gelten für die Korrekturverhältnisse X und Y die jeweiligen Drehmomentverhältnisse am stufenlosen Wandler, wobei die Drehmomentverhältnisse gleich den Druckverhältnissen der Arbeitsdrücke des Hydrostatgetriebes entsprechen.

Eine weitere Form der Korrektur-Variante für die Bereichsschaltung bzw. Festpunktschaltung sieht vor, daß für das Öffnungssignal zum Öffnen der alten Kupplung Vneu aus Valt bestimmt wird, wobei nach bereits bestimmtem Vneu bei Eintreten von Laständerungen bzw. Änderungen von Betriebssignalen während der Schaltphase der bereits festgelegte Wert für Vneu vor Auslösen des Öffnungssignals korrigiert wird. Dies bedeutet, daß innerhalb der Schaltphase auftretende Lastveränderungen, z.B. durch Änderung der Fahrpedal- bzw. Gaspedal-Stellung oder durch Fahrbahn-Beschaffenheit bedingte Laständerungen oder andere Betriebsveränderungen mögliche Schaltstöße vermieden werden. Als Änderungssignal hierfür kann also das Fahr- bzw. Gaspedal-Signal sein, das beispielsweise durch Veränderung der Pedalstellung eine entsprechende Beeinflußung und Korrektur auf die Hydrostatverstellung bzw. auf das bereits ermittelte Vneu bewirkt. Z.B. kann ein plötzliches Gaswegnehmen eine spontane Lastveränderung von Zugbetrieb auf Schubbetrieb bewirken. Zur Ermittlung der Grundwerte für Vneu kann, wie beschrieben, der Differenzwert zwischen Vtheoretisch und Valt oder ein Programm vorgesehen sein, welches ohne Zuhilfenahme von Vtheoretisch auskommt, indem vornehmlich aus experimenteller Ermittlung jedem Valt das entsprechende Vneu zugeordnet ist.

Wie eingangs beschrieben, können die Verstellwerte des Hydrostatgetriebes über ein ansich bekanntes Potentiometer, das den Verstellwinkel oder den Verstellweg definiert, erfaßt werden, wobei ein proportionaler Strom den Verstellwinkel bzw. das Verstellvolumen des Hydrostatgetriebes bestimmt oder über eine Stromgröße, die ebenfalls ein Maß für den Verstellwinkel bzw. den Verstellweg des Hydrostatgetriebes angibt, realisiert werden. Die einzelnen Bereichskupplungen bzw. Kupplungen für die Festpunktschaltung werden zweckmäßigerweise über bekannte Elektromagnetventile 61; 62; 63; 64 oder über mit Rückschlag-Sperrfunktion ausgebildete Magnetventile 64[** WARNING! FF 4.1 **] angesteuert. Für die Hydrostatregelung dient vornehmlich ein Proportionalventil 3 , das verschiedenartig in bekannter Weise ausführbar ist. Für die Hydrostat-Verstelleinrichtung kann auch ein Stellsensor bzw. Weggeber mit Rückkoppelung nach bekannter Art eingesetzt werden. Für den Drehzahlvergleich zur Ermittlung des Synchronzustandes für die Bereichsschaltung werden wenigstens zwei Drehzahlsensoren Sa; Sb; Sc; Sd; Se; Sf (siehe Fig. 8) verwendet. Die Drehzahlsensoren können direkt oder indirekt, z.B. durch zwischengeschaltete Stirnradstufen in Verbindung oder Wirkverbindung mit den beiden Hydrostateinheiten A und B stehen. Das Getriebe besitzt mehrere Sensoren wie in Fig. 8 dargestellt. Die Getriebe-Eingangsdrehzahl wird über den Drehzahlsensor Sc und die Ausgangsdrehzahl über den Sensor Sd gemessen, welche auch zur Ermittlung der in allen Betriebspunkten gegebenen Getriebeübersetzung dienen. Die Sensoren Sa und Sb oder Sa und Sc sind bevorzugt zur Ermittlung des Synchronzustandes bzw. -bereiches der zu schaltenden Bereichskupplungen geeignet. Die weiteren Sensoren Sf und Se zeigen die jeweilige Drehzahl verschiedener Getriebeglieder auf. Zur Aufrechterhaltung ausreichender Funktionssicherheit auch bei Ausfall eines Drehzahlsensors können außer den genannten Sensoren Sa und Sb bzw. Sa und Sc ersatzweise die Drehzahlsignale b für die Antriebsdrehzahl aus dem Sensor Sc und das Abtriebsdrehzahl-Signal d aus dem Sensor Sd sowie die Sensoren für die Getriebeglieder Sf und Se benutzt werden. Bei Ausfall eines Sensors wird automatisch einer oder mehrere der genannten Ersatz-Sensoren zur Ermittlung des jeweiligen Synchronzustandes wirksam. Der Ausfall eines Sensors wird dem Fahrer durch entsprechendes Signal optisch oder/und akustisch angezeigt zur alsbaldigen Schadensbehebung. Grundsätzlich wären nur zwei Sensoren zur Erfüllung der Grundfunktionen ausreichend, wobei die Information, welcher Bereich und das Verstellsignal für die Ermittlung der Übersetzung erforderlich ist.

Um ein sicheres und schnelles Ineinandergreifen und Schließen der formschlüssig ausgebildeten Kupplung zu gewährleisten, ist vorgesehen, daß beim Kupplungseinrücken eine kurzzeitige Verstelländerung und Drehzahländerung eines der Kupplungsglieder der neuen Kupplung in wenigstens eine der beiden Verstellrichtungen ausgelöst wird, um bei Zahn-auf-Zahn-Stellung eine geringfügige gegenseitige Verdrehung beider Kupplungsringe bzw. beider Kupplungshälften zu bewirken, so daß in jedem Schaltvorgang ein sicheres Einrasten gewährleistet ist. Die genannte Verstelländerung kann eine einmalige oder mehrmalige Hoch- oder/und Rückstellung des Verstellorganes innerhalb des Synchronbereiches sein, was eine entsprechende Veränderung des Verstellstromes bzw. des Verstellsignales des Hydrostatgetriebes bewirkt. Um eine möglichst effektive Wirksamkeit dieser Funktion sicherzustellen, wird eine direkte Gegensteuerung in die eine und möglicherweise darauf folgend in die andere Verstellrichtung durch bevorzugt stoßartige Verstell-Impulse erzeugt, wodurch, je nach Ausführungsart und Erfordernis u.a. ein „Rütteleffekt" entstehen kann. Ein gezielter Funktionsablauf sieht vor, daß dieser Schalteffekt bzw. diese Schalthilfe-Einrichtung erst aktiviert nachdem nach angesteuerter neuer Kupplung bereits eine Druckrückmeldung des Druckkolbens über eine entsprechende Rückmelde-Leitung 57; 58; 59 in die Steuer- und Regeleinrichtung 5 erfolgt ist. Eine weitere Variante sieht vor, daß der genannte Schalteffekt nach einer definierten Zeitspanne, z.B. von zwanzig Millisekunden, nach Auslösen des Einschaltimpulses für die neue Kupplung ausgelöst wird und über eine festgelegte, insbesondere experimentell ermittelte Zeitspanne anhält. Die genannte Zeitspanne kann ein konstanter oder von einem oder mehreren Betriebswerten abhängiger Wert, z.B. der Öltemperatur, sein. In der Regel ist ein einmaliger Verstellimpuls in eine Verstellrichtung, der als Störimpuls bezogen auf den Synchronzustand wirkt, ausreichend. Die optimale Wirksamkeit dieser Schaltfunktion kann experimentell ermittelt werden. Nachdem der Funktionsablauf dieser Schalthilfe bei weitgehend drehmomtnetfreiem Zustand der neu zu schaltenden Kupplung abläuft, ist keine negative Beeinflußung der Schaltqualität gegeben. Diese vorbeschriebene Schalthilfe eigenet sich besonders für formschlüssige Kupplungen mit oder ohne Abweisverzahnung wie eingangs bereits beschrieben und in den Druckschriften DE-A-41 26 650 A1 bzw. der PCT-Anmeldung DE 88/00 563 näher beschrieben.

Das für die Übersetzungs-Rückregelung wirksame Bremssignal f kann in Abhängigkeit zur Bremsbetätigungskraft oder/und in mehr oder weniger großer Abhängigkeit zur Motordrehzahl stehen, wobei vorzugsweise im unteren Geschwindigkeitsbereich und Anfahrbereich, z.B. beim Loslassen der Bremse der Bremsanteil über die Betriebsbremse sehr gering oder nahezu Null sein kann. Das Bremssignal f kann also je nach Art des Fahrzeuges entsprechend einer bestimmten Bremskennlinie eine feste oder variabel zu verschiedenen Betriebsparametern sich veränderbare Kennlinie darstellen.

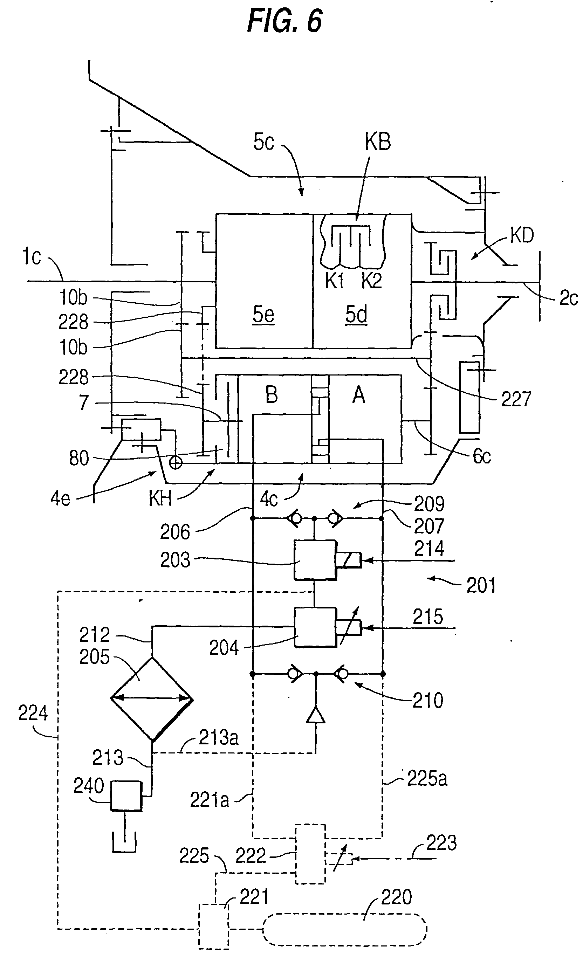

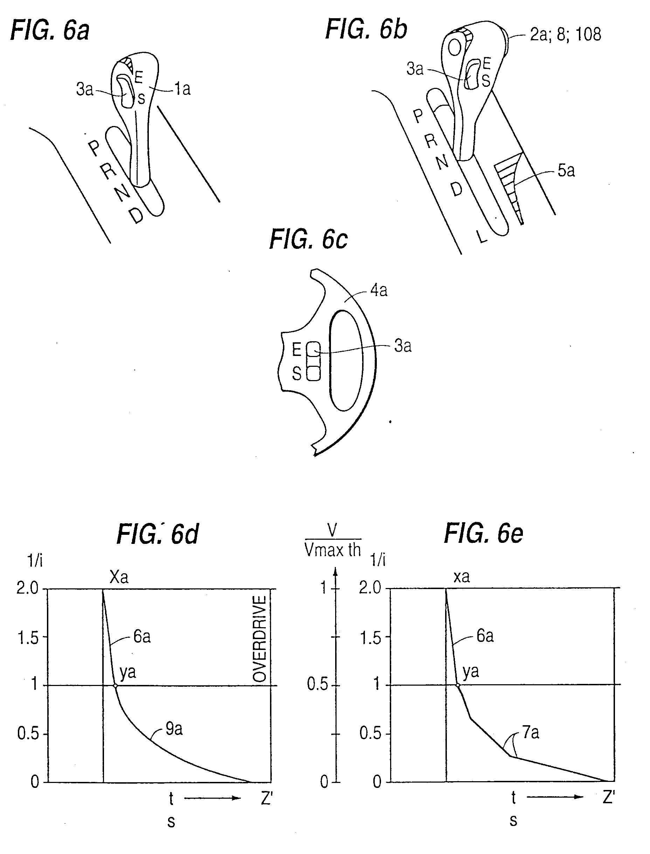

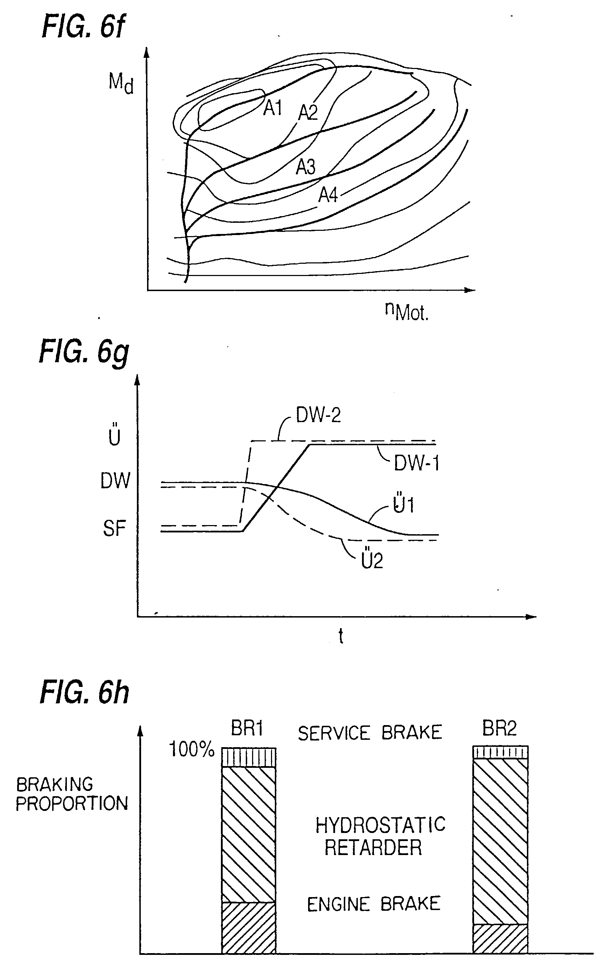

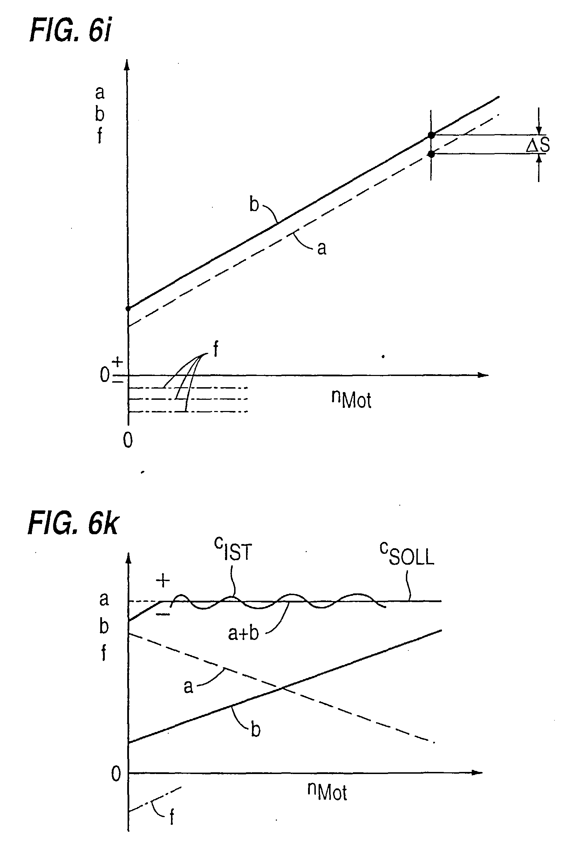

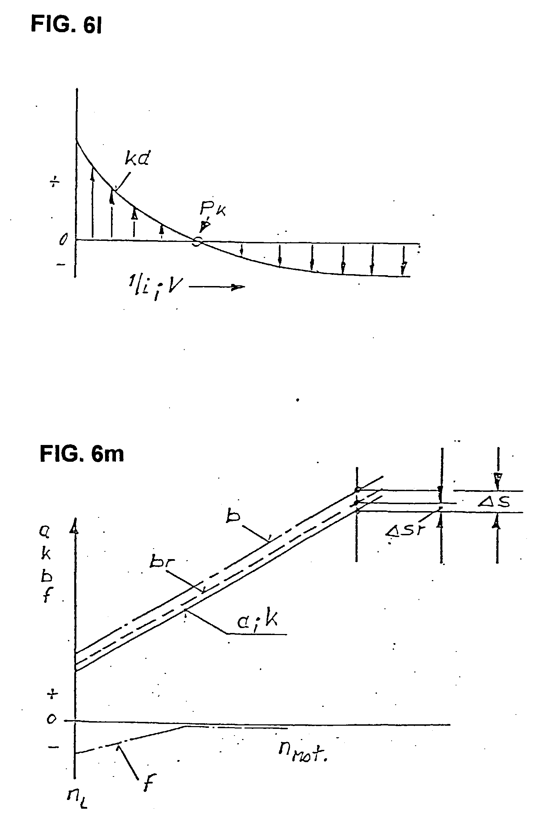

Auch die Bremssignale 113; 217; 215 der Brems-, Steuer- und Regeleinrichtung für die Retarder-Bremsanlage, bevorzugt Hydrostat-Retarder, nach Fig. 2; 4; 5; 6, oder einen Retarder bekannter Art, können vorteilhaft mittelbar oder unmittelbar mit dem Bremssignal f in Wirkverbindung gebracht werden oder als Bremssignal f wirksam sein.

Eine Verbesserung der Bereichsschaltung innerhalb des Brems- oder/und Schubbetriebes wird erzielt durch die Kombination der getriebeseitigen Abbremsung über den Einfluß des Bremssignals auf die Getriebeübersetzung und das Zusammenwirken mit dem beschriebenen Bypaßventil. Durch den Einfluß des Brems-signals wird die Motordrehzahl angehoben aufgrund der entsprechenden Übersetzungsänderung des Getriebes, wodurch gleichzeitig die Spontanität der Schaltabläufe und der Verstellgeschwindigkeiten positiv beeinflußt wird, da durch höhere Drehzahl Steuerdrücke und Steuerölmenge, sowohl für die Hydrostatverstellung als auch für die Kupplungs-Schaltelemente verbessert wird. Durch das Zusammenwirken von Bremssignal, Übersetzungssignal oder/und Motordrehzahsignal oder/und gegebenenfalls einem automatischen Füllungs- bzw. Drosselklappen-Stellungssignal und gegebenenfalls weiteren Betriebssignalen wird eine harmonische komfortable Bereichsschaltung, auch in extremen Brems- und Schubsituationen erzielt. Hierzu werden die Bremsanteile automatisch über die normale Betriebsbremsanlage und die Getriebebremse derart dosiert, daß ein Gegeneinanderwirken von Getriebe- und Betriebsbremse verhindert wird, indem eine entsprechend angepaßte Dosierung von Betriebsbremse und Getriebe- bzw. Retarder-Bremsanlage durch Wirkverbindungen vorgenannter Signale erzielt wird. Der Motorbremsanteil wird hierbei so dosiert, daß das Motorgeräusch in akzeptablem Rahmen gehalten bleibt. Zum Beispiel bei sehr niedrigen Fahrgeschwindigkeiten kann die Motorbremsleistung trotz relativ hoher Bremskraft sehr niedrig sein, wobei sinnvollerweise eine entsprechende Motor-drehzahlführung in Abhängigkeit auch zur Fahrgeschwindigkeit oder/und der Getriebeübersetzung oder/und der Bremsgröße vorprogrammiert werden kann. Dies ist schon deshalb vorteilhaft, da bei niedriger Geschwindigkeit der vom Motor abzustützende Getriebe-Bremsanteil auch bei niedriger Motordrehzahl relativ groß ist aufgrund der entsprechend großen Getriebeübersetzung. Die Erfindung sieht dafür vor, eine Motor-Drehzahl-Absenkung mit bevorzugt kontinuierlichem Verlauf mit der Fahrzeugverzögerung bzw. mit fallender Fahrgeschwindigkeit innerhalb des Bremsbetriebes vorzuprogrammieren.

Die Erfindung sieht desweiteren eine Verbesserung der Wende- bzw. Shuttle-Betriebseinrichtung mit IFA-Pedal, wie aus den Druckschriften WO 96/02400, DE 195 42 993, DE 196 41 723 u.a. bekannt, die Bestandteil dieser Erfindung sind, vor. Die Funktion des IFA-Pedals kann in dieser verbesserten bzw. weiteren Ausführungs-Alternative wie folgt ablaufen: Nach Loslassen des IFA-Pedals wird automatisch ein Motoransteuer-Signal ausgelöst, um die Motordrehzahl anzuheben, z.B. wie in der Drehzahllinie nMotIII gem. Fig. 8ab und 8ac. Gleichzeitig erfolgt eine Übersetzungs-Änderung, um das Fahrzeug in Bewegung zu setzen. Je nach Größe des IFA-Pedal-Weges bzw. Lüftweges s-IFA oder abnehmender Pedal-Kraft des IFA-Pedals F-IFA stellt sich eine vorgegebene Fahrgeschwindigkeit v; bzw. Abtriebsdrehzahl nAb ein. Die Motordrehzahl nMot kann je nach Fahrwiderstand bezogen auf die Fahrgeschwindigkeit unterschiedlich groß sein wie in Fig. 8ab dargestellt. Bei Anwendung ähnlich einer RQV-Regelung, die weitgehend einer Konstant-Motorregelung entspricht, kann aber auch eine konstante Motordrehzahl vorgegeben werden, wobei entsprechend dem Widerstand eine unterschiedlich große Motorfüllung ausgelöst wird. Bei einer Motorregelung entsprechend einer RQ-Regelung, deren Leistung weitgehend durch die Motordrehzahl bestimmt wird, stellt sich, wie bereits erwähnt, unterschiedlich große Motordrehzahl, z.B. zwischen zwei vorgegebene Motordrehzahl-Linien I und II ein. Bestimmend für die jeweilige Motordrehzahl ist die bei der jeweiligen Fahrgeschwindigkeit erforderliche Antriebsleistung, die je nach den Betriebsverhältnissen unterschiedlich groß sein kann. Das IFA-Pedal ist ähnlich einem umgekehrten Gaspedal, wobei der Pedal-Lüftweg s oder/und die umgekehrte Pedalkraft F-IFA die Größe des Motoransteuer-Signals bestimmen. Einen zusätzlichen Einfluß des Motoransteuer-Signals bildet der jeweils gegebene Fahrwiderstand, der sich durch eine Motordrückung auswirkt und dadurch entsprechend seiner Größe zu einer weiteren Anhebung der Motordrehzahl beiträgt. Als Regel-Funktion dient vorzugsweise ein Soll/Ist-Wertvergleich der Abtriebsdrehzahl nAb , woraus das Signal zur Anhebung bzw. Anpassung des Motoransteuer-Signals gebildet wird. Die Regeleinrichtung ist zu diesem Zweck so programmiert, daß bei einer Abweichung der Abtriebsdrehzahl nAb von z.B. 5 % automatisch eine Anpassung des Motoransteuer-Signals zur entsprechenden Anpassung der Motorleistung ausgelöst wird. Je nach Fahrzeugart und deren Anforderung bezüglich der Genauigkeit der Stellung des IFA-Pedals und der vorgegebenen Abtriebsdrehzahl-Größe kann eine mehr oder weniger große Abweichung der Istwert-Linie von der Sollwert-Linie der Abtriebsdrehzahl nAb bzw. v für die Verstell-Regelung vorgegeben werden. Die Regelgrößen „nAb-Soll, nAbIst" sind vorzugsweise experimentell zu ermitteln, wobei ein unterschiedliches Verhältnis über den IFA-Pedalweg s-IFA bzw. der Pedalkraft F-IFA realisierbar ist.

In Verbindung mit einer elektronischen Motorregelung ist es sinnvoll, eine kombinierte Motor-Regelungsart zu verwenden, die z.B. im Anfahrbereich ähnlich einer RQV- und bei höherer Geschwindigkeit ähnlich einer RQ-Regelung ist.

Die eingangs beschriebene Bremseinrichtung über die Hydrostat-Bremsanlage kann vorteilhaft über die Signale des ABS-Systems angesteuert werden. Ein auftretendes Schlupf-Signal bzw. ABS-Signal kann innerhalb des Bremsbetriebes eine automatische Ansteuerung des Bypaß-Ventils 114c; 216; oder/und eine Rückstellung der Hydrostat-Verstellung bewirken, wodurch automatisch durch Einfluß dieses bzw. dieser Signale ein lastloser Zustand bzw. drehmomentfreier oder ein entsprechend drehmoment-reduzierter Zustand hergestellt wird. Das Bypaß-Ventil 216 wird hierbei auf einen entsprechend veränderten bzw. verringerten Hydrostat-Druck eingeregelt. Die Bremskraft über das Getriebe bzw. der Bremsretarder oder Hydrostat-Retarder kann hierbei der Größe des ABS-Signals entsprechen.

Die Erfindung sieht desweiteren für die Bereichsschaltungen sowohl für Hoch- als auch für Rückschaltung, Zug- oder Schubschaltung in Kombination der bereits beschriebenen Schaltkorrektur oder/und als Alternative dazu eine Schaltkorrektur-Einrichtung vor, wonach, wie in Fig. 7c dargestellt, die Schaltkorrektur-Größe Z über eine Verstellkorrektur-Zeit tk ermittelt wird. Die Verstellkorrektur-Zeit tk bestimmt im Schaltzeitpunkt bzw.in der Schaltphase in Abhängigkeit zur Verstell-geschwindigkeit die Größe des Korrektur-Wertes bzw. -weges Z. Bestimmend dafür ist somit der Steuerstrom bzw. das Fördervolumen Qk .Der effektive Steuerstrom Qk wird durch verschiedene im Schaltzeitpunkt wirksame Größen wie Speisepumpen-Fördervolumen, Drehzahl, Steuerdruck (konstant oder variabel), innere Drosseleffekte, Öltemperatur u.a. bestimmt bzw. mitbeeinflußt. Die Größe der Verstellgeschwindigkeit bzw. des Verstellstroms Qk kann experimentell ermittelt werden in weiterer Abhängigkeit zu den verschiedenen Betriebszuständen, - Motordrehzahl, Motoransteuer-Signale wie Drosselklappenstellung, Gaspedalstellung, Öltemperatur u.a..- Aus diesen vorgenannten Werten erkennt die Regeleinrichtung bzw. die Elektronik welche Verstellkorrektur-Zeit in welchem Betriebszustand für die Ermittlung der jeweiligen Korrektur-Größe bzw. des neuen Verdrängungsvolumens Vneu erforderlich ist. Für eine genaue Ermittlung der Korrekturzeit tk wird auch die Temperatur, insbesondere Öltemperatur, Öl-Viskosität und gegebenenfalls weitere den Volumenstrom der Verstelleinrichtungen, Leckö/veränderungen und die Schaltzeit beeinflussende Faktoren mit berücksichtigt durch entsprechende Signal-Verarbeitung in der Regeleinrichtung. Auch bekannte Leckö/veränderungen in Abhängigkeit zur Betriebszeit oder/und Belastungsart und -größe können im Programm vorgegeben werden, wodurch eine entsprechend angepaßte Vergrößerung bzw. Veränderung der Korrektur (Z; tk) realisiert wird.

In der Steuer- und Regeleinrichtung bzw. Elektronik wird gemäß der Erfindung desweiteren eine automatische Änderung und Anpassung vorgegebener Werte, die insbesondere von Betriebsdauer oder/und Einsatzart abhängig sind, realisiert. Die genannte Anpassung kann auf verschiedene Weise verwirklicht werden, z.B. derart, daß Fehlfunktionen oder Störfunktionen in der Regeleinrichtung bzw. Elektronik erkannt werden, woraus z.B. ein aus einem Stoß resultierendes Signal bzw. Störsignal bewirkt, daß eine Veränderung eines oder mehrerer vorgegebener Größen oder Festwerte stattfindet, so daß trotz sich verändernder Betriebswerte, z.B. die Leckö/menge, die Korrekturgrößen tk; Z derart angepaßt werden, daß gute Schaltqualität erhalten bleibt oder diese verbessert wird. Auslösendes Signal für diese Korrektur bzw. innere Korrektur von bevorzugt vorgegebenen oder vorherrschenden Größen kann eine, insbesondere innerhalb der Schaltphase auftretende Drehmomentveränderung eines Motor- oder Getriebegliedes oder ein drehmoment- oder drehzahlveränderndes Signal oder/und Änderungsgeschwindigkeit oder/und Veränderung einer Massenkraft oder allgemein ein stoß- bzw. ruckanzeigendes Signal sein. Als geeignete Signalgröße zur Veränderung innerer Vorgabe oder Festwerte kann das Motordrehzahlsignal, insbesondere im Konstantfahrbereich, sein, wobei bei einem Verzögerungsstoß eine Motordrehzahl-Anhebung ausgelöst wird, wodurch automatisch eine entsprechend angepaßte Veränderung eines oder mehrerer der inneren Vorgabewerte oder Festwerte oder/und Signalgröße bewirkt wird, so daß in diesem Fall z.B. eine entsprechende Vergrößerung des Verstellkorrekturwertes tk bzw. Z erzielt wird. Bei einem Beschleunigungsstoß wird eine umgekehrte Veränderung vorgenannter Festwerte bewirkt. Anstelle der für die Veränderung innerer Festwerte benutzten Signale kann auch ein Signal sein, das aus der Veränderung einer oben genannten Massenkraft resultiert, wobei beispielsweise durch die Massenveränderung innerhalb des Schaltablaufes eine Entscheidung zur Verkürzung oder Verlängerung der Schaltkorrekturzeit tk oder der Verstellkorrekturgröße Z realisiert wird. Die Veränderungsgröße der inneren Festwerte hängt im wesentlichen von im Laufe der Betriebszeit sich verändernden Werten ab, die z.B. in Abhängigkeit zum Verschleiß einzelner Elemente oder/und in Abhängigkeit zu einer stark verändernden Betriebs-Charakteristik eines Fahrzeuges stehen kann. Dies bedeutet, daß zur Optimierung oder Aufrechterhaltung guter Schaltqualität die Elektronik bzw. Regeleinrichtung die Entscheidung für eine Veränderung einer oder mehrerer innerer Festwerte bevorzugt aus der Information mehrerer Schaltvorgänge trifft, um daraus den geeignetsten Änderungswert zu bestimmen.

Die Erfindung sieht desweiteren vor, daß im Hinblick auf die Schaltzeitverkürzung der Synchrondrehzahlbereich, der das Maß der Synchronungenauigkeit umfaßt, in Abhängigkeit zu einem oder mehreren Betriebsparametern unterschiedlich groß sein kann. Dies bedeutet, daß das Signal zum Schließen der neuen Kupplung bei einer Bereichsschaltung bzw. der Kupplung für Festpunktschaltung in mehr oder weniger großem Abstand tkS (Fig. 7c) vom absoluten Synchronpunkt ausgelöst werden kann. Die Elektronik berücksichtigt hierbei, z. B. bei einer sehr schnellen Übersetzungsänderung die erforderliche Schließzeit vom Zeitpunkt der Signalauslösung bis Beginn des aktiven Schließvorganges. Dementsprechend wird das Kupplungs-Schließsignal entsprechend früh vor Erreichen des Synchronzustandes bzw. vor Erreichen des zulässigen Synchronbereiches eingeleitet. Dies ist insbesondere von Bedeutung bei hohen Beschleunigungsvorgängen, bei denen auch ein entsprechend hoher Kick-down-Effekt wirksam ist oder auch bei Bremsvorgängen, die eine entsprechend hohe Übersetzungs-Rückregelung des getriebes erfordern. Der vorgenannte Synchronbereich kann in Abhängigkeit zur Art der Kupplung - Reibkupplung, z.B. inform einer Lamellen- oder Konuskupplung oder formschlüssigen Kupplung mit oder ohne Abweisverzahnung - unterschiedlich groß sein. Die genauen Werte sind vorzugsweise experimentell zu ermitteln. Die Information für den geeignetsten Schaltzeitpunkt entnimmt die Elektronik z.B. aus der Veränderungsgeschwindigkeit /-kraft der Übersetzung oder/und bzw. der Betätigungskraft /-geschwindigkeit von Fahrpedal oder/und Bremspedal oder anderen, dafür geeigneten Betriebparametern oder Einflußgrößen, die sich aus der experimentellen Ermittlung und Erkenntnissen ergeben. Das Rückmeldesignal zur Anzeige der geschlossenen neuen Kupplung ergibt den Impuls für die Einleitung der Korrekturverstellung Z bzw. tk .

Ebenso kann, wie oben naher erläutert, auch der Öffnungszeitpunkt für die alte Kupplung unterschiedlich variiert werden bzw. um ein entsprechendes Maß tkv vorgezogen werden. ..

Die Schaltkorrektureinrichtung mit zeitabhängiger Schaltkorrektur hat den Vorteil, daß auf einen kostenaufwendigen Hydrostat-Drucksensor und in manchen Fällen auch auf einen Hydrostat-Verstellweg-Sensor (Potentiometer; Weggeber) verzichtet werden kann. Dieses Verfahren eignet sich sowohl für die Bereichsschaltungen als auch für die Festpunktschaltungen KB; KH; KD und auch für Wende-Schaltungen, z.B. für den Reversierbetrieb einer Arbeitsmaschine - Radlader, Traktor-Frontlader u.a. -. Insbesondere bei Anwendung fromschlüssiger Kupplungen mit Abweisverzahnung oder Reibkupplungen kann sehr schaltzeitverkürzend das Öffnungssignal noch vor vollständiger Übergabe des Drehmomentes von der alten auf die neue Kupplung, d.h. vor Ende der Verstellkorrektur Z bzw. Korrekturzeit tk eingeleitet werden, da nach erfolgtem Öffnungssignal gegebenenfalls die betreffende bzw. alte Kupplung unterstützend aufgedrückt werden kann. Das Öffnungssignal wird somit um die Zeit tkv vorgezogen, wobei tkv beeinflußbar ist durch ein oder mehrere oben genannter Betriebssignale oder/und Änderungssignale. Der Verstellvorgang des Hydrostatgetriebes kann somit weitgehend kontinuierlich auch während dem Öffnungsvorgang der vorgenannten Kupplung fortgesetzt werden wodurch eine Funktionsüberschneidung des Öffnungs-signals bzw. des Öffnungsvorganges der genannten Kupplung und der Hydrostat-Verstellung wirksam ist, wodurch eine Schaltzeit-Verkürzung und hohe Schaltqualität erzielt wird.

Das System, insbesondere für die Schaltkorrektur oder/und andere Funktionen, erkennt Schub-, Zug- oder Hoch- Rückschaltung auf einfache Art aus der jeweiligen Motordrehzahl und der Drosselklappenstellung bzw. der Größe der Motoransteuerung, woraus die Korrektur-Richtung der Hydrostat-Verstelleinrichtung bestimmt wird (s. Fig.7 und 7ab).

Unterstützend zu einem oder allen vorgenannten Schaltkorrektur-Einrichtungen kann gemäß der Erfindung auch eine zusätzliche Beeinflussung bzw. Absenkung des Motordrehmomentes innerhalb der Schaltphase dienen durch automatische Gasrücknahme, z.B. bei Anwendung eines elektronischen Gaspedals, um optimale Schaltqualität für die Bereichs-, Wende- und Festpunktschaltungen in allen Betriebssituationen zu erzielen.

Das in Figur 3a dargestellte hydrostatisch-mechanische Leistungsverzweigungsgetriebe G II besitzt vier hydrostatisch-mechanische Vorwärtsfahrbereiche, die funktionsgleich mit der Getriebe-Ausführung G I , gern. Fig. 3 und an früherer Stelle genauer beschrieben ist.

Das Getriebe G II besitzt keinen Rückwärts-Bereich. Es ist kombinierbar mit einem nachgeordneten Wendegetriebe W1 bzw. W2 bzw. W3 wie in den Fig. 3b; 3c bzw. 3ca dargestellt. Das Wendegetriebe W1, W2; W3 ermöglicht für den Rückwärtsbetrieb die gleiche Anzahl an Schaltbereichen wie für den Vorwärtsbetrieb. Bei Anwendung des Planeten-Wendegetriebes W1 gemäß Fig. 3b sind annähernd gleiche Vorwärts- und Rückwärtsgeschwindigkeits-Verhältnisse realisierbar. Das Planeten-Wendegetriebe W2 gemäß Fig. 3c ermöglicht für die Rückwärtsfahrt ebenfalls gleiche Anzahl an Fahrbereichen wie für Vorwärtsfahrt, wobei die Rückwärtsgeschwindigkeit um das Zähnezahl-Verhältnis des Hohlrades H' zum Sonnenrad S' kleiner ist. Durch Kombination des Grundgetriebe G II mit wahlweise einem der Planeten-Wendegetriebe W1 oder W2 ist eine beliebige Anpassung an fahrzeugspezifische Forderungen möglich. Die Getriebe-Ausführung G I gemäß Fig. 3 ermöglicht vier Vorwärts- und zwei Rückwärts-Fahrbereiche, das als kostengünstige Lösung für die überwiegende Zahl der Anwendungen ausreichend ist. Getriebe-Ausführung G I und G II können aus den gleichen Grundbausteinen - Hydrostat-Getriebe 4c, Summierungsplanetengetriebe 5e; P1, Kupplungspaket K1 / K2 - ausgebildet werden, so daß eine sinnvolle Getriebe-Familie für ein weites Anwendungs-Spektrum mit weitgehend gleichen Bau-Elementen bzw. Bau-Gruppen realisierbar ist. Das Wendegetriebe W1 gern. Fig. 3b besteht aus einem eingangsseitigem Hohlrad HE , einem ausgangsseitigen Hohlrad HA sowie einer Kupplung bzw. Bremse KRW für den Rückwärts-Bereich und eine Kupplung bzw. Bremse KVW zum Schalten des Vorwärts-Fahrbereiches. Auf einen Planetenträger PT1 sind ineinandergreifende Planetenräder PL1 und PL2 gelagert, wobei das Planetenrad PL1 in das erste Hohlrad HE und die zweiten Planetenräder PL2 in das abtriebsseitige Hohlrad HA eingreifen. Der Planetenträger PT1 ist mit dem Gehäuse über die Kupplung bzw. Bremse KRW verbindbar. Die Kupplung KVW stellt eine direkte Verbindung der Abtriebswelle 2c des Getriebes G II mit der Ausgangswelle 2c' des Getriebes für den Vorwärts-Fahrbereich dar. Die Wendegetriebe-Ausführung W2 gem. Fig. 3c besitzt ein Planetengetriebe PW2 mit einem Sonnenrad S' , einem Planetenrad P' und einem Hohlrad H' sowie eine Kupplung bzw. Bremse KVW und eine weitere Kupplung bzw. Bremse KRW für den Rückwärts-Fahrbereich. Das Sonnenrad S' steht in Triebverbindung mit der Abtriebswelle 2c des Getriebes G II ,der Planetenträger PT2 ist über eine Kupplung bzw. Bremse KRW mit dem Gehäuse verbindbar und über die Kupplung bzw. Bremse KVW ist die Getriebe-Abtriebswelle 2c mit der Ausgangswelle 2c' des Getriebes für den Vorwärts-Fahrbereich kuppelbar. Bei Schalten des Vorwärts-Fahrbereiches über die Kupplung bzw. Bremse KVW wird, wie bereits erwähnt, die Getriebe-Abtriebswelle 2c mit der Getriebe-Ausgangswelle 2c' direkt verbunden. Bei Schalten des Rückwärts-Fahrbereiches über die Kupplung bzw.

Bremse KRW erfolgt durch das Planeten-Wendegetriebe PW I bzw. PW II eine Drehrichtungs-Umkehr. Das Planeten-Wendegetriebe W2 kann in nicht dargestellter Form auch so ausgebildet werden, daß das Sonnenrad S' das abtreibende Glied und das Hohlrad H' das eintreibende Glied darstellt. Bei dieser Ausführungsform kann die Rückfahr-Geschwindigkeit gegenüber der Vorwärts-Fahrgeschwindigkeit entsprechend dem Zähnezahl-Verhältnis von Sonnenrad S' und dem Hohlrad H' vergrößert werden. Je nach Fahrzeugforderung kann auch diese Lösung sinnvoll realisiert werden. Die Planeten-Wendegetriebe W1 und W2 können gegenüber üblichen Stirnrad-Wendegetrieben klein und kostengünstig als separate Baueinheiten für die Anwendung auch anderer Getriebe realisiert werden. Das Wendegetriebe kann, wie bereits erwähnt, alternativ auch als Stirnrad-Wendegetriebe W3 , wie in Fig. 3ca dargestellt, ausgeführt werden.

Die Bremsregel-Einrichtung sieht verschiedene Funktions-Alternativen für die Übersetzungs-Charakteristik nach Loslassen des Bremspedals vor. Bekannte Einrichtungen bewirken nach Loslassen der Bremse ein Festhalten der Übersetzung. Dies führt jedoch in Abhängigkeit zu bestimmten Betriebszuständen zu teilweise unkomfortablem Betriebsverhlten. Die Erfindung sieht eine Bremsregel-Einrichtung vor, die kein Festhalten der Übersetzung sondern eine den verschiedenen Betriebszuständen oder Betriebsparametern angepaßte Übersetzungsänderung nach Loslassen der Bremse bewirkt. Um bei Loslassen der Bremse die Fahrgeschwindigkeit beizubehalten oder/und die Motorbremsfähigkeit vorteilhaft nutzbar zu machen, wie es in der Regel dem Fahrerwunsch entspricht, sieht die Erfindung vor, daß nach losgelassener Bremse eine Überstzungs-Rückstellung (entspricht größer werdende Übersetzung) erfolgt. Die Motordrehzahl wird hierbei durch die Übersetzung-Rückstellung gleichzeitig angehoben bei gleichzeitiger Anhebung des Motorbremsmomentes. Mit dem Ziel, einen weitgehend ruckfreien Übergang nach Loslassen der Bremse zu erzielen, kann eine entsprechend angepaßte Verstell-Charakteristik der Übersetzungs-Änderung vorgegeben werden. Die genannte Verstell-Charakteristik kann eine durch das Motordrehzahl-Signal gesteuerte Funktion haben, wobei die Verstell-Geschwindigkeit von verschiedenen Betriebsparametern abhängig gemacht werden kann. Z.B. ist es sinnvoll, bei einem Bremsvorgang im Gefälle die Rückstell-Geschwindigkeit so zu programmieren, daß die Fahrgeschwindigkeit möglichst aufrechterhalten oder zumindest für den Fahrer einen weichen und angenehmen Übergang auf den Betriebszustand bei losgelassener Bremse ermöglicht. Hierzu kann das Abtriebsdrehzahl-Signal des Getriebes als Steuer- und Regel-Signal für die Übersetzungs-Änderung und Änderungs-Geschwindigkeit dienen, wobei durch einen Ist- /Sollwert-Vergleich das entsprechende Signal auf die Getriebe-Verstellung ausgelöst wird. Das für die Motordrehzahl bestimmende Motor-Bremsmoment kann als konstante Größe oder als eine variable in Abhängigkeit zu verschiedenen Betriebs-Faktoren stehende Größe sein, die vorzugsweise experimentell zu ermitteln ist und in Abhängigkeit zur Art des Fahrzeugs verschiedenartig sein kann.

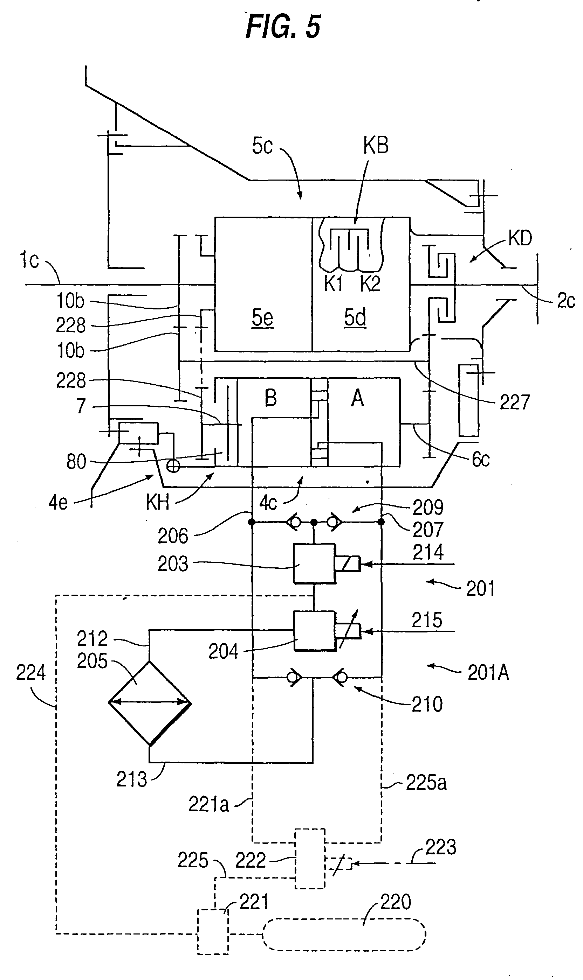

Auch nach einer einprogrammierten abhängigen oder unabhängigen Verstell-Charakteristik ist dies sinnvoll anwendbar, z.B. in der Art, daß eine langsame Motordrehzahl- oder/und Geschwindigkeits-Steigerung erfolgt, die einen kontinuierlichen linearen, progressiven oder auch degressiven Verlauf der Übersetzungs-Änderung über der Zeitachse haben kann. Je nach Fahrerwunsch oder/und Fahrbahnprofil kann der Fahrer durch erneutes Betätigen der Bremse die Fahrzeug-Geschwindigkeit verändern, um z.B. ein unangenehmes Motorhochdrehen durch den Schubbetrieb zu vermeiden. Bei Vorgabe einer degressiven Überseztungs-Änderung kann sich nach einem gewissen zeitlichen Verlauf sinnvoll eine feste Übersetzung einstellen, die abhängig vom Fahrbahnprofil oder/und Betriebs-Signalen einer konstanten Motordrehzahl die einem für den Fahrer akzeptablen Motorgeräusch entspricht. Der Fahrer kann hierbei durch ein- oder mehrmaliges Bremsen diesen Zustand selbst bestimmen. In einer weiteren Ausführungsform kann nach Betätigen der Bremse sich eine automatische Übersetzung einstellen, die in Abhängigkeit zur Motordrehzahl programmiert ist, wobei eine vorgegebene fest oder vom Fahrer vorgewählte oder angepaßte Motordrehzahl innerhalb des Schubbetriebes bestimmt. Bei Vorhandensein des hydrostatischen Bremsretarders, gem. Fig. 4; 5, oder auch eines externen Retarders in bekannter Art ist es gemäß der Erfindung möglich, eine Kombination des Motorbremsmomentes und des Hydrostat-Retarders gleichzeitig in der Funktion zu kombinieren, wobei bevorzugt eine relativ niedrige und akustisch angenehme Motordrehzahl, die einem bestimmten Motordrehmoment entspricht, vorprogrammiert ist. Der Bremsanteil des Retarders orientiert sich hierbei an der Motordrehzahl bzw. dem Motordrehzahl-Signal, wobei die Hydrostat-Verstellung eine Verstellgröße einnimmt, die dem Rest-Bremsmoment bzw. der Rest-Bremsleistung entspricht. Diese vorgenannten Bremsfunktionen können bei dauernder Bremsbetatigung oder auch bei losgelassener Bremse für einen gewissen Dauerbetrieb oder innerhalb gewisser Grenzen aufrechterhalten bleiben. Bestimmend hierbei ist der Fahrerwunsch oder/und bestimmte Betriebs-Signale wie z.B. Öltemperatur, die nur einen bestimmten Grenzwert zuläßt. Dafür geeignete Mittel sind die beschriebene Hydrostat-Bremsanlage und die Bremsregelung, wobei die Hauptregel-Signale die Motordrehzahl, Öltemperatur und die Bremssignale, die durch den Fahrer eingegeben werden, sind.

Für den Wendebetrieb (Shuttle-Betrieb) sieht die Erfindung neben der aus den Druckschriften DE 196 41 723, DE 196 01 001, DE 195 42 993 u.a. bekannten Einrichtungen mit IFA-Pedal eine weitere Art der Fahrregelung vor, wonach über das IFA-Pedal und das Gas- bzw. Fahrpedal F ein sehr bedienungsfreundlicher und efficienter Wendebetrieb möglich ist. Wie in Diagramm gemäß Figur 8ac dargestellt, wird über das IFA-Pedal in einer ersten Geschwindigkeitsphase Pha der Anfahr- bzw. erste Geschwindigkeitsbereich eingeleitet. Bis zum vollständigen Loslassen des IFA-Pedals entsprechend dem IFA-Pedal-Weg s-IFA bzw. der Pedalkraft- Rücknahme F-IFA wird ein gewisser Geschwindigkeitspunkt Pa3 bzw. gewisse Abtriebsdrehzahl erreicht. Der Funktionsablauf bis zu diesem Geschwindigkeitspunkt Pa3 ist identisch mit dem vorbeschriebenen Funktionsablauf gemäß dem Diagramm nach Figur 8ab, jedoch mit dem Unterschied, daß bei losgelassenem IFA-Pedal an Punkt Pa4 eine definierte Geschwindigkeit Pa3 oder nichtdargestellter Leistungspunkt erreicht ist, die/der eine konstante vorbestimmte bzw. vorprogrammierte Größe haben kann oder eine variable Größe, die in Abhängigkeit von einer oder mehrerer Betriebsgrößen unterschiedliche Größenverhältnisse haben kann. Zum Beispiel ist es möglich, bei Anwendung einer RQV-ähnlichen Motorregelung der losgelassenen IFA-Pedalstellung eine bestimmte Konstant-Motordrehzahl zuzuordnen, wobei sich in diesem Zustand eine feste Geschwindigkeitsgröße einstellen kann oder daß bei dieser IFA-Pedalstellung Pa4 z.B. bei Anwendung einer RQ-ähnlichen Motorregelung eine bestimmte Motorleistung einstellt, wobei sich automatisch eine Fahrgeschwindigkeit einstellt, die dieser Leistung entspricht. Die Geschwindigkeit Pa3 bei zuletztgenannter Variante kann je nach Einsatzart und vorgewähltem Wert sehr unterschiedliche Größen haben. Die weitere Geschwindigkeitsphase PhB wird durch Betätigung des Gas- bzw. Fahrpedales F bewirkt, indem eine zusätzliche Anhebung der Motordrehzahl bzw. Motorleistung eingeleitet wird zur Anhebung der Abtriebsdrehzahl Nab gemäß dem Wunsch des Fahrers. Innerhalb der Betriebsphase PhB sieht die Regelung, je nach Fahrzeugart und anderen unterschiedlichen Regelungsstrategien, vor, daß jeder Gas- bzw. Fahrpedal-Stellung eine vorbestimmte feste Fahrgeschwindigkeit oder eine bestimmte Fahrleistung zugrundegelegt die über die stufenlose Regeleinrichtung einer der jeweiligen Motorleistung entsprechenden Fahrgeschwindigkeit entspricht. Es sind also nach diesem Regel-Prinzip sehr unterschiedliche Fahrstrategien realisierbar, die je nach Fahrzeugart und Einsatzart unterschiedlichen Charakteristiken unterliegen. Die genannte Regel-Charakteristik kann einer festen Vorgabe entsprechen oder durch Vorwahl zu treffende unterschiedliche Variationen beinhalten. Zum Beispiel ist es sinnvoll, durch eine Wahleinrichtung unterschiedlichen Motor-Drehzahlverlauf, wie z.B. in den Motor-Drehzahllinien nmotl und nmotll dargestellt, vorzuprogrammieren, die beispielsweise bei Anwendung einer RQV-ähnlichen Motorregelung stufenweise oder stufenlos vorwahlbar ist. Auch ist es möglich, z.B. über ein „Handgas" die Leerlaufdrehzahl des Motors anzuheben oder vorzuwählen. Sinnvoller ist es, eine veränderliche Motordrehzahl-Charakteristik stufenlos oder über mehrere Einzelstufen vorwählbar zu machen, wobei der Fahrer eine individuelle Auswahl, z.B. in Abhängigkeit der Einsatzart oder/und der Art des Fahrzeugs oder/und verschiedenen anderen Bedingungen und Forderungen treffen kann. Bei der zuletztgenannten Ausführung ist der Vorteil hoher Spontanität trotz relativ niedrigem Gesamt-Motordrehzahl-Niveau gegeben. Eine sinnvolle Abstimmung der verschiedenen genannten Parameter kann experimentell ermittelt werden.

Alternativ ist für die Wendegetriebe-Regelung (IFA-Regelung) auch eine Misch-Regelung, z.B. bei elektronischer Motorregelung möglich, um z.B. ruckfreien komfortablen Betrieb sicherzustellen.

Die vorbeschriebene Fahrregelung für den Wendebetrieb über das IFA-Pedal wird vorzugsweise durch ein separates Regelprogramm realisiert, welches durch eine separate Vorwahl aktiviert wird, z.B. durch eine entsprechende Drucktaste oder durch automatische Vorwahl in Verbindung mit einer der Vorwahl- oder Betätigungseinrichtungen, z.B. für den Frontlader-Betrieb oder einen für Shuttle-Betrieb bestimmten Arbeitsvorgang.

Die IFA-Regelung kann ein festes oder durch manuelle Vorwahl veränderliches Regel-Programm enthalten. Das veränderliche Programm, welches stufenlos oder stufenweise einstellbar ist, sieht vor, daß z.B. für den Shuttle-Betrieb für Feinarbeiten bei einer Arbeitsmaschine auf ein niedriges Motordrehzahl-Niveau insbesondere im Anfahrbereich, ausgelegt ist, um z.B. Arbeiten bei Niedrigst-Geschwindigkeiten präzise und exakt durchführen zu können. Bei Akkord-Arbeiten z.B., die hohe Spontanität und Schnelligkeit fordern, kann das Motordrehzahl-Niveau höher liegen d.h. daß die Leerlaufdrehzahl von vorneherein auf ein entsprechend höheres Niveau angehoben wird, um sofort hohe Leistung und Verstell-Geschwindikeit sowie höhere Fahrgeschwindigkeiten zu ermöglichen, wie dies z.B. bei Arbeitsmaschinen wie Radlader oder Stapler gefordert wird. Auch die Gesamt-Charakteristik kann je nach Fahrzeugart oder/und Einsatzart unterschiedlich veränderbar sein, wobei z.B. der Geschwindigkeitspunkt Pa3 (s. Fig. 8ac) bei losgelassenem IFA-Pedal einem unterschiedlichen Geschwindigkeitspunkt entspricht, der z.B. zwischen 3 und 10 km/h liegen kann. Die genannte Leerlaufdrehzahl nleer entspricht in diesem Fall nicht der üblichen Motor-Leerlaufdrehzahl, sondern einer neuen festen oder beliebig vorwählbaren Anfahrdrehzahl oder einer mit Loslassen des IFA-Pedals sofort ansteigenden Motordrehzahl, z.B. wie in Drehzahlkurve nMot III (s. Fig. 8ab und 8ac) dargestellt.

Getriebe-Familie

Gemäß Fig.3d bis 3h sieht die Erfindung desweiteren vor, eine Getriebe-Familie für ein weites Anwendungsspektrum oder/und für einen weiten Leistungsbereich oder/und zur Anpassung unterschiedlicher Wandlungsbereiche bzw. Getriebe-Spreizung durch unterschiedliche Kombination der weitgehend als Standardeinheiten ausgebildeten Baugruppen zu schaffen. Die Anpassung an verschiedene Leistungsgrößen oder die gewünschte Getriebe-Spreizung wird durch entsprechende Anzahl der Schaltbereiche variiert bei gleichbleibender Baugröße des Hydrostatpaketes 4c und vorzugsweise gleichbleibenden mechanischen Baugruppen bzw. Bauteilen. Dies bedeutet z.B., daß für Fahrzeuge verschiedener Art und/oder unterschiedlicher Leistungsklassen bzw. für einen weiten Leistungsbereich der gleiche Hydrostat-Baustein 4c verwendet werden kann, jedoch unterschiedliche mechanische Baugruppen miteinander zu einer bestimmten Getriebe-Ausführung Af1; Af2; Af3; Af4; Af5 kombiniert werden. Je nach geforderter Größe der fahrzeugspezifischen Bedingungen ist eine unterschiedliche Anzahl an Vorwärts- und Rückwärts-Bereichen und auch Bereichsgrößen durch entsprechende Art der Kombination möglich. Darüberhinaus ist es gemäß der Erfindung möglich, das Anwendungsspektrum zusätzlich zu erweitern, dadurch daß zwei oder mehrere Größen des Hydrostat-Getriebes 4c zur Auswahl zur Verfügung stehen. Hierdurch ist eine weitgehende Anpassung an fahrzeugspezifische Bedingungen gegeben. Für die Anwendung in einer Baumaschine, z.B. Radlader, bei dem hohe Manöverierfähigkeit gefordert ist, ist es sinnvoll, eine Getriebe-Kombination mit wenig Schaltbereichen zu realisieren. Hierbei wird der notwendige Wandlungsbereich bzw. die Getriebe-Spreizung durch entsprechende Auswahl der Hydrostat-Baugröße angepaßt.

Ausführung Af1 gem. Fig. 3d

besitzt zwei Vorwärts- und zwei Rückwärts-Bereiche. Es besteht aus einem vierwelligen Summierungsplanetengetriebe PS1 mit zwei Eingangswellen E1 und E2 und zwei Ausgangswellen A1' und A2', dem ein Planetenwendegetriebe W2 bzw. W1 zugeordnet ist. Die beiden Ausgangswellen des Summierungsplanetengetriebes PS1 sind wechselweise über Kupplungen K1 und K2 mit dem nachgeordneten Planetenwendegetriebe W2 bzw. W1 verbindbar.

Ausführungsform Af1a gem. Fig. 3da

besitzt zwei Vorwärts- und einen Rückwärtsbereich. Das Summierungsplanetengetriebe PS1 ist vierwellig und entspricht der Ausführung gern. Fig. 3d und besitzt zwei Eingangs- und zwei Ausgangswellen. Auf einem Planetenträger A1' sind ineinandergreifende Planetenräder PI1' und PI2' angeordnet, wobei in erste Planetenräder PI1' ein mit der zweiten Hydrostateinheit B in Triebverbindung stehendes Hohlrad HE2 und in zweite Planetenräder PI2' das mit der Antriebswelle 1c in Triebverbindung stehende Hohlrad HE1 eingreift und wobei die Stegwelle A1' als erste Ausganswelle A1' mit einer ersten Kupplung K1 und die zweite Ausganswelle A2' ein Sonnenrad SA bildet, welches in erste Planetenräder PI1' eingreift und mit einer zweiten Kupplung K2 verbindbar ist. Die beiden Ausgangswellen, Steg A1 und Sonnenrad SA, sind über die beiden Kupplungen K1 und K2 mit der Abtriebswelle 2c verbindbar. Eine zweite, bevorzugt dreiwellig ausgebildete Planetengetriebe-Einheit PR1' dient für den Rückwärtsbereich, wobei dessen Hohlrad H3' mit dem Steg A1', dessen Sonnenrad SR' mit der Abtriebswelle 2c und dessen Stegwelle PT2' über eine Kupplung oder Bremse KR mit dem Gehäuse des Getriebes verbindbar ist. Diese Getriebeausführung besitzt zwei hydrostatisch-mechanische Vorwärts- und einen hydrostatisch-mechanischen Rückwärtsbereich. In einer weiteren, nicht dargestellten Ausführungsform ist die erste Ausgangswelle - Steg A1' - mit dem Sonnenrad SR' und das Sonnenrad SA mit dem Hohlrad H3' verbunden. Diese Ausführung ist vorteilhaft für Fahrzeuge niedrigeren Rückfahrgeschwindigkeit.

Die Funktion dieser Getriebe-Ausführung sowie aller Getriebe-Ausführungen Fig. 3d bis 3 hg ist in Bezug auf die jeweiligen Schaltbereiche identisch mit der eingangs beschriebenen Getriebe-Ausführung gern. Fig. 3, wobei zu berücksichtigen ist, daß bei den Getriebe-Ausführungen mit zwei Vorwärts- und nur einem Rückwärtsbereich der jeweilige Rückwärtsbereich funktionsgleich wie der erste Vorwärtsfahrbereich ist, wobei die Drehrichtungsumkehr jeweils durch einen zusätzlichen Planetentrieb realisiert wird.

Ausführungsform Af1a gem. Fig. 3ha

Ähnlich dieser vorgenannten Ausführung 1a gern. Fig. 3da ist die Getriebe-Ausführung gem. Fig. 3ha mit dem wesentlichen Unterschied, daß das Hydrostatgetriebe 4c' mit den Einheiten A und B koaxial zum Summierungsplanetengetriebe PS1', den Kupplungen K1 und K2 und dem Planetengetriebe SR' angeordnet ist. Dies hat den Vorteil, daß die das Hydrostatgetriebe verbindenden Stirnradstufen entfallen können.

Ausführung Af1c gern. Fig. 3hb

ist weitgehend identisch mit Ausführung 1b jedoch mit dem Unterschied, daß die Antriebswelle 1c" durch das Getriebe geführt wird, welche auf der Ausgangsseite des Getriebes als PTO-Anschluß oder als Zapfwellen-Antrieb genutzt werden kann. Der Getriebe-Abtrieb erfolgt bei dieser Ausführungsform über eine abtriebsseitige Stirnradstufe 2d, welche die Triebverbindung zwischen einem Achsdifferential DIF und der Ausgangswelle 2c' herstellt. Das Achsdifferential DIF ist hierbei koaxial versetzt zur Antriebswelle 1c" angeordnet. Dieses Getriebe eignet sich besonders für Arbeitsmaschinen, wie z.B. Traktoren. Je nach Fahrzeugforderung kann die Stirnradstufe 2d eingespart werden wie in Fig. 3hb' dargestellt, wobei die Abtriebswelle 2c' die Kegelritzeswelle für den Kegeltrieb des Differentialgetriebes DIF darstellt. Der Kegelradantrieb KE ist hierbei z.B. als Hyboidtrieb mit einem Achsversatz AX ausgebildet, so daß die abtreibende PTO-Welle oder Zapfwelle an einer der beiden Triebwellen TW mit ausreichendem Abstand angeordnet werden kann. Die Summierungsplanetengetriebe PS1 gern Fig. 3d und 3da und PS1' gern. Fig. 3ha und 3hb sind funktionsgleich und unterscheiden sich lediglich darin, daß in Abhängigkeit zur Anordnung des Hydrostatgetriebes 4c und 4c' die Lage der beiden Hohlräder HE1 und HE2 in axialer Richtung vertauscht sind. Auch bei Getriebeausführung gern. Fig. 3d und 3da ist das Summierungsplanetengetriebe PS1' verwendbar, wobei die Stirnradstufen 26c und 228 ebenfalls in Axialrichtung, in nichtdargestellter Weise vertauscht werden.

## Ausführungsform Af2 gemäß Fig. 3e

besitzt drei Vorwärts- und zwei Rückwärts-Bereiche. Es besteht aus einem fünfwelligen Summierungsplaneten-Getriebe PS2; PS3 mit zwei Eingangswellen E1 und E2 sowie drei Ausgangswellen A1, A2 und A3. Dem Summierungsplanetengetriebe PS2 ist eine weitere Planetengetriebe-Kombination PN1 nachgeordnet, das bevorzugt aus zwei Planetengetriebe-Stufen PR1 und PV besteht. Die drei Ausgangswellen A1, A2 und A3 sind wechselweise über die Kupplung K1, K2, K3 mit dem Nachschaltgetriebe PN1 verbindbar.

## Ausführung Af3 gemäß Fig. 3f

besitzt drei Vorwärts- und drei Rückwärtsbereiche. Das Summierungsplanetengetriebe PS2 ist fünfwellig und identisch mit Ausführung Af2 gern. Fig. 3e. Diesem Summierungsplanetengetriebe ist in dieser Ausführungsform ein Planeten-Nachschaltgetriebe PN2 zugeordnet, das aus einer Planetengetriebestufe PV1 besteht. Die drei Ausgangswellen A1, A2 und A3 dieses Summierungsplanetengetriebes PS2; PS3 sind ebenfalls über drei Kupplungen K1, K2 und K3 mit dem genannten Nachschaltgetriebe PN2 wechselweise verbindbar. Bei dieser Ausführungsform ist ein weiteres Getriebe, insbesondere als Planeten-Wendegetriebe W2 nachgeordnet, das aus einem Planetengetriebesatz PR2 und einer Kupplung KVW und einer weiteren Kupplung KRW besteht.

## Ausführung Af4 gemäß Fig. 3g

besitzt drei Vorwärts- und drei Rückwärtsbereiche. Es besteht aus einem fünfwelligen Summierungsplanetengetriebe PS2; PS3 , einem nachgeordneten Getriebe PN1 bestehend aus zwei Planetengetriebestufen PR1 und PV , die wechselweise über zwei Kupplungen KV und KR Triebverbindung zur Abtriebswelle 2c herstellen. Die Abtriebswellen A1, A2, A3 des Summierungsplanetengetriebes PS2 sind wechselweise über Kupplungen K1, K2, K3 und K4 mit dem Nachschaltgetriebe PN1 und der Abtriebswelle 2c wechselweise verbindbar.

## Ausführung Af5 gem. Fig. 3h

besitzt vier Vorwärts- und vier Rückwärts-Bereiche. Es besteht ebenfalls aus dem fünfwelligen Summierungsplanetengetriebe PS2 , einem nachgeordneten Planetengetriebe PV1 mit Kupplung KR und einem weiteren Getriebe W2 bzw. W3 , das als Planetenwendegetriebe ausgebildet ist. Die Ausgangswellen A1, A2, A3 des Summierungsplanetengetriebes PS2 sind auch bei dieser Ausführung über Kupplung K1, K2, K3, K4 mit der ersten Abtriebswelle 2c' verbindbar. Bei dieser Getriebe-Kombination ist das oben bezeichnete Planetenwendegetriebe W2 bzw. W3 nachgeordnet, das gleiche Anzahl an Vorwärts- und Rückwärtsbereichen ermöglicht.

In einer weiteren Ausgestaltung des Getriebes gern. Fig. 3i, 3j, 3k nach Ausführung Af6; Af7; Af8 wird ein hydrostatisch-mechanisches Leistungsverzweigungsgetriebe vorgestellt, welches zwei Vorwärts- und zwei Rückwärtsbereiche besitzt, wobei der erste Vorwärtsfahrbereich und der Rückwärtsbereich rein-hydrostatisch und der zweite Vorwärts- und zweite Rückwärtsbereich mit Leistungsverzweigung arbeitet. Das Getriebe besteht aus einem Hydrostatgetriebe 4c mit einer ersten Hydrostateinheit A verstellbaren Volumens und einer zweiten Hydrostateinheit B vorzugsweise konstanten Volumens sowie einem Summierungsplanetengetriebe SP4; SP5; SP6 und einer ersten Kupplung K , welche im ersten Vorwärts- und Rückwärtsbereich geschlossen ist sowie einer Kupplung KV für den zweiten Vorwärtsbereich sowie einer weiteren Kupplung KR für den zweiten Rückwärtsbereich. Ein Glied der Kupplung KV sowie ein Glied der Kupplung KR sind in ständiger Triebverbindung mit der Antriebswelle 1c' . Die genannten Kupplungsglieder bzw. Kupplungshälften mit ihren Wellen EV und ER weisen gegensinnige Drehrichtungen auf. Die dazugehörigen Stirnradstufen 26'; 27'; 28' bzw. 29' und 30' sind entsprechend ausgelegt, wobei in der ersten Stirnradstufe das Antriebsrad 27' als Zwischenrad dient. Über die Antriebswelle 1c' wird die erste Hydrostateinheit A über Zahnrad 28' und die Eingangswelle EV über das Zahnrad 26' angetrieben, die bei geschlossener Kupplung KV im zweiten Vorwärtsfahrbereich den mechanischen Leistungsanteil auf das Summierungsplanetengetriebe SP4; SP5; SP6 überträgt. Über die Stirnradstufe 29' , die mit der Eingangswelle der ersten Hydrostateinheit A verbunden ist, wird der mechanische Leistungsteil über das weitere Zahnrad 30' auf die gegenlaufende Eingangswelle ER bei geschlossener Kupplung KR innerhalb des zweiten Rückwärtsfahrbereiches auf das Summierungsplanetengetriebe SP4; SP5; SP6 übertragen. Die zweite Hydrostateinheit B steht in Triebverbindung mit der zweiten Welle H4; H5;

H6 des Summierungsplanetengetriebes SP4; SP5; SP6 , über welches der hydraulische Leistungsanteil innerhalb des zweiten Vorwärts- bzw. zweiten Rückwärtsbereiches zum Summierungsplanetengetriebe geleitet wird. Über eine dritte Welle - Sonnenrad S4; Steg St5' bzw. Hohlrad H6' - wird innerhalb des zweiten Vorwärts- bzw. Rückwärtsbereiches die im Summierungsplanetengetriebe aufsummierte Leistung zur Abtriebswelle 2c" übertragen. Innerhalb des ersten Vorwärts- und Rückwärtsbereiches wird rein-hydrostatisch die Leistung bei geschlossener Kupplung K über einen mit der zweiten Hydrostateinheit B verbundenen Triebstrang 31' , 32' zur Abtriebswelle 2c" geführt. Dies bedeutet, daß innerhalb des ersten Vorwärts- und Rückwärtsbereiches die Kupplung K geschlossen ist und die Kupplungen KV und KR geöffnet sind, wodurch das Summierungsplanetengetriebe und die entsprechenden Kupplungsglieder lastlos drehen.

Funktion Getriebeausführung Af6 bis Af8

Im Anfahrbereich bei vorgewählter Fahrtrichtung „Vorwärts" ist das Hydrostatgetriebe auf Fördervolumen „Null" eingestellt und die Kupplung K wird geschlossen. Bei Fahrbeginn wird das Hydrostatgetriebe bzw. die erste Hydrostateinheit A verstellt bis zur positiven Endstellung, was der Endstellung bzw. Endgeschwindigkeit des ersten Vorwärtsfahrbereiches entspricht. Alle Glieder des Summierungsplanetengetriebes SP4; SP5; SP6 haben in diesem Zustand eine Drehzahl erreicht, die der Drehzahl der Eingangswelle EV und auch dem Synchronzustand aller Kupplungsglieder der Kupplung KV entspricht. Nun kann die Schaltung in den zweiten Schaltbereich erfolgen, indem die Kupplung KV geschlossen und darauf folgend die Kupplung K geöffnet wird. Zur weiteren Geschwindigkeitserhöhung wird nun der Hydrostat von seiner positiven Endstellung zurückgeregelt auf „Null" und darüber hinaus bis zu seiner negativen Endstellung, was der Endübersetzung des Getriebes bzw. dem Ende des zweiten Vorwärtsfahrbereiches entspricht. Die erste Welle St4; St5; St6 des Summierungsplanetengetriebes bleibt also innerhalb des zweiten Vorwärtsfahrbereiches über den entsprechenden Triebstrang EV, 26' , 27' mit der Antriebswelle 1c' verbunden. Die Abtriebsdrehzahl-Erhöhung ab Beginn des zweiten Schaltbereiches erfolgt durch Drehzahlrücknahme der zweiten Welle H4; H5; H6 des Summierungsplanetengetriebes entsprechend der Hydrostatverstellung, wodurch das Abtriebsglied bzw. die dritte Welle S4; St5'; H6' des Summierungsplanetengetriebes SP4; SP5; SP6 eine gleichzeitige Drehzahlerhöhung erfährt.

Für den Rückwärtsfahrbereich ist der gleiche Funktionsablauf wie im Vorwärtsfahrbereich gegeben, wobei im ersten Rückwärtsbereich das Hydrostatgetriebe auf negative Verstellrichtung ausgeschwenkt und am Ende der negativen Verstellgröße alle Glieder des Summierungsplanetengetriebes gleiche Drehzahlverhältnisse wie am Ende des ersten Vorwärtsfahrbereiches, jedoch in negative Drehrichtung aufweisen. Die Eingangswelle ER sowie die Kupplungsglieder KR haben in diesem Zustand ebenfalls negative Drehrichtung bei gleicher Drehzahl. Nun erfolgt die Schaltung in den zweiten Rückwärtsfahrbereich durch Schließen der Kupplung KR und Öffnen der Kupplung K . Bei nun folgender Hydrostat-Rückregelung auf „Null" und darüber hinaus bis zu seiner positiven Endstellung wird der zweite Rückwärtsfahrbereich durchfahren, wobei der mechanische Leistungsanteil über den Triebstrang 29' , 30' der Eingangswelle ER über die Kupplung KR auf das Summierungsplanetengetriebe SP4; SP5; SP6 erfolgt und der hydraulische Leistungszweig über den gleichen Strang wie im Vorwärtsfahrbereich zum Summierungsplanetengetriebe geleitet wird, welches beide Leistungsflüsse aufsummiert und über die dritte Welle die Gesamtleistung zur Abtriebswelle 2c" führt.

Je nach Fahrzeugforderung kann die Größe des zweiten Schaltbereiches beliebig angepaßt werden durch entsprechende Wahl des Summierungsplanetengetriebes SP4; SP5; SP6 und der entsprechenden Übersetzungsanpassung.

Die Summierungsplanetengetriebe für alle angeführten Getriebeausführungen gemäß Figur 3a bis 3h sind verschiedenartig ausführbar. Für das Getriebe Ausführung AF1 gemäß Figur 3d ist alternativ anstelle des Summierungsplanetengetriebes PS1 die Summierungsplanetengetriebe-Ausführung PS1' gemäß Fig. 3m oder PS1" gemäß Fig. 3n anwendbar.

Das Summierungsplanetengetriebe PS3 gemäß Fig. 3l stellt eine weitere Ausführungsform als Alternative zu dem Summierungsplanetengetriebe PS2 , das in der Fig. 3a; 3e bis 3h dargestellt ist, dar. Bei diesem Summierungsplanetengetriebe PS3 kann die mechanische Eingangswelle E1 als innenliegende Welle und die für den hydrostatischen Leistungsfluß zuständige Welle E2 als Außenwelle ausgeführt werden. Das Summierungsplanetengetriebe PS3 besteht aus zwei Planetengetriebe-Einheiten, wobei die erste Planetengetriebe-Einheit aus einem mit der zweiten Eingangswelle E2 verbundenen Sonnenrad SE' und einem Hohlrad H7 besteht. Die zweite Planetengetriebe-Einheit besteht aus einer Stegwelle St' , auf der ineinandergreifende erste Planetenräder Pl7 und zweite Planetenräder Pl8 angeordnet sind, wobei die ersten Planetenräder Pl7 mit einem Hohlrad H8 und die zweiten Planetenräder Pl8 mit einem Hohlrad A1 kämmen. Die beiden Hohlräder H7 und H8 sowie die erste Eingangswelle E1 sind miteinander verbunden und stehen in Triebverbindung mit der Eingangswelle. Das Sonnenrad SE' ist mit der hydrostatischen Eingangswelle E2 und das Sonnenrad SA' der zweiten Planetengetriebe-Einheit ist mit der zweiten Ausgangswelle A2 und ein in die zweiten Planetenräder Pl8 eingreifendes Hohlrad H8' ist mit der ersten Ausgangswelle A1 verbunden. Die dritte Ausgangswelle A3 ist in ständiger Triebverbindung mit der Stegwelle der ersten Planetengetriebestufe sowie der Stegwelle St' der zweiten Planetengetriebestufe.

Das Summierungsplanetengetriebe PS1' gemäß Fig. 3m besitzt zwei ineinandergreifende Planetenräder Pl1 und Pl2 , wobei das Planetenrad Pl2 mit einem mit der ersten Eingangswelle E1' verbundenen Hohlrad He1 und mit einem mit der zweiten Eingangswelle E2' verbundenen Sonnenrad SE kämmt und das andere Planetenrad Pl1 mit einem mit der ersten Ausgangswelle A1' verbundenen Hohlrad Ha1 sowie einem mit der zweiten Ausgangswelle A2' verbundenen Sonnenrad Sa in Eingriff steht.

Eine weitere Ausführung des Summierungsplanetengetriebes PS1" gemäß Fig. 3n ist anstelle des Summierungsplanetengetriebes PS1 verwendbar. Dieses Summierungsplanetengetriebe PS1" besteht aus ineinandergreifende Planetenräder Pl1' und Pl2' , die auf einer mit der Eingangswelle E1' verbundenen Stegwelle St9 gelagert sind. In erste Planetenräder Pl1' greift ein mit der zweiten Eingangswelle E2' verbundenes Sonnenrad SE und ein mit der zweiten Ausgangswelle AS2' verbundenes Hohlrad Ha2 ein. Die zweiten Planetenräder Pl2' kämmen mit einem mit der ersten Ausgangswelle A1' verbundenen Hohlrad Hal . Die Summrierungsplanetengetriebe-Ausführung PS1" gemäß Fig. 3n unterscheidet sich von den Ausführungen PS1 und PS1' dadurch, daß die Eingangswelle E1' die Innenwelle und die zweite Eingangswelle E2' die Außenwelle darstellt. Dies hat den Vorteil, daß bei Anwendung dieses Summierungsplanetengetriebes PS1" die Getriebeeingangswelle 1c koaxial zu gesamten Getriebewalze - Summierungsplanetengetriebe und Kupplungspaket - angeordnet sein kann und somit eine vorteilhafte Lösung für eine Getriebe-Ausführung in Inline-Bauweise darstellt.

Die Getriebe-Ausführung gern. Fig.3hc ist ähnlich der Ausführung 1c nach Fig.3hb, jedoch mit dem Unterschied, daß das Hydrostat-Getriebe 4c parallel zur Antriebswelle 1c" parallel versetzt angeordnet ist, wobei der Antrieb der ersten Hydrostat-Einheit A koaxial am Getriebeausgang über eine Stirnradstufe 10b" erfolgt und die Triebverbindung der zweiten Hydrostat-Einheit B über eine eingangsseitig angeordnete Stirnradstufe 228' erfolgt. Die Schaltwalze 5c, welche das Summierungsplanetengetriebe und die Schaltkupplung enthält, ist hier ebenfalls auf der Antriebswelle 1c" angeordnet, wobei in Verlängerung dieser Welle 2e der Anschluß für die Zapfwelle bzw. PTO sehr vorteilhaft für einen Traktor realisierbar ist.

Die Getriebeausführung 1e gem. Fig.3he ist ähnlich der Ausführung 1d gem. Fig.3hc und weist den Unterschied auf, daß das parallel versetzt zur Antriebswelle angeordnete Hydrostat-Getriebe 4c' so ausgebildet ist, daß die zweite Hydrostat-Einheit B auf der Antriebswelle 6c' angeordnet ist, so daß beide Hydrostat-Einheiten A und B antriebsseitig angetrieben werden können, wobei über eine erste Stirnradstufe 10b' die erste Hydrostat-Einheit A und über eine danebenliegende zweite Stirnradstufe 228' die Triebverbindung zwischen der zweiten Hydrostat-Einheit B und der auf der Antriebswelle 1c angeordneten Schaltwalze 5c hergestellt werden kann.

Anstelle des Summierungsplanetengetriebes PS1', wie in den Getriebe-Ausführungen 1, 1a, 1b, 1c und 1d dargestellt, ist ein weiteres funktionsgleiches Summierungsplanetengetriebe PS1" gem. Fig.3hd erfindungsgemäß anwendbar, welches aus zwei Planetenradsätzen besteht, wobei der erste Planetenradsatz über eine Stegwelle St1" mit der ersten Eingangswelle E1' verbunden ist. Die zweite Eingangswelle E2' ist mit dem Hohlrad H2" der zweiten Planetengetriebestufe verbunden. Die erste Ausgangswelle A1' steht in fester Verbindung mit dem Hohlrad H1" der ersten Planetenradstufe und der Stegwelle St2" der zweiten Planetengetriebestufe und die zweite Ausgangswelle A2' ist mit dem Sonnenrad S1' der ersten und mit dem Sonnenrad S2' der zweiten Planetenradstufe verbunden. Auch die Getriebe-Ausführung 1 gern. Fig.3d kann wie die Getriebeausführungen 1b, 1c, 1d und 1e so ausgeführt werden, daß das Surnmierungsplanetengetriebe PS1, die Schaltkupplungen K1, K2 sowie der zweite Planetengetriebesatz SR mit den Kupplungen KRW und KVW auf der Antriebswelle 1c' angeordnet werden kann, so daß die Zapfwelle an der durch die Schaltwalze 5c führende Antriebswelle 1c realisierbar ist,

Die Getriebe-Ausführung 1e gem. Fig.3he besitzt ein parallel zur Antriebswelle versetzt angeordnetes Hydrostat-Getriebe 4c', welches so ausgebildet ist, daß ein getriebeeingangsseitig die Triebverbindungen zur ersten Hydrostat-Einheit A und der zweiten Hydrostat-Einheit B herstellbar sind. Über eine erste Stirnradstufe 10b' ist die Antriebswelle 1c mit der ersten Hydrostat-Einheit A verbunden. Eine danebenliegende Stirnradstufe 228' verbindet die zweite Hydrostat-Einheit B mit dem in der Schaltwalze 5c angeordneten Summierungsplanetengetriebe. Die Schaltwalze 5c mit dem Summierungsplanetengetriebe und den Schaltkupplungen ist hier ebenfalls auf der Antriebswelle 1c angeordnet und kann in Verlängerung (Welle 2e) die Verbindung zur Zapfwelle bei einem Traktor bzw. eine PTO in achsgleicher Lage zur Antriebswelle 1c herstellen. Der Abtrieb zum Differential DIF erfolgt über eine Stirnradstufe 2d. Das Achsdifferential DIF und die zweite Abtriebswelle 2c" kann achsversetzt zur Antriebswelle, wie in Fig. 3he dargestellt oder auch in achsgleicher Ausführung, wie in Fig. 3hb' dargestellt, ausgeführt werden.

Die Getriebe-Ausführung gem. Fig. 3hf (Ausführung 1f) ist ähnlich der Getriebe-Ausführung nach Fig. 3hb, jedoch mit dem Unterschied, daß anstelle des Summierungsplanetengetriebes PS1' das funktionsgleiche Summierungsplanetengetriebe PS1", wie in Fig. 3hd dargestellt, verwendet wird. Desweiteren ist der Vorderradantrieb mit der Abtriebswelle 2VA und der entsprechenden Kupplung KVA, z.B. für die Anwendung in einem Traktor, dargestellt.

Mit der Getriebe-Ausführung gern. Fig. 3hg als Ausführung Afg1g wird der Einbau des Getriebes nach Art der Modulbauweise, z.B. für die Anwendung in einem Traktor, aufgezeigt. Das hier dargestellte Getriebe entspricht der Getriebe-Ausführung 1f nach Fig. 3hf. Die beiden Baueinheiten - Hydrostat-Getriebe 4c und die Schaltwalze bzw. Getriebewalze 5c' mit Summierungsplanetengetriebe und den Kupplungen und ggf. der Rückfahr-Planetenstufe PR1' und einer Bremse bzw. Kupplung KR - werden bei dieser Bauart bevorzugt als eine komplette Baueinheit von außen in das Hauptgehäuse 1 eingesetzt, wobei die Eingangswelle 1ca über ein Verbindungselement F1 mit der Antriebswelle 1c und die Abtriebswelle A' über eine weitere Verbindung F2 sowie einer mit der Antriebswelle gekoppelten, durch das Getriebe führende Zwischenwelle 2e mit einem Verbindungselement F3 mit einer PTO- oder Zapfwelle verbunden ist. Die Verbindungen F1, F2 und F3 sind bevorzugt mechanische Verbindungen, die als Schraub-Flanschverbindung oder/und Mitnahmeverbindung mit Zahnprofil, z.B. als Muffenverbindung, u.a. bekannter Art ausführbar sind. Für das Hydrostat-Getriebe 4c ist zweckmäßigerweise zur Abstützung des Reaktionsmomentes eine elastische Drehmomentstütze 4e vorgesehen, wie sie z.B. vorteilhaft in der noch nicht veröffentlichten Patentanmeldung 197 24 805.0 in Fig. 1bb und in Fig. 1bc dargestellt und beschrieben ist. Die elastische Abstützung wird z.B. in diesem Fall vorteilhaft durch in Ausnehmungen des Gehäuses und des Hydrostatgetriebes eingelegte Gummi-Elemente 9h bzw. 9b, die eine Kugel- bzw. Kegelform aufweisen, realisiert. Diese Getriebe-Ausführung Af1g gem. Fig. 3hg ist sehr kostengünstig, da das Hydrostat-Getriebe 4c auf der Antriebswelle 1c und dazu auch die Schaltwalze oder Getriebewalze 5c' mit dem Summierungsplanetengetriebe und den Schaltkupplungen koaxial zueinander angeordnet sind. Auf diese Art entfallen die sonst sehr kostenintensiven Triebverbindungen über Stirnräder, die z.B. bei achsversetzter Anordnung des Hydrostat-Getriebes erforderlich sind. Bei Anwendung in einem Traktor ist ausreichend Baulänge vorhanden, so daß diese Bauweise problemlos anwendbar ist. Außer der Triebverbindung zum Achsdifferential DIF über eine Stirnradstufe 2d sind keine Stirnradstufen bzw. Zahnräder bis zum Antrieb der Hinterachse erforderlich. Die Ölleitungen für die Steueröl-Versorgung für die Kupplungen K1 und K2 und gegebenenfalls auch für KR sowie die Schmierölversorgung u.a. können auf sehr kostengünstige und einfache Weise durch ein Trägerelement 1b, welches auch mit dem Gehäuse 1 koppelbar ist, geführt und auf die entsprechenden Bauelemente übertragen werden. Steckverbindungen (nicht dargestellt) nach bekannte Art zwischen einem Steuergerät 1e; 1e' und dem Trägerelement 1b des Getriebemoduls HVG stellen die notwendige Ölverbindung her. Die genannten Steckverbindungen sind Rohrverbindungen mit elastischen Dichtungselementen, z.B. O-Ringen an den jeweiligen Anschlußstellen sorgen außerdem für eine Geräuschisolierung und lassen außerdem Ausgleichsbewegungen zu, die z.B. zwischen dem Hydrostat-Getriebe 4c und dem Gehäuse aufgrund der elastischen Drehmoment-Ablagerung 4e auftreten können. Das Getriebe HVG ist verschiedenartig ausführbar und kann als Ein.- oder Zweibereichsgetriebe, wie in Fig. 3hg ausgeführt, oder als Drei-, Vier- und Mehrbereichsgetriebe Anwendung finden.

Die Getriebe Ausführung gern. Fig.3hf, 3hg bis 3hj' ist bevorzugt für Traktoren der niedrigeren Leistungsklasse anwendbar, wobei der erste Schaltbereich zwischen 0 und 16 und der zweite Schaltbereich zwischen 16 und 50 km/h liegen sollte. Bei dieser Bereichsaufteilung liegt der Best-Wirkungsgrad, bei dem die hydrostatische Leistung Null ist, im Hauptgeschwindigkeitspunkt von 8 km/h.

Ein weiteres Erfindungsmerkmal zeichnet sich besonders dadurch aus, daß das stufenlose Getriebe HVG; MVG, das bevorzugt eine gemeinsame Baueinheit bildet, in das Getriebe-Gehäuse auf einer Seite, durch eine Gehäuseöffnung 1a' rechts, links, oben oder unten, eingeführt werden kann und durch eine Befestigungseinrichtung F5 und F6, wie in Fig.3hg und Fig.3hg' dargestellt, am Getriebegehäuse 1 befestigt wird, wobei die Befestigungseinrichtung F5 und F6 so ausgebildet ist, daß Verwindungen des Gehäuses 1, wie es z.B. bei Traktoren mit selbsttragendem Gehäuse, insbesondere bei einseitigen Stoßbelastungen oder durch Unebenheiten der Fahrbahn auftreten können, keine schädigende Deformationswirkung oder/und Schwingungen auf das Getriebe HVG; MVG wirksam werden kann. Zu diesem Zweck wird das stufenlose Getriebe auf einer Stelle, z.B. an der Eingangs- oder Ausgangsseite, über zwei oder mehrere Befestigungen F5 Punkt II, F5 Punkt III und auf der anderen Seite nur an einem Befestigungspunkt F6 Punkt I befestigt. Die erstgenannte Befestigungsstelle F5 besitzt wenigstens zwei Befestigungspunkte F5II, F5III, an der das Reaktionsmoment des Getriebes aufgenommen wird; auf der gegenüberliegenden Befestigungsstelle F6 ist kein Drehmoment bzw. Reaktionsmoment des Getriebes zu übertragen, da diese Befestigungsstelle F6 vorwiegend zur Lagefixierung des Getriebes HVG; MVG dient. Auf diese Weise wird erzielt, daß oben genannte lastabhängige bzw. stoßabhängige Gehäuseverformungen des Hauptgehäuses 1 von Bauelementen des stufenlosen Getriebes HVG; MVG ferngehalten werden. Die Befestigungsart entspricht einer Dreipunktlagerung bezogen auf die jeweiligen Eckpunkte der Befestigung F6 Punkt I und F5 Punkt II und Punkt III (siehe Fig.3hg', sie stellt die Draufsicht auf die Flanschfläche von Fig.3hg dar). Um eine sichere Abstützung des Reaktionsmomentes zu gewährleisten, können auf der drehmomentaufnehmenden Seite F5 beliebig viele Befestitungspunkte, z.B. inform einer mit mehreren Schrauben ausgeführten Schraubverbindung, verwendet werden. Die Befestigungsseite F5 kann, wie erwähnt, an der Getriebeeingangs- oder -ausgangsseite oder auch dazwischen liegen, wobei jedoch darauf zu achten ist, daß ausreichend großer Abstand zwischen den Befestigungspunkten F6 und F5 gegeben ist. Bevorzugt sollte die mit höherem Drehmoment belastete Ausgangsseite F5 verwendet werden. Zur genauen Lagefixierung können Zentrierstifte dienen. Die Getriebebefestigung F5, F6 kann vorzugsweise am Getriebegehäuse 1, wie erwähnt, oder auch am Getriebedeckel 1a vorgesehen sein. Zu bevorzugen ist jedoch die Befestigung des Gesamtgetriebes am Getriebegehäuse. Dies hat den Vorteil, daß der Befestigungsrahmen des Getriebes HVG; MVG mit Öffnungen zur Montage der Wellenverbindungen F1 und F2 der Eingangs- und Ausgangswelle des Getriebes versehen werden kann. Ein weiterer Vorteil hinsichtlich des Geräuschverhaltens ist bei dieser Lösung dadurch gegeben, daß Körperschallschwingungen des Getriebes vom Gehäusedeckel ferngehalten werden können. Um Fertigungsungenauigkeiten ausgleichen zu können bzw. mit dem Ziel höhere Fertigungsungenauigkeiten zulassen zu können, ist es zweckmäßig, die Wellenverbindungen F1 und F2 am Getriebeein- und -ausgang mit entsprechend großem Spiel zu versehen oder kardanische Verbindungen in bekannter Art, z.B. in Zahnmuffenart, vorzusehen. Die beschriebene Erfindung hat den weiteren Vorteil, daß ein sehr schneller Austausch des Getriebes HVG; MVG möglich ist und damit Werkstattkosten und der Werkstattaufenthalt auf ein Mindestmaß gesenkt werden kann und darüber hinaus das Getriebe HVG; MVG separat komplett herstell- und prüfbar ist und als Austauschgetriebe dienen kann.

Eine weitere Ausführungsform der Erfindung sieht vor, wie in Fig.3hi' dargestellt daß das stufenlose Getriebe bzw. stufenlose Leistungsverzweigungsgetriebe HVG; MVG als Kompaktgetriebe in kompletter oder teilkompletter Ausführung eingangs- und ausgangsseitig über jeweils eine Zentrierlagerung F7 und F8 gelagert ist, wobei über eine oder mehrere, vorzugsweise geräuschmindernde elastische Drehmomentstützen 4e' das Reaktionsmoment des Getriebes HVG; MVG am Getriebegehäuse 1 oder an einem der feststehenden Gehäuse-Elemente, z.B. dem Getriebedeckel 1a abgestützt wird. Die zentrale Getriebelagerung F7 bzw. F8 kann zusätzlich mit zwischengelagerten geräusch- und schwingungsmindernden Lagerelementen F9' zur Optimierung des Geräuschverhaltens ausgeführt werden. Die Drehmomentstütze kann verschiedenartig ausgebildet sein, z.B. ähnlich wie in Fig.3hi dargestellt, bei der die zwischengelagerten elastischen Elemente 4f oder 4g zwischen einem mit dem Gehäuse verbundenen Trägerelement F7' bzw. F8' und dem Gehäuse-Element G des stufenlosen Getriebes zur Aufnahme des Reaktionsmomentes zwischengelagert sind, wobei eine beliebige Anzahl der elastischen Elemente 4f bzw. 4g, z.B. in Kugel- oder Kegelform, vorgesehen werden können. Die Drehmomentstütze kann zusätzlich auch für die Axialfixierung des Getriebes ausgelegt werden. Im Hinblick auf Montagefreundlichkeit ist eingangs- und ausgangsseitig jeweils ein Trägerelement F7' bzw. F8', vorzugsweise in Flanschform mit Zentrierung, vorgesehen, welches z.B. über eine Schraubverbindung F4' die Verbindung des Getriebes MVG; HVG mit dem Hauptgehäuse 1 auf einfache und montagefreundliche Weise ermöglicht. Die vorbeschriebene Getriebeausführung ist für Inline-Bauweise, wie z.B. in den Fig.3hf bis 3hj' und 3hn dargestellt, als auch für Bauformen mit achsversetztem Hydrostatgetriebe, wie in den Fig.3hc, 3he, 3hp aufgezeigt, anwendbar, wobei jedoch die beiden Getriebelagerstellen F7 und F8 koaxial zur Eingangswelle 1c liegen müssen (in den Zeichnungen nicht dargestellt). Hydrostat-Getriebe mit Summierungs- und Schaltgetriebe 5c bilden bei letztgenannter Ausführung ebenfalls eine komplette Baueinheit. Bei dieser Ausführungsform gem. Fig.hi' ist das stufenlose Getriebe MVG; HVG wie in den bereits beschriebenen Ausführungsformen seitlich durch eine Gehäuseöffnung 1a' einführ- und einmontierbar, um die Vorteile der Montage- und Servicefreundlichkeit, wie bereits beschrieben, zu nutzen. Es ist aber auch nach überlicher Art in ein Getriebegehäuse, z.B. ohne seitlichem Gehäusedeckel, einbaubar.

Die Erfindung zeichnet sich desweiteren dadurch aus, daß wie in den Figuren 3hh, 3hi, 3hj, 3hj' und 3hq dargestellt und an obiger Stelle teilweise erläutert, das komplette oder nahezu komplette stufenlose Leistungsverzweigungsgetriebe (hydrostatisches Verzweigungsgetriebe HVG) eine Getriebe-Einheit bildet, die verschiedenartig, das heißt in verschiedenen Ausführungsformen der Leistungsverzweigung, insbesondere mit unterschiedlicher Anzahl an Schaltbereichen, z.B. 2-Bereichsgetriebe Fig.3hf oder 4-Bereichsgetriebe Fig.3hp, ausgeführt sein kann und an verschiedene Fahrzeugforderungen anpaßbar ist. Das Leistungsverzweigungsgetriebe HVG ist hierbei als Kompakt-Getriebe mit oder ohne Steuergerät 1e ausgebildet, das auf sehr einfache Art und Weise in die Gehäuseöffnung 1a' eines Hauptgehäuses 1 , z.B. bei einem Traktor, eingeführt werden kann und nur auf einer Seite, insbesondere der Abtriebsseite über eine Verbindungseinrichtung, insbesondere einer Schraubverbindung F4 , mit dem Hauptgehäuse 1 verbindbar ist. Die Gehäuse-Öffnung 1a' kann hierbei relativ klein sein, da durch die spezielle Getriebeform des HVG, die in der aufgezeigten Ausführung annähernd in einer zylindrischen Form ausführbar ist und wie in der Fig. 3hi dargestellt, geringen Einbau- bzw. Montageraum 1a" beansprucht. Das Steuergerät 1e bzw. 1e' ist hierbei zweckmäßigerweise am Getriebe-Gehäuse 1 oder , wie in Fig. 3hq dargestellt, am Gesamtgetriebe HVG angebracht.

Die antriebsseitige Verbindung mit dem Fahrzeugmotor kann auf übliche bekannte Art erfolgen, z.B. durch eine Muffen- oder Flanschverbindung (nicht dargestellt) oder auch einer direkten Verbindung mit dem Schwungrad des Antriebsmotors mittels eines zwischengeschalteten Schwingungsdämpfers wie ansich bekannt.

Durch den Wegfall von Stirnradstufen, die z.B. bei parallel versetzt angeordnetem Hydrostat-Getriebe als Triebverbindung erforderlich sind, ergeben sich besondere Vorteile hinsichtlich Bauraum, Kosten, Wirkungsgrad, Montage- und Servicefreundlichkeit. Desweiteren besteht der Vorteil, daß ein sehr rascher Getriebe-Austausch (Austausch-Getriebe), Werkstattkosten und Werkstattzeit auf ein Mindestmaß gesenkt werden können. Damit werden wesentliche Aufgaben dieser Erfindung erfüllt.

Bei Getriebe, wie in den Figuren 3hf bis 3hi dargestellt, ist der Antriebsmotor bevorzugt achsgleich zur Antriebswelle 1c des Getriebes angeordnet, wobei das Achsdifferential DIF achsversetzt zur Antriebswelle liegt. Dies hat den Vorteil, daß ein einfacher Zapfwellenanschluß ohne zwischengeschaltete Stirnradstufen möglich ist, indem die Antriebswelle 1c zentral durch das Getriebe geführt wird und der Zapfwellenanschluß über eine Wellenverbindung F3 , z.B. inform einer Steckverbindung mit Mitnahmeprofil realisierbar ist. Bei Ausführung gem. Fig. 3hj, 3hj' und 3hq erfolgt der Getriebe-Abtrieb auf gleicher Höhe wie das Achsdifferential DIF . Bei dieser Ausführung ist es nicht erforderlich, die Antriebswelle 1c durch das Getriebe bis zum Abtrieb zu führen. Je nach Fahrzeugforderungen kann hier eine entsprechende Auswahl aus den verschiedenen Ausführungsformen der Getriebe getroffen werden. Bei Getriebe-Ausführung gem. Fig. 3hj' ist die Antriebswelle 1c' achsversetzt zur Antriebswelle des Getriebes HVG dargestellt, wobei über eine Stirnradstufe 26c' die Triebverbindung zur Antriebswelle 1c und dem Getriebe HVG hergestellt wird. Der Zapfwellenanschluß erfolgt bei dieser Getriebe-Ausführung durch eine über oder neben dem Getriebe HVG parallel versetzt angeordneten Welle 2e. Bei dieser Ausführungsform gem. Fig. 3hj' ist es zweckmäßig, die Gehäuse-Öffnung auf einer der Getriebe-Seiten anzubringn (nicht dargestellt).

Das Getriebe HVG kann auch als separates stufenloses Getriebe mit komplett abgeschlossenem Gehäuse ausgeführt werden wie in Fig. 3hq dargestellt, welches z.B. an eine Fahrzeugachse über eine entsprechende Verbindung (Schraubverbindung F4) anbaubar ist. Wie in Fig. 3hi dargestellt, ist gem. der Erfindung das Hydrostat-Getriebe 4c als eine eigene oder als extra abgekapselte Baueinheit mit den Hydrostat-Einheiten A und B ausgebildet, auch das Summierungsplanetengetriebe in verschiedensten Ausführungsformen, wie bereits oder nachfolgend beschrieben, und die Kupplungen bzw. Bereichskupplungen oder/und Bremsen zum Schalten der entsprechenden Schaltbereiche sind erfindungsgemäß vorteilhafter Weise zu einer Baueinheit inform einer Getriebewalze 5c zusammengefast. Hydrostat-Getriebe 4c und die Getriebewalze 5c werden über ein Gehäuse bzw. Trägerelement G miteinander verbunden. Das Hydrostat-Getriebe 4c ist, wie in ähnlicher Form bereits beschrieben, gemäß der Erfindung gegenüber dem Gehäuse und Trägerelement G geräusch- und schwingungsmindernd gelagert durch eine entsprechende, bevorzugt elastische Dämpfungseinrichtung 4e, 4h. Auf sehr kostengünstige Weise werden gem. der Erfindung elastische, insbesondere aus Gummi bestehende Elemente 4f bzw. 4g in entsprechende Ausnehmungen 4e' , die in das Hydrostat-Gehäuse 4c und das Trägerelement G eingearbeitet sind, eingelagert. Die elastischen Dämmelemente können in Kugelform 4f oder Kegelform 4g oder in weiteren, nicht dargestellten Formen ausgebildet sein. Die entsprechenden Ausnehmungen 4e' am Hydrostat-Getriebe 4c und dem Trägerelement G stellen hierbei vorzugsweise Kegelbohrungen dar, so daß bei Auftreten eines Reaktionsmomentes am Hydrostat-Getriebe neben der Drehmoment-Abstützung eine dem Drehmoment entsprechende Axialkraft erzeugt wird, die an einem entsprechenden Dämmelement 4h , der bevorzugt als Reibring ausgebildet ist, abgestützt wird. Dies hat den Vorteil einer sehr wirkungsvollen Reibdämpfung. Die vorgenannten Kegelbohrungen 4e' sind sehr kostengünstig, jeweils in einem einzigen Arbeitsgang herstellbar. Die Öl- und Steuerdruckverbindungen vom Steuergerät 1i zum hydrostatischen Verzweigungsgetriebe HVG erfolgt zweckmäßigerweise über Steckverbindungen, die über bekannte Anschlüsse 3a mit O-Ring-Abdichtung ebenfalls kostengünstig realisierbar ist.

Die erfindungsgemäße Getriebe-Ausführung hat den weiteren Vorteil, daß der Achsabstand a' sehr klein und somit den unterschiedlichsten Fahrzeugforderungen angepaßt werden kann.

Wie bereits erwähnt, sind verschiedene Ausführungen des Leistungsverzweigungsgetriebes möglich. In Fig. 3hn ist ein Leistungsverzweigungsgetriebe dargestellt, bei dem zwischen dem Hydrostat-Getriebe 4c und dem Summierungsplanetengetriebe PS3 die Schaltkupplungen K1, K2 angeordnet sind. Das Summierungsplanetengetriebe PS3 , gem. Fig. 3hn, ist vierwellig ausgebildet und besitzt drei Eingangs- und eine Ausgangswelle. Die erste Eingangswelle E1 ist mit der ersten Hydrostat-Einheit A und der ersten Welle a2' des Summierungsplanetengetriebes ständig verbunden. Die zweite Eingangswelle E1' sowie die zweite Eingangswelle E2' des Summierungsplanetengetriebes ist wechselweise über Kupplung K1 bzw. K2 mit der zweiten Hydrostat-Einheit B verbindbar. Die Ausgangswelle A1' des Summierungsplanetengetriebes ist mit der Abtriebswelle A' des Getriebes ständig verbunden oder, wie dargestellt, über eine Kupplung KV verbindbar. Das Summierungsplanetengetriebe PS3 besitzt eine mit der Ausgangswelle A1' verbundene Stegwelle , auf der ineinandergreifende Planetenräder Pl angeordnet sind. In erste Planetenräder greift ein mit der ersten Bereichskupplung K1 verbindbares Hohlrad H1' sowie ein mit der zweiten Kupplung K2 verbindbares Sonnenrad S1' ein. Zweite Planetenräder kämmen mit einem mit der Antriebswelle E1 verbundenem Hohlrad H2' . Das Summmierungsplanetengetriebe PS3 ist verschiedenartig ausführbar, z.B. auch mit zwei Planetensätzen (nicht dargestellt). Die Getriebe-Ausführung gern. Fig. 3hn besitzt zwei Vorwärts- und zwei Rückwärtsbereiche, wobei für den Rückwärtsbetrieb vorzugsweise ein Planetengetriebe PR4 vorgesehen ist, welches bei geschalteter Kupplung bzw. Bremse KR eine Fahrtrichtungs- bzw. Drehrichtungsumkehr bewirkt. Die Ausgangswelle A1' kann hierbei mit einem Sonnenrad und die Abtriebswelle A' mit einem Hohlrad ausgestattet sein, wobei der Steg der Planetenräder über eine Kupplung bzw. Bremse KR mit dem Getriebegehäuse für Rückwärtsfahrt verbindbar ist. Für die Vorwärtsfahrt wird die Ausgangswelle A1' über eine Kupplung KV mit der Getriebeausgangswelle A' , wie bereits erläutert, verbunden. Je nach Fahrzeugforderungen kann die maximale Rückfahrgeschwindigkeit beliebig angepaßt werden durch entsprechende Auswahl des Planetengetriebes aus der Planetengetriebereihe PR4, PR5, PR6 und andere, wie z.B. in den Zeichnungen gern. Fig. 3hk, 3hl und 3hm dargestellt und an früherer Stelle beschrieben.

Mit dem Ziel, die maximale Rückfahrgeschwindigkeit oder Anfahrzugkräfte unterschiedlichen Fahrzeugforderungen anpassen zu können, sieht die Erfindung verschiedene Ausführungsformen der Rückfahreinrichtung vor wie in den Fig. 3hk, 3hl, 3hm dargestellt. Vorgenannte Rückfahreinrichtungen sind bevorzugt für die Getriebe-Ausführungen nach Fig. 3hf bis 3hj' anwendbar, wobei der wesentliche Unterschied darin liegt, daß ein Abtriebsglied des Getriebes mit verschiedenen Planetengetriebe-Ausführungen - PR4, PR5, PR6 - verbindbar ist, wobei bei PR4 das genannte Getriebe-Abtriebsglied mit einem Sonnenrad S4 und die Getriebe-Ausgangswelle A' A" mit einem Hohlrad H4 verbunden ist und die Stegwelle St4 mit dem Gehäuse über eine Kupplung oder Bremse KR verbindbar ist. Bei Ausführung gern. Fig. 3hl besitzt die Rückfahreinrichtung ein Planetengetriebe PR5, wobei auf einer Stegwelle ineinandergreifende Planetenräder PI1 und PI2 angeordnet sind, wobei in erste Planetenräder PI1 ein mit einem Getriebe-Abtriebsglied verbundenes Hohlrad H3' eingreift und die Getriebeausgangswelle A'; A" mit einem weiteren Hohlrad H3" , das in zweite Planetenräder PI2 eingreift, verbunden ist. Die Rückfahreinrichtung gern. Fig. 3hm besitzt ein Planetengetriebe PR6 mit ineinandergreifende Planetenräder PI1 und PI2 , die auf einer Stegwelle St6 gelagert sind. Ein Abtriebsglied des Getriebes greift hierbei in ein Sonnenrad S6 ein, das mit ersten Planetenrädern PI1 kämmt. Die Abtriebswelle A'; A" ist mit einem mit zweiten Planetenrädern PI2 eingreifendes Sonnenrad S6' verbunden. Die Stegwellen St4; St5; St6 sind für den Rückfahrbereich jeweils über eine Bremse bzw. Kupplung KR mit dem Gehäuse verbindbar. Für niedrigere Rückfahrgeschwindigkeiten eignet sich die Ausführung gem. Fig. 3hk und für hohe Rückfahrgeschwindigkeit die Ausführung wie bereits in den Komplett-Getrieben Fig. 3hh bis 3hj' gezeigt. Bei Forderung nach annähernd gleichen Anfahrzugkräften wie bei Vorwärtsfahrt und gleichen Geschwindigkeitsverhältnissen eignen sich die Rückfahreinrichtungen mit den Planetengetrieben PR5 oder PR6 wie in den Fig. 3hl bzw. 3hm dargestellt.

Die Funktion des Getriebes nach Fig. 3hn entspricht in der Schaltweise bzw. im Schaltablauf und dem hydrostatischen Drehzahlverhalten der Getriebe-Ausführung nach Fig. 3hf, wobei im Anfahrzustand bei Fahrgeschwindigkeit „Null" und geschlossener Kupplung K1 das Hydrostat-Getriebe vorzugsweise von einem bis zum anderen Übersetzungs-Endpunkt voll durchgeregelt wird, wobei am Ende des ersten Schaltbereiches alle Glieder des Summierungsplanetengetriebes PS3 sowie die Glieder der zweiten Bereichskupplung K2 Synchron-Lauf aufweisen. In diesem Zustand kann die Kupplung K2 geschlossen und danach die Kupplung K1 geöffnet werden und darauf folgend das Hydrostat-Getriebe in die Gegenrichtung verstellt werden bis zu seinem Verstell-Endpunkt, an dem die Endübersetzung des Getriebes bzw. die Maximalgeschwindigkeit des Getriebes erreichbar ist. Das Getriebe besitzt somit zwei hydrostatisch-mechanische Schaltbereiche ähnlich wie vorgenannte Ausführung gem. Fig. 3hf. Alle Kupplungsschaltungen finden bei Synchronlauf der Kupplungsglieder statt, wobei im Anfahrzustand bei Fahrgeschwindigkeit „Null" die Welle E1' des Summierungsplanetengetriebes gleiche Drehzahl in gleiche Drehrichtung als die zweite Hydrostat-Einheit B aufweist, um ein ruckfreies Schließen der Kupplung K1 sicherzustellen.

In Fig. 3hr ist eine Getriebe-Ausführung gern. der Erfindung mit mechanischem Wandler 4d , insbesondere einem Umschlingungsgetriebe und einem nachgeschalteten Getriebe 5d , das bevorzugt als Leistungsverzweigungsgetriebe ausgeführt ist, dargestellt. Ähnlich wie vorgenannte Getriebe-Ausführungen ist auch dieses Getriebe gern. der Erfindung als Kompakt-Getriebe bzw. mechanisches Verzweigungsgetriebe MVG ausgeführt, welches durch eine Getriebe-Öffnung 1a' in ein Getriebegehäuse, z.B. eines Traktors, einbaubar bzw. an ein Getriebe, z.B. einer Triebachse 1A, über eine gleiche oder ähnliche Verbindungseinrichtung F4 anbaubar ist. Um eine möglichst kompakte Bauweise zu erzielen, ist das aus einer Primär-Einheit (Kegelscheibe 4dA) und einer Sekundär-Einheit (Kegelscheibe 4dB) bestehende mechanische Wandler-Getriebe so aufgebaut, daß die erste Primär-Einheit 4dA über eine Getriebestufe dA mit der Antriebswelle 1c und die Sekundär-Einheit 4dB über eine weitere Getriebestufe dB mit einem Getriebeglied des Summierungsplanetengetriebes oder Summierungsgetriebes 5d verbunden. Das Summierungsgetriebe 5d kann als Planetengetriebe mit einem oder mehreren Schaltbereichen ausgeführt werden, ähnlich der vorbeschriebenen hydrostatisch-mechanischen Getriebe-Ausführungen. Auch hier kann, wie dargestellt, die Abtriebswelle des Getriebes koaxial zur Eingangswelle 1c durch das Getriebe verlaufen und gleichachsig an ein Getriebe, z.B. ein Achsgetriebe 1A , angeschlossen werden. In einer weiteren, nicht dargestellten Ausführungsform ist das Differential-Getriebe DIF bzw. die Eingangswelle 2''' der Triebachse 1A bzw. des entsprechenden nachfolgenden Getriebes achsversetzt zur Eingangswelle 1c angeordnet und über eine entsprechende Stirnradstufe 2d mit der Getriebe-Abtriebswelle A' in Triebverbindung. Hierbei ist es möglich, wie bei Getriebeausführung nach Fig. 3hh, die Getriebe-Eingangswelle 1c zentral durch das Getriebe zu führen, um z.B. einen gleichachsigen Durchtrieb für eine Welle 2e' bzw. Zapfwelle oder PTO zu realisieren.

Bei allen Getriebe-Ausführungen mit Inline-Anordnung des Hydrostat-Getriebes und der Schalt- bzw. Getriebewalze, wie in den Fig. 3hf bis 3hq dargestellt, ist es zweckmäßig, die zweite Hydrostat-Einheit B , die in der Regel als Konstant-Einheit ausgebildet ist, auf ein kleineres Fördervolumen als die Verstelleinheit A auszulegen, um den leckölbedingten Drehzahlschlupf für die Bereichsschaltungen ausgleichen zu können. Dies kann auf einfache Weise durch einen entsprechend kleineren Winkel der Schrägscheibe oder bei verstellbarer Hydrostat-Einheit B durch entsprechende Sekundär-Verstellung ausgeglichen werden. Bei den Getriebe-Ausführungen mit parallel versetztem Hydrostat-Getriebe kann der Drehzahlschlupf durch entsprechende Übersetzungsanpassung in den verbindenden Stirnradstufen ausgeglichen werden.

Bei Leistungsverzweigungsgetrieben, bei denen der Hydrostat innerhalb eines Schaltbereiches durch „Null" durchgeregelt wird, gibt es den Betriebspunkt des hydrostatischleistungslosen Zustandes, bei dem die Hydrostateinheit B die Drehzahl „Null" aufweist und das anstehende Drehmoment an dessen Welle 7c abgestützt wird. Zur Steigerung der Standfestigkeit sieht die Erfindung vor, diesen Betriebspunkt, speziell bei einer Getriebeausführung, die keine Einrichtung für Festpunkt-Schaltung KH zum Festhalten der Welle 7c besitzt, insbesondere bei länger anhaltendem Betrieb oder/und bei besonders hohen Belastungszuständen u. a. zu meiden. Dies geschieht derart daß eine geringfügige Übersetzungsänderung oder Änderung der Hydrostat-Verstellung über die Regeleinrichtung bewirkt wird, so daß eine gewisse Mindestdrehzahl der Hydrostateinheit B , die in der Regel als Konstanteinheit ausgebildet ist, aufrecht erhalten bleibt bzw. eingeregelt wird. Je nach Fahrzeugart und Art der Betriebseinsätze kann hier eine vorgegebene Mindestdrehzahl dieser Hydrostateinheit B vorprogrammiert werden, die z.B. bei 200 U/min als negative oder positive Drehzahl wirksam ist. Der Übersetzungsausgleich kann durch eine entsprechende, vorzugsweise automatische Anpassung der Antriebs-Drehzahl bzw. der Motordrehzahl geschaffen werden. Diese Funktion kann als Permanet-Funktion oder, wie erwähnt, in Abhängigkeit verschiedener Betriebssituationen, z.B. bei hohen Zugkräften, in Abhängigkeit von einem oder mehreren Betriebsparametern oder Betriebssignalen wie Lastsignal oder drehmomentbestimmenden Signalen, z.B. Drosselklappenstellung, Gaspedalstellung, Hydrostat-Drucksignal oder nach einer gewissen Verweildauer an diesem Übersetzungspunkt bei "Drehzahl „Null" der Hydrostatwelle 7c bzw. bei Verstellgröße „Null" oder anderem ausgelöst werden. Die genannte Mindestdrehzahl kann auch in Abhängigkeit eines oder mehrerer Betriebsparameter variabel sein. Bei sehr hohen Arbeitsdrücken ist eine höhere Mindestdrehzahl empfehlenswert. Die Getriebeübersetzung wird durch diese Maßnahme beim Leistungsverzweigungsgetriebe nur geringfügig beeinflußt.

Die Steuer- und Regeleinrichtung 5 berücksichtigt z.B. bei einer Vollbremsung und starken Verzögerungsvorgängen, bei der die Übersetzungsrückstellung nicht schnell genug ist, eine spontane Öffnung einer oder mehrerer der Bereichskupplungen. Um bei der nun neuen Geschwindigkeit nach dem Verzögerungsvorgang eine nahtlose Triebverbindung zu erhalten, wird in der Regeleinrichtung der Synchronpunkt der betreffenden Bereichskupplung gesucht durch entsprechende Übersetzungsanpassung bzw. automatische Anpassung der Hydrostat-Verstellung, die durch Drehzahlvergleich der entsprechenden Getriebeglieder über die Drehzahl-Sensoren realisiert wird. Nach erreichtem Synchronzustand der betreffenden Kupplung wird dann automatisch die Kupplung geschlossen, wonach die normalen Betriebsfunktionen wieder hergestellt sind.

Zur Verbesserung des Geräuschverhaltens, des Wirkungsgrades für den gesamten Antrieb Motor und Getriebe und zur Verbesserung der Standfestigkeit sieht die Erfindung desweiteren auch für Arbeitsmaschinen und Nutzkraftfahrzeuge einen Overdrive vor, mit dem Ziel, die Nenndrehzahl des Motors, z.B. von 2400 auf 2000 zu senken bzw. die max. zulässige Drehzahl nicht auszunutzen. Diese Maßnahme ist vorteilhaft, weil im Bereich zwischen 2000 und 2400 1/min in der Regel nur ein sehr geringfügiger Anstieg der Motorleistung gegeben ist, die durch den schlechter werdenden Wirkungsgrad von Motor und Getriebe in den meisten Fällen nahezu wettgemacht wird. Dies bedeutet, daß auch die Nebenantriebe - PTO, Zapfwelle - an die niedrigere Motor-Drehzahl, z.B. 2000 1/min , die somit als Nenndrehzahl gilt, angepaßt werden.

Die Erfindung beinhaltet desweiteren eine Sicherheitseinrichtung über eine Hydrostatdruckbegrenzung. Diese sieht vor, daß bei Erreichen eines maximal zulässigen Hydrostatdruckes eine automatische Übersetzungsrückstellung oder/und eine automatische Reduzierung der Motordrehzahl erfolgt, um eine weitere Druckerhöhung und Überlastung von Bauteilen zu vermeiden. In der Regel wird bei Anwendung hydrostatischer Komponenten ein Überdruckventil in den Hochdruckkreislauf des Hydrostaten eingebaut. Diese Sicherheitseinrichtung ist auf einen bestimmten zulässigen Druck, z.B. von 450 bar ausgelegt, der in der Regel noch eine relativ hohe Lebensdauer der einzelnen Bauteile verspricht. Die Hydrostatkomponenten sind in der Regel gegenüber dem oben genannten zulässigen Druck kurzzeitig auf einen weit höheren Druck belastbar. In der Praxis treten jedoch Betriebszustände auf, die nur kurzzeitig eine außergewöhnlich hohe Zugkraft fordern, z.B. bei steilen Garagenein- oder -Ausfahrten, beim Überfahren von extremen Bodenunebenheiten oder plötzlichem Auftreten hoher Bodenwiderstände bei Arbeitsmaschinen und ähnlichem. Die Erfindung sorgt dafür, daß die zulässige zeitbegrenzte Überhöhung des Hydrostatdruckes ausgenutzt werden kann. Zu diesem Zweck dient ein Drucksensor oder wenigstens ein mit dem Hydrostatkreislauf in Wirkverbindung stehendes Sicherheitselement, z.B. ein elektrischer Druckschalter, welches bei Erreichen des genannten Grenzdruckes von z.B 450 bar dies der Getrieberegelung bzw. -Steuerung signalisiert, worauf eine Übersetzungrückstellung ausgelöst werden kann. Mit dieser Einrichtung können die in der Regel notwendigen beiden sehr kostenaufwendigen Druckbegrenzungsventile eingespart werden. Mit Rücksicht darauf, daß kurzzeitig auftretende Lastüberhöhungen und entsprechende Zugkraft- und Druckspitzen, wie oben beschrieben, von der Hydrostatik zu bewältigen sind, sieht die Erfindung vor, daß nach Erreichen des genannten Grenzdruckes nicht eine sofortige Übersetzungsrückstellung ausgelöst wird, sondern dies erst nach einer vorgegebenen Zeitphase erfolgt. Je nach Art des Fahrzeuges oder/und Einsatzart kann diese Zeitphase konstant oder variabel in Abhängigkeit zu verschiedenen Betriebsparametern vorprogrammiert sein. Die Zeitphase kann als fester Wert, z.B. 1 oder 2 Minuten oder/und in Abhängigkeit eines oder mehrerer Betriebswerte, z.B. zur Betriebstemperatur, Motor- oder/und Hydrostatdrehzahl als variable Größe vorgegeben werden. Innerhalb dieser Zeitphase stellt die Reifenrutschgrenze die Limitierung dar. Eine sehr einfache und kostengünstige Lösung stellt die genannte Einrichtung mittels eines, bevorzugt am Hydrostaten 4c sitzenden elektrischen Druckschalters dar. Eine weitere Ausführungsform sieht einen Stufendruckschalter vor, der z.B. bei einem ersten Sicherheitsdruckpunkt von 450 bar und bei einem zweiten höheren Sicherheitsdruckpunkt von z.B. 650 bar anspricht. Bei dieser Lösung wird beispielsweise bei Überschreiten des ersten Druckpunktes die oben genannte zeitabhängige Übersetzungsrückstellung und nach Erreichen bzw. Überschreiten des zweiten Druckpunktes eine sofortige Übersetzungsrückstellung ausgelöst, wobei vorzugsweise die Rückstellgeschwindigkeit vom Drucksignal e bestimmt wird. Anstelle des genannten Stufendruckschalters können auch zwei oder mehrere getrennte Druckschalter eingesetzt werden. Eine weitere Ausführungsform dieser Sicherheitseinrichtung wird durch einen Drucksensor verschiedener bzw. bekannter Art, z.B. ein Proportionalventil oder einen mit dem Hydrostatdruck in Wirkverbindung stehendes Potentiometer mit druckabhängiger Signalgröße, welche möglicherweise auch für andere Funktionen dienen können, realisiert. Mit dieser Einrichtung ist es möglich, eine gezielte, von verschiedenen Betriebsparametern, z.B.

der Betriebstemperatur, Motordrehzahl, Hydrostatdrehzahl, Hydrostatverstellung oder/und anderen Werten abhängige Übersetzungsrückstellung zu verwirklichen. Ein im Hydrostatkreislauf 206, 207 eingebautes Wechselventil 210 sorgt dafür, daß immer der Hochdruck an der Sicherheitseinrichtung zur Verfügung steht.

Wie oben erwähnt beinhaltet diese Sicherheitseinrichtung desweiteren eine Hydrostatdruckbegrenzung durch Beeinflußung der Motoransteuerung bzw. Motordrehzahl, derart daß bei erreichtem Grenzdruck bzw. einer vorgegebenen Druck-Charakteristik oder in Abhängigkeit eines vorgegebenen Drucksignals e eine entsprechende Anpassung der Motoransteuerung bzw. der Drosselklappenstellung erfolgt. Zum Beispiel kann innerhalb einer Beschleunigungsphase bei Erreichen eines vorgegebenen Grenzdruckes oder Grenzwertes inform eines konstanten oder veränderlichen Wertes der Motor in seiner Drehzahl so geführt werden, daß die vorgegebene Drucklimitierung oder Druck-Charakteristik automatisch eingehalten bzw. nicht überschritten wird. Dies bedeutet, daß z.B. in Abhängigkeit eines Hydrostat-Drucksignals e eine automatische Beeinflußung oder Ansteuerung der Motorregelung und/oder der Übersetzungsregelung des Getriebes erfolgt, so daß eine Verringerung der Motordrehzahl oder/und Fahrgeschwindigkeit bewirkt wird. Anstelle des Hydrostat-Drucksignals können auch andere, z.B. motorseitige Lastsignale oder Betriebssignale wie Drosselklappen-Stellung, Gaspedal-Stellung, Drehmoment-Sensor u.a. verwendet werden. Bei kleineren Hydrostatdrehzahlen oder/und kleinerer bzw. mittlerer Verstellgröße des Hydrostaten oder/und niedriger Betriebstemperatur sind höhere Drücke oder/und Betriebszeiten zulässig. Dies kann mit diesen Sicherheitseinrichtungen entsprechend berücksichtigt und vorprogrammiert werden. Bestimmend für die genannten Belastungsgrenzen oder die genannte Belastungs-Charakteristik für den Hydrostaten sollte das Lastkollektiv des betreffenden Fahrzeuges sein.

Der besondere Vorteil dieser Einrichtung besteht darin, daß eine sonst notwendige Hydrostatüberdimensionierung verhindert wird und die Grenzen der Auslastungsfähigkeit, insbesondere hinsichtlich der Kosten und des Bauraumes. ausgenutzt werden können. Ein weiterer Vorteil liegt darin, daß im Teillastbetrieb mit wirkungsgradgünstigeren Hydrostatdruck gefahren werden kann.

Diese Sicherheitseinrichtung ist erfindungsgemäß auch für reinhydrostatische Antriebe verschiedener Art ohne Leistungsverzweigung sinnvoll anwendbar, wodurch eine höhere Ausnutzbarkeit der Hydrostatkomponenten möglich ist.

Um eine sichere und komfortable Stillstandsregelung und Anfährregelung zu erhalten, ist gemäß der Erfindung vorgesehen, daß das Bremspedal ähnliche Funktion wie das beschriebene IFA-Pedal (siehe Fig. 8a, 8ab, 8ac) aufweist. Bei dieser Ausführungsart ist vorgesehen, bei Fahrzeugstillstand und vorgewählter Fahrtrichtung das Brems- bzw. IFA-Pedal zu betätigen, welches bewirkt, daß die Getriebeübersetzung über das Bremspedal-Signal f auf Fahrzeugstillstand eingeregelt wird, was bedeutet, daß beim Halten an einer Steigung oder einem Gefälle das Hydrostatgetriebe auf eine entsprechende Verstellgröße eingeregelt wird, wobei der Leckö<lverlust des Hydrostatgetriebes durch entsprechende Winkelkorrektur bzw. Verstellkorrektur X oder Y ausgeglichen wird. Beim Umschalten, z.B. von Vorwärts auf Rückwärts bei stehendem Fahrzeug an einer Steigung oder einem Gefälle, ist innerhalb der Umschaltphase, das heißt bei Betätigen des Wählhebels von Vorwärts- auf Rückwärtsstellung oder umgekehrt eine Winkelkorrektur bzw. Verstellkorrektur des Hydrostatgetriebes entsprechend einem Korrekturmaß Z (siehe Fig. 7ac) erforderlich. Um innerhalb dieser Umschaltphase ein Wegrollen zu verhindern, sieht die Erfindung vor, daß z.B. bei Stillstand an einer Steigung neben der bereits geschlossenen Kupplung KV zusätzlich zunächst die Kupplung KR automatisch schließt, was ein Blockieren der Abtriebswelle bewirkt und daß innerhalb beider geschlossener Kupplungen KV und KR eine Korrektur des Hydrostatgetriebes um das Maß Z erfolgt. Die Information über die notwendige Verstellgröße Z erhält das System aus der vorhergehenden Einstellung bzw. Korrekturstellung Px , die der Korrekturgröße in Schaltstellung „Vorwärts" entspricht. Innerhalb dieser Umschaltphase wird also eine automatische Korrekturverstellung von Punkt Px nach Punkt Py ausgelöst, wobei an Stellung Py die Drehmomentabstützung am Hydrostatgetriebe erfolgt ohne dabei die Betriebsbremse zu belasten. Nach Loslassen der Bremse bzw. des IFA-Pedals wird der Anfahrvorgang in die nun vorgewählte neue Fährtrichtung eingeleitet durch entsprechende Hydrostatverstellung. Die Anfahrgeschwindigkeit kann nach einem vorgegebenen Programm, wie an früherer Stelle in Verbindung mit dem IFA-Pedal bereits beschrieben, realisiert werden. Beim Umschaltvorgang von Rückwärts auf Vorwärts ist umgekehrtes Funktionsverhalten gegeben, wobei dementsprechend die Hydrostatverstellung von Korrekturstellung Py auf Px innerhalb der Umschaltphase bzw. Wählhebelveränderung gegeben ist.

Für den Umschaltvorgang von Vorwärts auf Rückwärts und umgekehrt kann auch die Betriebsbremse zuhilfe genommen werden als zusätzliche Funktion oder Funktionsersatz anstelle der oben beschriebenen Blockierungsfunktion für die Abtriebswelle durch Schließen bzw. Geschlossenhalten beider Kupplungen KV und KR während der Hydrostat-Korrekturphase. Die hier erwähnte Betriebs-Bremsfunktion kann als automatische Funktion in das Umschaltprogramm einbezogen werden oder/und in Abhängigkeit zur Betätigungskraft des IFA-Pedals bzw. Bremspedals stehen.

Der gleiche Funktionsablauf für die Stillstands- und Anfahrregelung kann auch bei einer ansich bekannten Null-Punkt-Regelung realisiert werden, wobei keine Bremspedal- bzw. IFA-Pedal-Betätigung erforderlich ist, sondern der gesamte Funktionsablauf über das Fahrpedal bzw. Gaspedal erfolgt und der Fahrzeugstillstand sich automatisch bei losgelassenem Fahrpedal einstellt.

## Patentansprüche

1. Stufenloses Getriebe, insbesondere hydrostatisches Getriebe, mit oder ohne Leistungsverzweigung mit einem hydrostatischen (4c) oder mechanischen Wandler mit hydrodynamischem Retarder (78; 83c) oder hydrostatischem Retarder (201) oder elektrischem Retarder **dadurch gekennzeichnet,** daß der Retarder (78; 83c; 201) bei Betriebsbremsung automatisch wirksam wobei in Abhängigkeit des Betätigungs-Signals (a) neben der Betriebsbremse auch die Retarderbremse (78; 83c; 201) wirksam wird, wobei die Retarderbremskraft einen Teil oder die volle Betriebsbremskraft übernimmt und daß vorzugsweise ein Aufteilungsverhältnis der Betriebsbremskraft und der Retarderbremskraft (FBR) durch ein vorgegebenes Programm bestimmt wird.

2. Stufenloses Getriebe, insbesondere mit hydrostatischer Leistungsverzweigung bevorzugt für Kraftfahrzeuge mit einem oder mehreren Schaltbereichen mit oder ohne einer Einrichtung zur Hydrostat-Überbrückung inform einer Festpunktschaltung (KH, KB, KD) mit einer ersten Hydrostateinheit (A) verstellbaren Volumens und einer zweiten Hydrostateinheit (B) konstanten oder verstellbaren Volumens mit einem Summierungsplanetengetriebe zum Aufsummieren der hydraulischen und mechanischen Leistung, **dadurch gekennzeichnet,**

    daß das Hydrostatgetriebe (4c; 4c') bei geschaltetem Übersetzungsfestpunkt als Hydrostat-Retarder steuer- und regelbar ist, wobei die Hydrostat-Retarder-Funktion automatisch einschaltbar ist, indem das Einschalt-Signal (SBH) für den Hydrostat-Retarder aus einer vorgegebenen Soll-Geschwindigkeit (Tempomat-Einstellung oder Fahrpedal-Einstellung) resultiert, wobei ein Abtriebsdrehzahl-Signal d oder/und geschwindigkeitsbestimmende Signale für die Bremsregel-Funktion wirksam sind und daß ein Motor-Drehzahlsignal bei einer vorbestimmten Drehzahlgröße bzw. Drehzahlcharakteristik bestimmt, wann eine Umschaltung in einen anderen Übersetzungsfestpunkt erfolgt bzw. erfolgen muß.

3. Getriebe nach dem Oberbegriff des Anspruches 1 oder 2 **dadurch gekennzeichnet,** daß die Bremsregeleinrichtung (RB) derart wirksam ist, daß bei Betätigung der Bremse eine automatische Aufteilung der Bremskräfte aus der Betriebsbremse (BB), der Hydrostat-Retarder-Bremse (BH) oder/und der Motorbremse (BM) erfolgt,

daß die Brems-Regeleinrichtung eine feste oder unterschiedliche getrennt vorwählbare Bremsstrategien enthält,

daß die Betätigungskraft oder/und der Betätigungsweg das Maß der Bremskraft bestimmt, wobei eine automatische Aufteilung der Bremskraftanteile auf die Betriebsbremse (BB), die hydrostatische Retarder-Bremse (BH) und die Motorbremse (BM) erfolgt,

daß das Ansteuer-Signal (SBB) für die Betriebsbremse (BB) ein Primär-Signal darstellt und das Ansteuer-Signal (SHY) für die Hydrostat-Retrderbremse (BH) ein Sekundär-Signal ist, welches aus dem Primär-Signal (SBB) der Betriebsbremse resultiert bzw. mit diesem in Abhängigkeit bzw. in Wirkverbindung steht,

daß das Ansteuer-Signal für die Betriebsbremse (BB) durch ein Signal bzw. Rückmelde-Signal (SBH) des Hydrostatgetriebes beeinflußt oder übersteuert wird, derart daß der Anteil der Betriebsbremskraft (FBB) nach einem vorgegebenen Maß bzw. vorgegebenen Verhältnis, insbesondere um das Maß der Hydrostat-Bremskraft (FBB), verringert wird, wobei die Größe des entsprechenden Signals bzw. Rückmelde-Signals das Bremskraftanteil-Verhältnis bestimmt,

daß die Betriebsbremskraft (FBB) in einem vorbestimmten Verhältnis zur Gesamt-Bremskraft steht und in Abhängigkeit zu verschiedenen Betriebsparameteren oder/und einem Zeitparameter nach einer vorgegebenen Charakteristik verläuft, wobei die Betriebsbremskraft (FBB) bis auf Null abgesenkt werden kann, und daß bei Vorhandensein eines oder mehrerer Festpunktschaltungen vorzugsweise innerhalb der Umschaltphase von einem zum anderen Übersetzungs-Festpunkt eine automatische Bremskraftübernahme durch die Betriebsbremse erfolgt.

4. Getriebe nach Anspruch 1, 2 oder 3 **dadurch gekennzeichnet,** daß bei Ausfall der Hydrostat-Retarderbremse (BH) automatisch eine Übernahme dieser Bremskraft (FBB) durch die Betriebsbremse (BB) erfolgt.

5. Getriebe nach einem der vorgenannten Ansprüche **dadurch gekennzeichnet,** daß eine Einrichtung für Einstellung einer Konstant-Geschwindigkeit nach Art eines Tempomats vorgesehen ist, wobei eine automatische Bremskraftanpassung der Retarder-Bremskraft (FBH) durch entsprechende Hydrostat-Druckveränderung oder/und durch stufenlose Hydrostat-Verstellung mit oder ohne Motordrehzahlanpassung erfolgt,

daß ein Temperatur-Signal die Grenze der Bremsretarderleistung bzw. Kühlleistung signalisiert, wodurch eine automatische Veränderung bzw. Reduzierung einer vorgewählten Fahrgeschwindigkeit, z.B. durch automatischen Einsatz der Betriebsbremse (BB) und automatischer Rückregelung der Getriebeübersetzung bewirkt wird,

daß die Hydrostat-Retarderbremseinrichtung eine Fuß- oder Handbetätigung besitzt, wobei die Größe der Bremskraft (FB) in Abhängigkeit zur Betätigungskraft oder/und dem Pedalweg steht, wobei eine automatische Aufteilung der Gesamtbremskraft in Retarderbremskraft (FBH) und Motorbremskraft (FBM) durch angepaßte Getriebeübersetzung und Motordrehzahl realisiert wird.

6. Stufenloses Getriebe mit hydrostatischer Leistungsverzweigung mit zugeordneter Bremsanlage verschiedener Ausführungsform **dadurch gekennzeichnet,** daß nach einem Bremsvorgang nach Loslassen der Bremse die Getriebeübersetzung automatisch um ein definiertes Maß zurückgeregelt wird,

daß die nach Loslassen der Bremse wirksame Rückregelung der Getriebeübersetzung so groß ist, daß bei zumindest annähernd gleichbleibender Geschwindigkeit die schubbedingte Motordrehzahl-Anhebung voll oder teilweise ausgeglichen wird.

7. Getriebe nach einem oder mehreren der vorgenannten Ansprüche **dadurch gekennzeichnet,** daß bei Einsatz bzw. Wirksamwerden des ABS-Systems eine automatische Reduzierung oder Abschaltung des Hydrostatdruckes im Hydrostat-Retarder-Kreislauf ausgelöst wird oder

eine automatische Absenkung oder Abschaltung des Hydrostat-Retarders (BH) erfolgt, derart daß ein Bypaßventil (114c; 216) oder/und Druckbegrenzungsventil (204) oder/und eine entsprechende Veränderung der Hydrostat-Verstellung des Hydrostat-Getriebes (4c) wirksam wird oder daß bei Einsatz der ABS-Funktion eine automatische Absenkung des Hydrostat-Retarder-Bremsanteiles bei gleichzeitiger Zunahme des Betriebsbremsanteiles erfolgt, wobei eine sofortige Ausschaltung oder dosierte Rücknahme der Retarder-Bremskraft (FBH) bei gleichzeitiger Zunahme der Betriebsbremskraft (FBB) derart erfolgt, daß aus einem oder mehreren der ABS-Signale das Ansteuer-Signal (215) für die Druckreduzierung des Hydrostat-Retarders und gleichzeitig das Signal (SBB) für die entsprechende Anhebung der Betriebsbremskraft (FBB) ausgelöst wird.

8. Getriebe mit zugeordnetem Hydrostat-Retarder, insbesondere als Sekundär-Retarder (nicht dargestellt), bei dem wenigstens eine Hydrostateinheit verstellbaren oder konstanten Volumens von einer abtreibenden Welle des Getriebes angetrieben wird und dem Hydrostatgetriebe ein Ölkreislauf mit wenigstens einem Brems- bzw. Druckventil zugeordnet ist, wobei über ein Bremssignal eine Hydrostat-Verstellung oder/und ein Bremsdruck oder Hydrostatdruck aufgebaut wird, der ein Bremsmoment auf die Hydrostatwelle und der Abtriebswelle des Getriebes erzeugt **d adurch gekennzeichnet** daß die in vorgenannten Ansprüchen aufgezeigten Einrichtungen mit ihren Bremsfunktionen und Ansteuer-Signalen auch für diese Getriebeausführung gelten.

9. Getriebe nach einem oder mehreren der vorgenannten Ansprüche **dadurch gekennzeichnet,** daß bei Einsatz der ABS-Funktion die Absenkung der Retarder-Bremswirkung derart erfolgt, daß ein bevorzugt regelbares Bremsdruckventil (204) durch ein entsprechendes Signal (215) angesteuert wird und den Hydrostatdruck im Bremsdruckkreislauf (206, 207) soweit absenkt, als es zur Aufrechterhaltung einer zuverlässigen ABS-Wirkung erforderlich ist.

10. Getriebe nach einem oder mehreren der vorgenannten Ansprüche **dadurch gekennzeichnet,** daß die Summe der Bremskraft (FB) aus der Hydrostat-Retarderbremskraft (FBH) und der Betriebsbremskraft (FBB) besteht, wobei die Signalgrößen (SBB) für die Betriebsbremse (BB) und die Signalgröße (SBH) für die Hydrostat-Retarderbremse in annähernd gleichem Verhältnis zu ihren jeweiligen Bremsgrößen stehen, wobei bei Ausfall oder Reduzierung der einen Signalgröße die jeweils andere Signalgröße so verändert wird, daß die Gesamtbremskraft annähernd gleichbleibend aufrecht erhalten bleibt,

daß bei Wirksamwerden eines Signales, das infolge der zulässigen Öltemeperatur zur Reduzierung der Hydrostat-Retarderbremsleistung führt, eine automatische Rückstellung der Getriebeübersetzung oder/und Fahrgeschwindigkeitsreduzierung auslöst und eine gleichzeitige Zunahme der Betriebsbremsleistung wirksam wird.

11. Stufenloses hydrostatisch-mechanisches Lei-stungsverzweigungsgetriebe, bevorzugt für Kraft-fahrzeuge mit einem oder mehreren Schaltbereichen, bei dem innerhalb eines Schaltbereiches der Hydrostat von einer positiven zu einer negativen Verstellgröße oder umgekehrt verändert wird, wodurch ein „Null-Durchgang" der Drehzahl der Hydrostatwelle der zweiten Hydrostateinheit (B) entsteht **dadurch gekennzeichnet,** daß die Drehzahl „Null" der zweiten Hydrostateinheit (B) automatisch gemieden wird, so daß eine Mindestdrehzahl in der Nähe der Verstellgröße „Null" bzw. der Drehzahl „Null" einer Hydrostatwelle (7c) aufrecht erhalten bleibt oder eingeregelt wird.

12. Getriebe nach vorgenanntem Anspruch **dadurch gekennzeichnet,** daß eine Mindestdrehzahl der Hydrostatwelle (7c) der zweiten Hydrostateinheit (B) automatisch aufrecht erhalten oder eingeregelt wird, wobei das Ansteuer-Signal in Abhängigkeit zu einem oder mehreren Betriebswerten, insbesondere von lastabhängigen Signalen (Gas- bzw. Fahrpedal-Stellung, Drosselklappen-Stellung, Hydrostat-Druck u.a.) oder nach einem vorgegebenen Zeit-Signal angesteuert wird,

daß das Ansteuer-Signal für die automatische Vermeidung der Drehzahl „Null" bzw. Aufrecht-erhaltung oder Einstellung einer Mindestdreh-zahl der zweiten Hydrostateinheit (B) nach einer vorgegebenen konstanten oder variablen Verweildauer bei Drehzahl „Null" der Welle (7c) oder in deren Nähe ausgelöst wird, und daß bevorzugt eine automatische oder manuelle Anpassung der Antriebsdrehzahl bzw. Motordrehzahl zum Ausgleich der Übersetzungsänderung erfolgt.

13. Getriebe nach einem der Oberbegriffe der Ansprüche **dadurch gekennzeichnet,** daß für die Bereichsschaltung oder/und Festpunktschaltung zur Bestimmung des Öffnungssignals der alten Kupplung das Verstellvolumen (Vneu) aus (Valt) oder aus drehmomentbestimmenden Betriebsgrößen des Antriebsmotors oder/und des Getriebes bestimmt wird, wobei das bereits bestimmte (Vneu) bei Belastungsänderungen innerhalb der Schaltphase in angepaßtem Maße noch vor Auslösen des Öffnungssignals der alten Kupplung geändert oder korrigiert wird, um Schaltstöße, die durch innerhalb der Schaltphase auftretende Belastungs- oder Betriebssignal-Änderung entstehen würden, auszuschalten.

14. Getriebe nach Anspruch 13 **dadurch gekennzeichnet,** daß die Korrektur des bereits bestimmten neuen Verstellvolumens (Vneu) aus innerhalb der Schaltphase auftretenden Lastsignalen oder meßbaren Signalen (nMot; Gaspedaländerungssignal u.a.) von Motor oder/und Getriebe erfolgt.

15. Getriebe nach einem oder mehreren der Oberbegriffe der Ansprüche **dadurch gekennzeichnet,** daß für den Shuttle-Betrieb über das IFA-Pedal ein eigenes Fahrprogramm vorgegeben ist, welches bei Vorwahl des Frontlader-Betriebes einer Arbeitsmaschine oder Vorwahl einer Arbeitsphase mit erhöhtem Shuttle-Betrieb automatisch in Funktion tritt.

16. Getriebe nach einem der Oberbegriffe der Ansprüche **dadurch gekennzeichnet,** daß eine Schalthilfe-Einrichtung, insbesondere bei formschlüssigen Kupplungen vorgesehen ist, welche nach erreichtem Synchronzustand und ausgelöstem Schaltsignal zum Schließen der neuen Kupplung eine kurzzeitige Relativ-Verdrehung bzw.Synchronstöreffekt der beiden Kupplungshälften bzw. der beiden Kupplungsringe zueinander wirksam wird, um ein schnelles und sicheres Ineinandergreifen des beidseitigen Kupplungsprofiles zu gewährleisten, wobei eine einmalige oder mehrmalige Relativ-Verdrehung der Kupplungsglieder in eine oder in beide Drehrichtungen wirksam ist

und daß vorzugsweise die Schalthilfe-Einrichtung so ausgebildet ist, daß der Synchron-Störeffekt nach Rückmeldung eines Drucksignals der neuen Kupplung oder nach einer vorgegebenen variablen oder konstanten Zeitspanne ausgelöst wird, wobei vorzugsweise während des Synchron-Störeffektes eine kurzzeitige Druckrücknahme wirksam werden kann.

17. Hydrostatisches Getriebe oder Getriebe nach einem der Oberbegriffe der Ansprüche **dadurch gekennzeichnet,** daß das Getriebe mit einer Sicherheitseinrichtung ausgerüstet ist, welche vorsieht, daß bei Erreichen eines zulässigen Hydrostatgrenzdruckes ein Signal (e) ausgelöst wird, welches eine automatische Übersetzungsrückstellung des Getriebes oder/und eine automatische Reduzierung der Motordrehzahl innerhalb eines vorgegebenen bzw. zulässigen Hydrostatdruckbereiches bewirkt, wobei vorzugsweise das Drucksignal (e) aus einem elektrischen Druckschalter mit einer oder mehreren Druckstufen oder aus einem druckabhängigen Signal bzw. elektrischen Strom bzw. einem Drucksensor erfolgt.

18. Getriebe nach Anspruch 17 **dadurch gekennzeichnet,** daß die Übersetzungsrückstellung auf einem vorgegebenen Programm beruht, wobei vorzugsweie zeitabhängige oder/und temperaturabhängige Funktionen mitbestimmend sind

19. Getriebe nach Anspruch 17 **dadurch gekennzeichnet,** daß nach Ansprechen eines ersten Drucksignals, insbsondere bei Anwendung von Druckschaltern, eine begrenzte Rückstellung der Getriebeübersetzung oder/und der Motordrehzahl erfolgt und nach Ansprechen eines zweiten Drucksignals, das einem höheren Hydrostatdruck zugeordnet ist, eine Übersetzungs-Rückstellung bis Fahrgeschwindigkeit „Null" erfolgt, wobei die Rückstellgeschwindigkeit oder/und die Rückstellzeit der Getriebeübersetzung bzw. der Fahrzeuggeschwindigkeit von einem oder mehreren der Betriebssignale - Temperatur-Signal, Motordrehzahl-Signal u.a. - abhängig sein kann.

20. Stufenloses Getriebe, insbesondere mit hydrostatischer Leistungsverzweigung bestehend aus einer ersten Hydrostateinheit (A) verstellbaren Volumens und einer zweiten Hydrostateinheit (B) konstanten oder verstellbaren Volumens mit einem Summierungsplanetengetriebe zum Aufsummieren der hydraulischen und mechanischen Leistung **dadurch gekennzeichnet,** daß das Summierungsplanetengetriebe (PS1; PS1'; PS1") vierwellig ausgebildet ist und zwei Eingangswellen (E1' und E2') sowie zwei Ausgangswellen (A1' und A2') besitzt, wobei die erste Eingangswelle (E1') mit der Antriebswelle (1c) und der ersten Hydrostat-Einheit (A) und die zweite Eingangswelle (E2') mit der zweiten Hydrostat-Einheit (B) verbunden ist und die erste Ausgangswelle (A1') über eine Kupplung (K1) und die zweite Ausgangswelle (A2') über eine zweite Kupplung (K2) mit einer Abtriebswelle (A') wechselweise verbindbar sind, daß ein weiteres dreiwelliges Planetengetriebe (PR1'; PR4; PR5; PR6) zugeordnet ist, welches mit einem Planetengetriebeglied (Hohlrad H3' oder Sonnenrad S4; S6) mit der ersten Ausgangswelle (A1') des Summierungsplanetengetriebes (PS1; PS1'; PS1") und die zweite Welle (Sonnenrad SR' oder Hohlrad H4; H3") mit der Ausgangswelle (2c; 2c') verbunden ist und daß die dritte Weile (Steg PT2'; St5; St6) über eine Kupplung oder Bremse (KR) mit dem Gehäuse koppelbar ist (Fig. 3da; 3ha; 3hb; 3hd; 3hf; 3hg; 3hh;3hk; 3hl; 3hm u.a.).

21. Getriebe nach Anspruch 20 **dadurch gekennzeichnet,** daß das Summierungsplanetengetriebe (PS1; PS1') ineinandergreifende Planetenräder (PI1' und PI2') besitzt, wobei erste Planetenräder (PI2') in ein mit der Antriebswelle (1c; 1c") in Triebverbindung stehendes Hohlrad (HE1) und zweite Planetenräder (PI1') in ein mit der zweiten Hydrostateinheit (B) in Triebverbindung stehendes Hohlrad (HE2) eingreift und die erste Ausgangswelle (A1') die Stegwelle darstellt, welche über eine Kupplung (K1) mit der Ausgangswelle (A1') und die zweite Ausgangswelle (A2') des Summierungsplanetengetriebes ein Sonnenrad (SA) darstellt, welches über eine zweite Kupplung (K2) mit der Ausgangswelle (A') und Abtriebswelle (2c) verbindbar ist.

22. Getriebe nach Anspruch 20 und 21 **dadurch gekennzeichnet,** daß das Hydrostatgetriebe (4c) und die Antriebswelle (1c) versetzt zum Summierungsplanetengetriebe (PS1) angeordnet sind (Fig. 3da) oder

daß das Hydrostatgetriebe (4c'), das Summierungsplanetengetriebe (PS1') und die Kupplungen (K1 und K2) koaxial zueinander angeordnet sind (Fig. 3ha und 3hb), wobei bevorzugt die Antriebswelle (1c") und die PTO-Welle bzw. Zapfwelle eine durch das Getriebe führende Welle darstellen, wobei das Achsdifferential (DIF) parallel versetzt zur Antriebswelle (1c") angeordnet ist und über eine Zwischenstufe (2d) in Triebverbindung steht (Fig. 3hb) oder daß die Getriebe-Abtriebswelle (2c') als Hohlwelle ausgebildet ist und das Kegelritzel für den Kegeltrieb (KE) trägt (Fig. 3hb').

23. Getriebe nach einem der Oberbegriffe der Ansprüche, insbesonder Anspruch 20 **dadurch gekennzeichnet,** daß das Summierungsplanetengetriebe (PS1" gem. Fig. 3hd) vierwellig ausgebildet ist und zwei Eingangswellen (E1' und E2') sowie zwei Ausgangswellen (A1' und A2') besitzt, und aus zwei Planetenradstufen besteht, wobei die erste Eingangswelle (E1') mit der Stegwelle (St1") der ersten Planetenstufe, die zweite Eingangswelle (E2' mit dem Hohlrad (H2") der zweiten Planetenstufe verbunden ist, die erste Ausgangswelle (A1') mit dem Hohlrad (H1") der ersten Planetenradstufe und dem Steg (St2") der zweiten Planetenradstufe und die zweite Ausgangswelle (A2') mit dem Sonnenrad (S1') der ersten Planetenradstufe und dem Sonnenrad (S2') der zweiten Planetenradstufe verbunden ist (Fig. 3hd; 3hf, 3hg; 3hh u.a.).

24. Getriebe nach einem oder mehreren der vorgenannten Ansprüche **dadurch gekennzeichnet,** daß das Hydrostat-Getriebe (4c) parallel versetzt zur Antriebswell (1c") plaziert ist, wobei die Schaltwalze (5c), welche das Summierungsplanetengetriebe und die Schaltkupplungen beinhaltet, auf der Antriebswelle (1c") angeordnet ist und die erste Hydrostat-Einheit (A) getriebeausgangsseitig über eine Stirnradstufe (10b") und die zweite Hydrostat-Einheit (B) über eine weitere Stirnradstufe (228') eingangsseitig in Triebverbindung steht und daß die Abtriebswelle (2c") und das Achsdifferential (DIF) achsversetzt zur Antriebswelle (1c) angeordnet ist (Fig. 3hc), oder

daß das Hydrostatgetriebe (4c') parallel zur Antriebswelle (1c) angeordnet ist, wobei beide Hydrostat-Einheiten (A und B) antriebsseitig über Stirnradstufen die Triebverbindung aufweisen,wobei die erste Hydrostat-Einheit (A) über eine Stirnradstufe (10b') mit der Antriebswelle (1c) und die zweite Hydrostat-Einheit (B) über eine Stirnradstufe (228') mit der Schaltwalze (5c) in Triebverbindung steht und wobei die Schaltwalze (5c) auf der Antriebswelle (1c) angeordnet ist und die Abtriebswelle (2c") und das Differential (DIF) achsversetzt angeordnet oder nicht achsversetzt (wie in Fig. 3hb' dargestellt) angeordnet ist (Fig. 3he).

25. Stufenloses hydrostatisches Getriebe mit Leistungsverzweigung mit einer ersten Hydrostateinheit (A) verstellbaren Volumens und einer zweiten Hydrostateinheit (B) mit konstantem oder verstellbarem Volumen mit einem Summierungsplanetengetriebe zur Aufsummierung der hydraulischen und mechanischen Leistung mit oder ohne Schaltkupplungen (K1, K2) **dadurch gekennzeichnet,** daß die Hydrostateinheiten (A und B ), das Summierungsplanetengetriebe (PS1; PS1', PS1"; PS2; PS2'; PS3 u.a.) und gegebenenfalls Kupplungen/Bremsen (K1, K2, KR bzw. K1, K2, K3, K4, K5, KV, KR) koaxial zueinander angeordnet sind, wobei

- die Abtriebswelle (A") mit einer koaxial zum Verzweigungsgetriebe HVG liegenden Antriebswelle (2c''') verbunden bzw. verbindbar ist, wobei die genannte Antriebswelle (2c''') bevorzugt die Ritzelwelle eines Differential-Getriebes darstellt (Fig. 3hj; 3hj'; 3hq) oder
- daß die Abtriebswelle (A') über eine Getriebestufe (2d) mit einer achsversetzten Triebwelle (2c") verbunden bzw. verbindbar ist, wobei bei dieser Getriebeausführung mit oder ohne zentral durch das Getriebe führender mit der Eingangswelle (1c) verbundenen Welle (2e) ausgebildet ist (Fig. 3hf bis 3hi; 3ho u.a.).

26. Getriebe nach einem der Oberbegriffe der Ansprüche oder nach vorgenanntem Anspruch **dadurch gekennzeichnet,** daß das Hydrostatgetriebe (4c) mit den Einheiten (A und B) sowie die Getriebewalze (5c') eine Baueinheit bilden, die nach Art der Modulbauweise gemeinsam oder getrennt voneinander in das Getriebe einsetzbar sind und über Verbindungselemente (F1; F2) mit dem Antrieb (1ca) und der Abtriebswelle bzw. dem Abtriebsstrang (2d) fest verbindbar sind, wobei bevorzugt das Hydrostatgetriebe (4c) eine gemeinsame Baueinheit mit den Hydrostateinheiten (A und B) bildet und über ein oder mehrere elastische Elemente (4e) zur Drehmoment-Abstützung oder/und Radialfixierung gelagert ist (Fig. 3hg; 3hi).

27. Getriebe nach einem der Oberbegriffe der Ansprüche, insbesondere Anspruch 25 **dadurch gekennzeichnet,** daß die Hydrostat-Einheiten (A und B) und die Getriebeeinheit (5c), welche aus Summierungsplanetengetriebe und gegebenenfalls Kupplungen zum Schalten eines oder mehrerer Schaltbereiche besteht, koaxial zueinander angeordnet sind, wobei ein Gehäuse bzw. Trägerelement (G) vorgesehen ist, welches das Hydrostat-Getriebe (4c) mit Hydrostat-Einheiten A und B und Getriebe (5c) mit Summierungsplanetengetriebe und gegebenenfalls Schaltkupplungen trägt bzw. miteinander verbindet, derart daß eine gemeinsame Baueinheit (HVG) mit vorgenannten Getriebe-Komponenten (4c, 5c) gebildet wird, wobei vorzugsweise die Hydrostat-Einheitein (A und B) zu einer eigenen Baueinheit (4c) zusammengeschlossen sind, welche mit einer Einrichtung (4e, 4h) zur Geräusch- und Schwingungsminderung gegenüber dem Gehäuse bzw. Trägerelement (G) gelagert ist, wobei die Baueinheit (HVG) als Kompaktgetriebe ausgebildet ist und in oder an ein Hauptgehäuse (1), vorzugsweise eines Traktors, über eine Befestigungseinrichtung (Schraubverbindung F4) einbaubar bzw. anbaubar ist. (Fig. 3hi, 3hh; 3hj; 3hj', 3hg; 3hn; 3hq)

28. Getriebe nach einem der vorgenannten Ansprüche **dadurch gekennzeichnet,** daß das Getriebe (Kompaktgetriebe HVG) nur am Getriebe-Ausgang über Befestigungselemente (bevorzugt Schraubverbindung F4) am oder im Hauptgehäuse (1) befestigt ist (Fig. 3hg bis 3hj' und 3hq).

29. Getriebe nach einem oder mehreren der vorgenannten Ansprüche **dadurch gekennzeichnet,** daß das Hydrostat-Getriebe (4c) mit den Hydrostat-Einheiten (A und B) eine gemeinsame Baueinheit bildet und daß elastische Elemente (4f; 4g) vorgesehen sind, die in Ausnehmungen (4e') des Hydrostat-Getriebes bzw. Getriebegehäuses (4c) und dem Gehäuse bzw. Trägerelement (G) gelagert sind und derart wirksam sind, daß bei Auftreten eines Reaktionsmomentes am Hydrostat-Getriebe (4c) eine elastische Drehmoment-Abstützung gegeben ist, wobei vorzugsweise die Drehmoment-Abstützung so ausgebildet ist, daß eine axiale Kraftkomponente entsteht, wobei die Axialkraft an einem Reibelement (4h) abgestützt wird zur Erzeugung einer Reibdämpfung.

30. Getriebe nach einem oder mehreren der vorgenannten Ansprüche 25 bis 30 **dadurch gekennzeichnet,** daß für den Rückfahrbereich ein Planetengetriebe (PR1'; PR4; PR5; PR6) vorgesehen ist und daß für den Reversierbetrieb für Vorwärtsfahrt eine Bereichskupplung (K1) und für den Rückwärtsbereich eine Bremse oder Kupplung (KR) schaltbar ist, wobei für den Rückwärtsbereich ein Glied des Planetengetriebes (PT2'; St4; St5; St6) am Getriebegehäuse (G) festgehalten wird (Fig. 3hf; 3hk; 3hl; 3hm).

31. Getriebe nach einem oder mehreren der vorgenannten Ansprüche 25 bis 28 **dadurch gekennzeichnet,** daß das Getriebe (HVG) mit zwei Vorwärtsbereichen und einem Rückwärtsbereich (Fig. 3hf; 3hg; 3hh; 3hj; 3hj') oder mit vier Vorwärts- und zwei Rückwärtsbereichen (gern. Fig. 3ho) oder mit einem separaten Wendegetriebe (W1; W2; W3 Fig. 3b, 3c, 3ca) ausgebildet welche gleiche Anzahl an Vorwärts- und Rückwärtsbereichen ermöglicht.

32. Stufenloses Getriebe mit oder ohne Leistungsverzweigung mit einem stufenlosen Wandler (4d) mit oder ohne einem Summierungsgetriebe (5d), **dadurch gekennzeichnet,** daß der stufenlose Wandler (4d) als mechanischer Wandler, insbesondere als Umschlingungsgetriebe ausgebildet ist, wobei die beiden Wandler-Elemente (4dA und 4dB) achsversetzt zur Antriebswelle (1c) liegen und das Primärwandlerelement (4dA) über eine Stirnradstufe (dA) mit der Antriebswelle (1c) und die Sekundäreinheit (4dB) über eine Stirnradstufe (dB) mit dem Summierungsgetriebe (5d) in Triebverbindung steht und daß das Wandlergetriebe (4d), das Summierungsgetriebe (5d) koaxial zueinander angeordnet sind und eine gemeinsame Baueinheit bzw. mechanisches Verzweigungsgetriebe (MVG) bilden, welches über eine Verbindungseinrichtung (F4) in ein Hauptgehäuse (1), nicht dargestellt, oder an ein Getriebe (1a) anbaubar ist und wobei die Getriebe-Abtriebswelle (2; 2") mit einer koaxial zur Antriebswelle liegenden Eingangswelle (2"') verbunden ist (Fig. 3hr) oder daß die Getriebeabtriebswelle (2") über eine Stirnradstufe (nicht dargestellt) und einer achsversetzten Triebwelle vorzugsweise Ritzelwelle (2"') verbunden ist, wobei die Getriebeeingangswelle (1c) vorzugsweise zentral durch das Getriebe führt und getriebeausgangsseitig eine Anschlußmöglichkeit für PTO oder Nebenabtriebe bietet.

33. Getriebe nach einem der Oberbegriffe der Ansprüche **dadurch gekennzeichnet,** daß die Hydrostat-Einheiten (A und B), das Summierungsplanetengetriebe bzw. die Schaltwalze (5c bzw. 5e, 5d) mit oder ohne Kupplungen zum Schalten eines oder mehrerer Schaltbereiche koaxial zueinander angeordnet sind und eine gemeinsame Baueinheit (Verzweigungsgetriebe HVG) bilden, wobei die Baueinheit HVG bevorzugt Bestandteil eines Traktors oder einer Arbeitsmaschine ist und als gemeinsame Baueinheit in das Hauptgetriebegehäuse (1) durch eine entsprechende Gehäuse-Öffnung (1a') einsetzbar ist und durch eine Befestigungseinrichtung (F4) an der Ausgangsseite des hydrostatischen Verzweigungsgetriebes bzw. der gemeinsamen Baueinheit HVG befestigt ist (Fig. 3hi; 3hh; 3hj; 3hj' u.a.)

oder daß die gemeinsame Baueinheit bzw. das Verzweigungsgetriebe HVG bzw. mechanisches Verzweigungsgetriebe MVG über eine parallel zur Getriebe-Achse liegende Befestigungseinrichtung (1b) am Hauptgehäuse (1) des Getriebes befestigt wird (Fig. 3hg).

34. Stufenloses Getriebe mit oder ohne Leistungsverzweigung mit einem hydrostatischen oder mechanischen Wandler (4c; 4d) mit oder ohne Leistungsverzweigung, gegebenenfalls mit einem Summierungsplanetengetriebe zum Aufsummieren der aufgeteilten, über zwei oder mehrere Zweige fließenden Leistung mit oder ohne Schaltkupplungen zum Schalten von einem oder mehreren Schaltbereichen **dadurch gekennzeichnet,** daß der stufenlose Wandler (4c; 4d) und weitere Getriebe-Einheiten (Summierungsplanetengetriebe, Schaltkupplungen, Planetengetriebe-Einheiten) eine gemeinsame Baueinheit HVG; MVG bilden, wobei diese Getriebe-Einheit bzw. das Getriebe HVG; MVG in ein, insbesondere als selbsttragendes Gehäuse ausgebildetes Getriebegehäuse, z.B. eines Traktors, einbaubar ist, wobei die Getriebebefestigung (F5 und F6) an einem oder mehreren der Getriebegehäuse-Elemente erfolgt und eine Befestigungsstelle (F5II bis F5III) für die Lagefixierung und für die Aufnahme des Reaktionsmomentes des Getriebes HVG; MVG ausgebildet ist und die andere Befestigungsstelle (F6) nur einen Befestigungspunkt (Punkt I) aufweist (Fig.3hg und 3hg').

35. Getriebe nach Anspruch 34 **dadurch gekennzeichnet,** daß eine Art Dreipunktlagerung in bezug auf die jeweils äußeren Befestigungspunkte (Punkt I, II, III) für das Getriebe HVG; MVG gegeben ist (Fig.3hg und 3hg').

36. Getriebe nach Anspruch 34 **dadurch gekennzeichnet,** daß die Befestigungspunkte (F5II, F5III und F6I) am Hauptgetriebegehäuse (1) oder am Getriebedeckel (1a) angeordnet sind.

37. Getriebe nach einem der Oberbegriffe der Ansprüche **dadurch gekennzeichnet,** daß das stufenlose getriebe HVG; MVG eingangsseitig und ausgangsseitig jeweils über eine Lagereinrichtung (F7 bzw. F8) gelagert ist und das Reaktionsmoment des Getriebes HVG; MVG über eine oder mehrere Drehmomentstützen (4e') mit oder ohne zwischengelagerten elastischen Dämmelementen (4f') gegenüber dem Getriebegehäuse (1) abgestützt wird, wobei die eingangs- und ausgangsseitigen Lagerungen (F7, F8) koaxial zueinander angeordnet sind und diese Lagereinrichtung mit oder ohne zwischengelagerten für geräuschmindernden Elementen (F9') ausgerüstet sind.

38. Getriebe nach einem der Oberbegriffe der Ansprüche **dadurch gekennzeichnet,** daß eine Einrichtung vorgesehen ist, welche bewirkt, daß bei Vorwahl-Änderung von Vorwärts auf Rückwärts und umgekehrt während dem Umschaltvorgang eine automatische Winkel- ($\alpha$v; $\alpha$r) bzw. Verstellkorrektur des Hydrostat-Getriebes ausgelöst wobei die Verstellkorrektur-Größe (Z) in Abhängigkeit zu einer vor dem Umschaltvorgang sich eingestellten Korrektur-Größe (X bzw. Y) steht oder daß aus einem vor dem Umschaltvorgang eingestelltes Versteilvolumen (Valt) innerhalb dem Umschaltvorgang ein neues Verstellvolumen (Vneu) bestimmt wird

oder daß während dem Umschaltvorgang bei Vorwahländerung von Vorwärts auf Rückwärts und umgekehrt bei betätigtem Bremspedal (6) bzw. IFA-Pedal eine automatische Winkel- ($\alpha$v; $\alpha$r) bzw. Verstellkorrektur des Hydrostat-Getriebes ausgelöst wird, die so groß ist, daß nach erfolgtem Umschalt-Vorgang ein ausreichender Ausgleich des lastabhängigen Leckölschlupfes des Hydrostat-Getriebes gegeben ist ( Fig. 7ac).

39. Getriebe nach Anspruch 38 **dadurch gekennzeichnet,** daß die Wähleinrichtung (108; 2a; 8, Fig. 6a, 6b) eine Sperreinrichtung besitzt, welche den Wählhebel (1a, 2a) wenigstens in einer der Wählhebel-Stellungen („N" = neutral, „R" = rückwärts, „P" = Park, „D" = für vorwärts) arretiert und die Sperrfunktion erst bei Treten des Bremspedals aufhebt.

40. Getriebe nach einem der vorgenannten Ansprüche **dadurch gekennzeichnet,** daß die geräusch- und schwingungsmindernde Einrichtung (4e) so ausgebildet ist, daß in Ausnehmungen (4e') des Hydrostatgetriebes (4c) und des Gehäuses bzw. Trägerelementes (G) elastische Elemente (4h'; 4g) eingelagert sind, welche derart ausgebildet sind, daß bei Drehmoment-Belastung eine Axialkraft erzeugt wird, die an einem weiteren geräusch- und schwingungsminderndem Element (Reibring 4h) abgestützt wird, wobei vorzugsweise die elastischen Elemente als Gummi-Elemente in Kugelform (4f) oder in Kegelform (4g) ausgebildet sind (Fig.3hi).

**FIG. 1**

**FIG. 2**

**FIG. 2a**

FIG. 2b

Bereich

FIG. 2c

## FIG. 3

## FIG. 3.1

## FIG. 3a

## FIG. 3b

## FIG. 3c

## FIG. 3ca

FIG. 3d

Af. 1

FIG. 3da

Af. 1 α

FIG. 3e

Af. 2

FIG. 3f

Af. 3

FIG. 3g

Af. 4

FIG. 3h

Af. 5

**FIG. 3ha**

P11'  P12'  HE1  HE2  A1'  H3'  KR
4c'
K1
A  B
1c"  PT2'
2c'
E2'  E1'  PS1'  SA  K2  SR'
A2'  A'

**FIG. 3hb**

HE1  HE2  K1  H3'  KR
4c'
A  B
PT2'
2c'
2e
E2'  E1'  PS1'  S3'  K2
PR1'  2d
PTO
2c"  DIF

KR
**FIG. 3hb'**
2c'
PTO
AX
KE
TW  DIF

**FIG. 3hc**

**FIG. 3hd**

**FIG. 3he**

FIG. 3hf

FIG. 3hg

FIG. 3hg'

**FIG. 3hh**

Labels: 1, 1a, 4c, HVG, G, 1a', A', 1, F4, F3, 2e', A, B, 2d, 1c, PS1", K1, K2, K3, 2c", D/F

**FIG. 3hi**

Labels: 1a, 4h, 4c, 4e, 4f, HVG, G, 5c, 1a', A', 3a, F4, 1, 1a", 2d', 2e, A, B, 5e, 5d, 1c, 2d, a', 4c", 4e', 4h', 4g, 2c"

FIG. 3hi'

FIG. 3hj

FIG. 3hj'

**FIG. 3hk**

**FIG. 3hl**

**FIG. 3hm**

**FIG. 3hn**

**FIG. 3ho**

**FIG. 3hp**

**FIG. 3hq**

4c  G  HVG  1e  F4  2c'"  1A

1c

A  B

5c  A"  F3'

DIF

**FIG. 3hr**

dB  5d  MVG  F4  2'"  1A

4d

4dB

1c

F1

4dA

dA  2"  F3

DIF

**FIG. 3i**

**FIG. 3j**

**FIG. 3k**

**FIG. 3l**

**FIG. 3m**

**FIG. 3n**

## FIG. 4

**FIG. 4a**

**FIG. 4b**

**FIG. 4c**

**FIG. 4d**

**FIG. 4e**

# FIG. 4f

**FIG. 4g**

**FIG. 4i**

**FIG. 4k**

**FIG. 4l**

**FIG. 4m**

**FIG. 4n**

**FIG. 4o**

**FIG: 4p**

**FIG: 4q**

## FIG. 5

## FIG. 6

## FIG. 6a

3a — E S — 1a

P R N D

## FIG. 6b

2a; 8; 108

3a — E S

P R N D L

5a

## FIG. 6c

4a

E S — 3a

## FIG. 6d

1/i

Xa

2.0

1.5

6a

1 ya

OVERDRIVE

0.5

9a

0

t s → Z'

## FIG. 6e

$\dfrac{V}{V_{max\,th}}$

1/i

1

xa

2.0

0.5

1.5

6a

0.5 1 ya

0.5 7a

0 0

t s → Z'

## FIG. 6f

## FIG. 6g

## FIG. 6h

## FIG. 6i

## FIG. 6k

FIG. 6l

FIG. 6m

**FIG. 7ac**

**FIG. 7b**

**FIG. 7c**

**FIG. 8**

## FIG. 8a

## FIG. 8ab

**FIG. 8ac**

**FIG. 8e**